# EUROPEAN PATENT APPLICATION

(11) **EP 4 294 089 A1**
(43) Date of publication of application: **20.12.2023**
(21) Application number: 23179764.8
(22) Date of filing: 16.06.2023
(51) Int. Cl.: H04W 52/02

(54) **RANDOM ACCESS CONTROL IN RESTRICTED TARGET WAKE TIME**

(30) Priority: 16.06.2022 US 202263352659 P
(71) Applicant: Comcast Cable Communications LLC, Philadelphia, Pennsylvania 19103 (US)
(72) Inventor: KIM, Jeongki, Philadelphia, PA 19103 (US); RYU, Kiseon, Philadelphia, PA 19103 (US); DINAN, Esmael Hejazi, Philadelphia, PA 19103 (US)
(74) Representative: V.O.

(57) **Abstract**

A station may be scheduled for a trigger-enabled restricted target wake time service period (TE r-TWT SP). Contention-based channel access may be enabled for the station during TE r-TWT SP based on the station not receiving a first frame during a first time period of the TE r-TWT SP. The enabled contention-based access may be suspended and/or maintained based on receipt of one or more frames by the station.

## Description

### CROSS-REFERENCE TO RELATED APPLICATIONS

This application claims the benefit of U.S. Provisional Application No. 63/352,659, filed on June 16, 2023. The above referenced application is hereby incorporated by reference in its entirety.

### BACKGROUND

Restricted target wake time provides protected access of a wireless medium. In a trigger-enabled restricted wake time, a communication device accesses the wireless medium when triggered.

### SUMMARY

The following summary presents a simplified summary of certain features. The summary is not an extensive overview and is not intended to identify key or critical elements.

A computing device, such as a station, may communicate with one or more other devices using contention-based channel access. Contention-based channel access may be controlled for a station scheduled for a trigger-enabled target wake time service period. The station may be able to use contention-based channel access during the trigger-enabled target wake time service period based on a determination that a frame, such as a trigger frame, has not been received during a certain time period. The station's use of the contention-based channel access may be controlled (e.g., maintained and/or suspended) based on receipt of one or more frames. The receipt of the one or more frames may cause the maintenance and/or suspension of the contention-based channel access. Additionally or alternatively, the one or more frames may comprise information indicating maintenance and/or suspension of the contention-based channel access. Controlling contention-based channel access during the trigger-enabled target wake time service period may reduce and/or avoid contention and/or collision during the trigger-enabled target wake time service period.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A and FIG. 1B show example communication networks.
FIG. 2 shows example devices in a communication network.
FIG. 3 shows an example target wait time (TWT) operation.
FIG. 4 shows an example TWT operation between multi-link devices (MLDs).
FIG. 5 shows an example TWT element for supporting individual TWT operation.
FIG. 6 shows an example TWT element for supporting restricted TWT operation.
FIG. 7 shows an example of individual TWT operation.
FIG. 8 shows an example of broadcast TWT operation.
FIG. 9 shows an example of TWT protection in individual TWT operation.
FIG. 10 shows an example of restricted TWT operation.
FIG. 11 shows an example in which a restricted TWT (r-TWT) service period (SP) is not used.
FIG. 12 shows an example in which an r-TWT SP is not used.
FIG. 13 shows an example in which an r-TWT SP is not used.
FIG. 14 shows an example of r-TWT SP termination.
FIG. 15 shows an example of r-TWT operation.
FIG. 16 shows examples of determining a length of a first time period and/or a length of a second time period.
FIG. 17 shows an example of r-TWT operation.
FIG. 18 shows an example of r-TWT operation.
FIG. 19 shows an example of trigger-enabled (TE) r-TWT operation.
FIG. 20 shows an example of TE r-TWT operation.
FIG. 21 shows an example of TE r-TWT operation.
FIG. 22 shows an example of TE r-TWT operation.
FIG. 23 shows an example of controlling contention-based channel access in TE r-TWT operation.
FIG. 24 shows an example of controlling contention-based channel access in TE r-TWT operation.
FIG. 25 shows an example controlling contention-based channel access in TE r-TWT operation.
FIG. 26 shows an example format of a BlockAck frame.
FIG. 27 shows an example format of a BlockAck frame.
FIG. 28 shows an example format of a multi-STA BlockAck frame.
FIG. 29 shows an example format of a multi-STA BlockAck frame.
FIG. 30 shows an example format of a multi-STA BlockAck frame.
FIG. 31 shows an example format of a multi-STA BlockAck frame.
FIG. 32 shows an example of controlling contention-based channel access.
FIG. 33 shows an example of controlling contention-based channel access.
FIG. 34 shows an example of controlling contention-based channel access.
FIG. 35 shows an example of controlling contention-based channel access.
FIG. 36 shows an example of controlling contention-based channel access.
FIG. 37 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to power saving procedures for wireless communications, including, but not limited to, Wi-Fi communications.

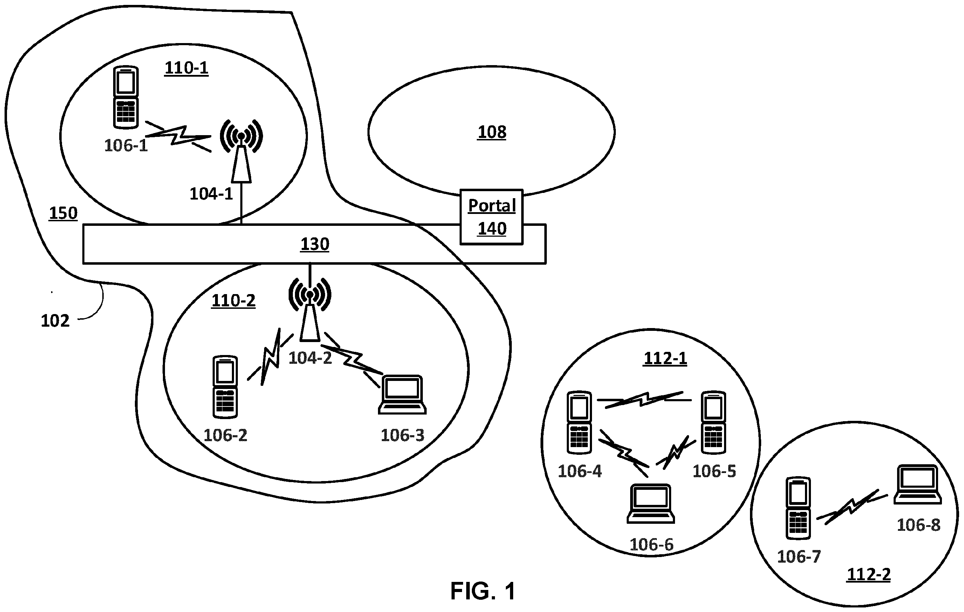

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 1-6-8) may or may not be permitted to access the DS 130 to constitute a self-contained network.

A STA may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

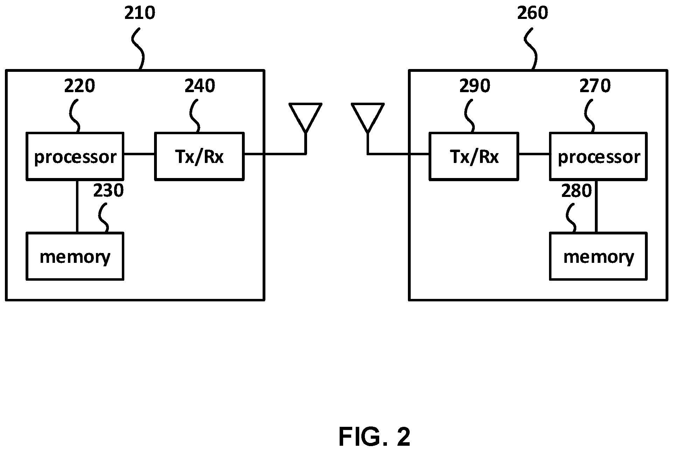

FIG. 2 shows example devices in a communication network. The communication network 200 of FIG. 2 may comprise multiple devices (e.g., communication devices 210 and 260). The communication devices 210 and 260 may perform various functions and procedures as described herein.

For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.1 The standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

Target wake times (TWTs) may allow STAs to manage activity in a communication network (e.g., a BSS). For example, the TWTs may enable scheduling of STAs to operate at different times to reduce contention. TWTs may allow STAs to reduce the required amount of time that a STA (e.g., utilizing a power management mode) may be awake and reduce power consumption. TWTs may be individual TWTs or broadcast TWTs. A STA that requests a TWT agreement may be referred as a TWT requesting STA. The TWT requesting STA may be a non-AP STA, for example The STA that responds to the request may be referred as a TWT responding STA. A TWT responding STA may be an AP. A TWT requesting STA may be assigned one or more specific time periods to wake up and exchange frames with the TWT responding STA. A TWT requesting STA may communicate wake scheduling information to a TWT responding STA. The TWT responding STA may send TWT values to the TWT requesting STA, for example, if a TWT agreement has been established between them. The TWT values may be used by the TWT requesting STA to determine a time for waking up and performing a frame exchange.

A TWT requesting STA may operate in an explicit TWT mode and/or an implicit TWT mode. The TWT requesting STA may receive a next TWT information from the TWT responding STA. A TWT requesting STA may wake up (e.g., at a time determined based on the next TWT information) and perform a frame exchange, for example, if explicit TWT is used. The TWT requesting STA may determine and/or calculate a next TWT (e.g., for performing a frame exchange) by adding a fixed value to a current TWT value, for example, if implicit TWT is used.

TWT values for an implicit TWT may be periodic. A TWT requesting STA using an implicit TWT agreement may determine a next TWT service period (TWT SP) start time by adding a value of TWT wake interval associated with the TWT agreement to a value of a start time of the current TWT SP. The TWT responding STA may indicate the start time for a series of TWT SPs corresponding to a single TWT flow indicator/identifier of an implicit TWT agreement. The TWT responding STA may indicate the start time in a target wake time field of a TWT element. The TWT element may indicate acceptance of the TWT in a TWT setup command field. The start time of the TWT SP series may indicate the beginning time of a first TWT SP in the TWT SP series. Start times for subsequent TWT SPs may be determined by adding the value of TWT wake interval to the current TWT SP start time. A TWT requesting STA that is awake for an implicit TWT SP may transition to a doze state, for example, after the TWT SP has elapsed and/or after receiving an end of service period (EOSP) indication (e.g., an ESOP field equal to 1) from the TWT responding STA, whichever occurs first.

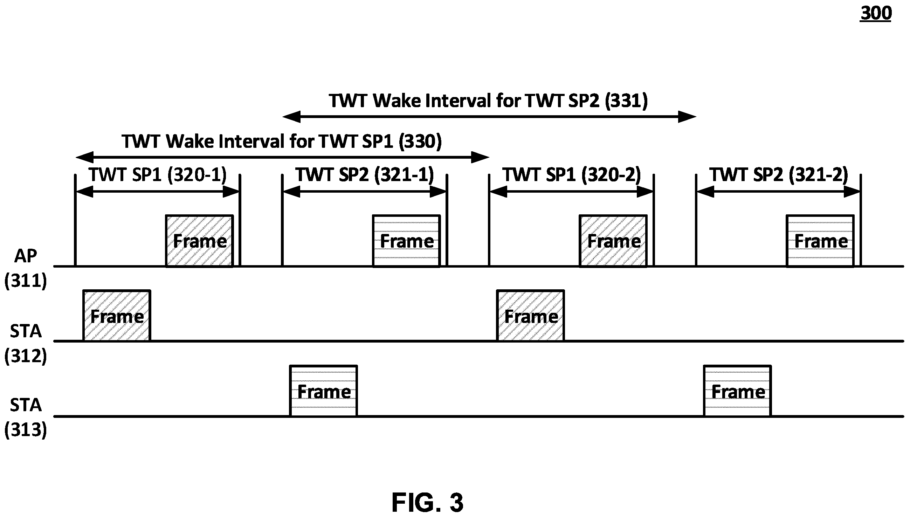

FIG. 3 shows an example TWT operation. A TWT session, for the TWT operation 300, may be negotiated between an AP (e.g., AP 311) and a STA (e.g., STA1 312 or STA2 313). This may configure a TWT SP for DL and UL between the AP and the STA. Any traffic between the AP and the STA may be limited within the negotiated SP. A TWT SP may start at a specific time. The TWT SP may run/continue for the SP duration. The TWT SP may repeat (e.g., every SP interval). For example, the AP 311 and the STA1 312 may establish a TWT SP1 320. The AP 311 and a STA2 313 may establish a TWT SP2 321. The AP 311 and the STA1 312 may exchange frames within/during the TWT SP1 320-1. The STA1 311 may be in doze state until a next TWT SP1 320-2, for example, after the end of the TWT SP1 320-1. An interval/duration between the TWT SP1 320-1 and the TWT SP2 320-2 may correspond to a TWT wake interval for TWT SP1 330. The AP 311 and the STA1 312 may exchange frames within/during the second TWT SP2 320-2, for example, based on the start of the TWT SP2 320-2. The AP 311 and the STA2 313 may exchange frames during the TWT SP2 321-1. The STA2 312 may be in doze state until the next TWT SP2 321-2, for example, after the end of the TWT SP1 321-1. The duration between the TWT SP1 321-1 and the TWT SP2 321-2 may correspond to a TWT wake interval for TWT SP2 331. The AP 311 and the STA2 313 may exchange frames within/during the second TWT SP2 321-2, for example, based on the start of TWT SP2 321-2.

A STA may be in an awake state within/during a TWT SP. The STA may be fully powered if the STA is in an awake state. The STA, in an awake state, may send and/or receive messages (e.g., a frame) to/from an AP and/or other STAs. A STA, in a doze state, may not send or receive messages (e.g., a frame) to/from an AP and/or other STAs.

A MLD may be a device that is a logical entity and has more than one affiliated station (STA). The MLD may have a single MAC service access point (MAC-SAP) to the LLC layer. The logical link control may include one MAC data service. An access point multi-link device (AP MLD) may be an MLD in which a STA affiliated with the MLD is an AP STA (or an AP). A non-access point multi-link device (non-AP MLD) may be an MLD in which a STA affiliated with the MLD is a non-AP STA (or a STA). An AP may comprise one or more computing devices.

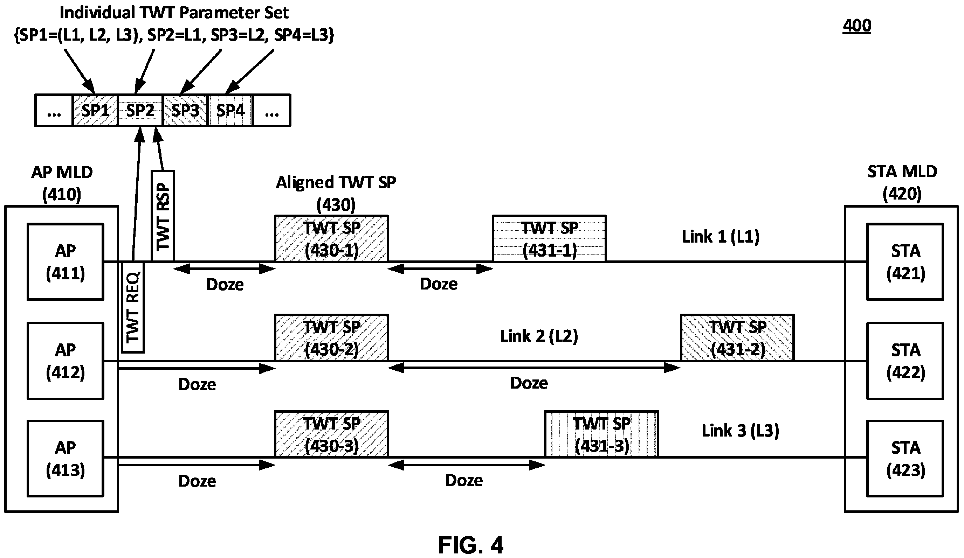

FIG. 4 shows an example TWT operation between multi-link devices. The example TWT operation 400 as shown in FIG. 4 may be between an AP multi-link device (AP MLD) 410 and one or more STA multi-link device (STA MLD) 420. A TWT requesting STA affiliated with STA MLD (e.g., STA MLD 420) and a TWT responding STA affiliated with AP MLD (e.g., AP MLD 410) may negotiate TWT agreements. Messages used for negotiating TWT agreements may comprise one or more TWT elements. The one or more TWT elements may be in a TWT parameter set 415. The TWT elements may comprise link indicator/identifier (ID) bitmap subfields indicating different link(s) in a same TWT setup frame. TWT parameters provided by a TWT element (e.g., in the TWT parameter set 415) may be applied to the respective link (e.g., link 1 L1, link 2 L2, link 3 L3) that is indicated in the TWT element. For example, the AP MLD 410 may have three affiliated APs: AP1 411 operating on a first link/band (e.g., 2.4 GHz band), AP2 412 operating on a second link/band (e.g., 5 GHz band), and AP3 413 operating on a third link/band (e.g., 6 GHz band). For example, STAs affiliated with STA MLD 420 may be respectively associated with APs affiliated with AP MLD 410. STA 1 421 may be associated with AP 1 411 operating on the first link, STA 1 422 may be associated with AP 1 412 operating on the second link, STA 1 423 may be associated with AP 1 413 operating on the third link. STA1 421 affiliated with the STA MLD 420, may send three TWT elements in a TWT request (e.g., TWT REQ) to AP1 411 affiliated with the AP MLD 410. The three TWT elements may indicate the links of AP1 411, AP2 412, and AP3 413. The three TWT elements may request three links to be setup as part of TWT agreements. The three TWT elements may have different TWT parameters (e.g., TWTs).

The AP1411 may send three TWT elements in a TWT response (e.g., TWT RESP) to the STA1 421. The AP 411 may send the TWT response, for example, based on/after receiving the TWT request. The three TWT elements in the TWT response. may indicate links of AP1 411, AP2 412, and AP3 413 respectively. The three TWT elements may comprise a value indicating acceptance of TWT in a TWT setup command field. Three TWT SPs with different TWT parameters may exist on the three links (e.g., link 1 between AP1 411 and STA1 421, link 2 between AP2 412 and STA2 422, and link 3 between AP3 413 and STA3 423), respectively, for example, based on (e.g., after) setup of successful TWT agreements on the three links. The TWT field of a TWT element that indicates link 1 may be in reference to the time synchronization function (TSF) time of link 1. The TWT field of the TWT element that indicates link 2 may be in reference to the TSF time of link 2. The TWT field of the TWT element that link 3 may be in reference to the TSF time of link 3. TWT SPs for each of the links may or may not be aligned. With reference to the example shown in FIG. 4, the TWTs of the STA1 421 to the AP1 411, the STA2 422 to the AP2 412, and the STA3 423 to the AP3 413 may be aligned. For example, the first TWT SPs (e.g., TWT SP1 430-1, TWT SP1 430-2, and TWT SP1 430-3) may be aligned. The TWT wake intervals may be set differently for each of the links. For example, the second TWT SPs (e.g., TWT SP2 431, TWT SP3 432, and TWT SP4 433) may not be aligned. The STA1 421, the STA2 422, and the STA3 423 may be in doze state during the TWT wake intervals until the second TWT SPs (e.g., TWT SP2 431, TWT SP3 432, and TWT SP4 433) start, respectively. While FIG. 4 corresponds to an example where the AP MLD 410 and STA MLD 420 comprise three affiliated APs and three affiliated STAs, respectively, the AP MLD 410 and STA MLD 420 may have different quantities of affiliated APs and affiliated STAs, respectively.

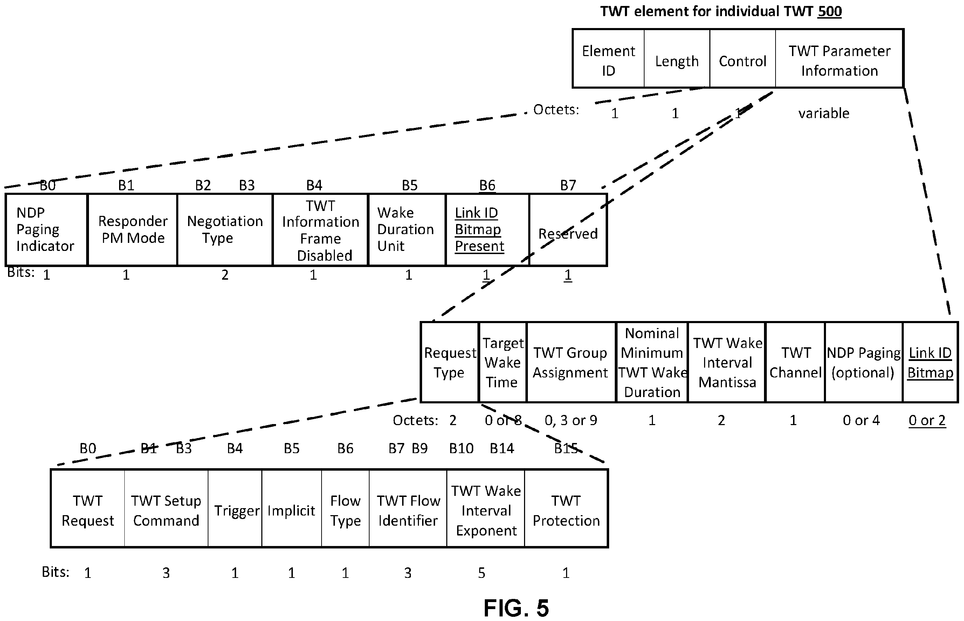

FIG. 5 shows an example TWT element 500 for supporting individual TWT operation. An AP and a STA may negotiate a TWT using a TWT element 500 to enable TWT scheduling. The TWT element 500 may provide the necessary signaling between devices to schedule one or more TWTs. The TWT element 500 may indicate TWT element parameters. An AP and/or a STA may send the TWT element 500, in an individually addressed management frame, when the TWTs are negotiated between the AP and the STA during a TWT setup phase. The management frame may be associated with a type (e.g., action, action with no acknowledgement, (re)association request and/or response, probe request and/or response). The TWT element 500 may be included in a TWT request and/or a TWT response.

The STA requesting TWT scheduling may be referred to as a TWT requesting STA. The AP responding to the request may be referred to as a TWT responding STA. TWT schedule and parameters may be provided during the TWT setup phase. Renegotiation and/or changes of TWT schedules may be indicated and/or signaled via individually addressed frames that contain updated TWT parameters. The frames may be management frames (e.g., as described herein), control frames, and/or data frames that comprise one or more fields indicating updated TWT schedules and the updated TWT parameters. One or more STAs may negotiate a TWT schedule. For example, a first STA negotiating the schedule may be the TWT requesting STA. A second STA negotiating the schedule may be the TWT responding STA.

An element indicator/identifier (ID) (e.g., 1 octet in length, or any other length) may indicate that an information element, containing the element ID, is a TWT element. A length field (e.g., 1 octet in length, or any other length) may indicate the length of the TWT element 500 (e.g., starting from the control field until the end of the TWT element). The end of the TWT element may be an end of a TWT channel field or an end of a link ID bitmap field. The TWT element 500 may comprise one or more of a TWT field (e.g., 8 octets or less, or any other length), a TWT group assignment field (e.g., 9, 3, 2, or 0 octets, or any other length), a nominal minimal TWT wake duration field (e.g., 1 octet, or any other length), a TWT wake interval mantissa field (e.g., 2 octets, or any other length), a TWT channel field (e.g., 1 octet, or any other length), a null data packet (NDP) paging field (e.g., 0 octets, 4 octets, or any other length) and/or a link ID bitmap field (e.g., 0 octets, 2 octets, or any other length). The length field may indicate a length of a TWT element that comprises one or more groups of the above fields (e.g., groups of the fields comprising at least one of a control field, a request type field, the TWT group assignment field, the nominal minimum wake duration field, TWT wake interval mantissa field, the TWT channel field, the NDP paging field, and/or the link ID bitmap field as shown in the TWT element 500). The TWT element 500 may indicate and/or comprise TWT parameters for one or more TWT negotiations. A TWT negotiation indicated by the TWT element may be identified by a unique TWT flow indicator and/or identifier.

A request type field (e.g., 2 octets, or any other length) may indicate a type of TWT request. The request type field may comprise one or more fields and/or subfields. The one or more fields may comprise a TWT request field (e.g., 1 bit, or any other quantity of bits), a TWT setup command field (e.g., 3 bits, or any other quantity of bits), a trigger field (e.g., 1 bit, or any other quantity of bits), an implicit field (e.g., 1 bit, or any other quantity of bits), a flow type field (e.g., 1 bit, or any other quantity of bits), a TWT flow identifier field (e.g., 3 bits, or any other quantity of bits), a wake interval exponent field (e.g., 5 bits, or any other quantity of bits), and/or a TWT protection field (e.g., 1 bit, or any other quantity of bits).

The TWT request field may indicate whether the TWT element 500 represents a request. The TWT element 500 may be a request to initiate TWT scheduling/setup, for example, if TWT request field indicates a first value (e.g., 1, or any other value).

The TWT setup command field may indicate a type of a TWT command that is associated with a TWT request or a TWT response. The types of TWT commands, for a TWT request, may comprise: a request TWT command (e.g., the TWT field, in the request TWT command, may comprise zeros because the TWT responding STA may specify the TWT value), a suggest TWT command (e.g., the TWT requesting STA may suggest/indicate, via the suggest TWT command, a TWT value), and a demand TWT command (e.g., the TWT requesting STA may demand/request, via the demand TWT command, a TWT value). The TWT field comprising a first value (e.g., 0) may indicate that the TWT command is a request TWT command. The TWT field comprising a second value (e.g., 1) may indicate that the TWT command is a suggest TWT command. The TWT field comprising a third value (e.g., 2) may indicate that the TWT command is a demand TWT command.

The types of TWT commands, for a TWT response, may comprise: a TWT grouping command (e.g., the TWT responding STA may suggest/indicate, in the TWT grouping command, TWT group parameters that are different from the suggested or demanded TWT parameters of the TWT requesting STA), an accept TWT command (e.g., the TWT responding STA may accept the TWT request with the TWT parameters indicated in the accept TWT command), an alternate TWT command (e.g., the TWT responding STA may suggest, in the alternate TWT command, TWT parameters that are different from the parameters suggested or demanded by the TWT requesting STA), a dictate TWT command (e.g., the TWT responding STA may demand, via the dictate TWT command, TWT parameters that are different from the parameters suggested or demanded by the TWT requesting STA), and/or a reject TWT command (e.g., the TWT responding STA may reject, using the reject TWT command, the TWT setup). The TWT field comprising a fourth value (e.g., 3) may indicate that the TWT command is a TWT grouping command. The TWT field comprising a fifth value (e.g., 4) may indicate that the TWT command is an accept TWT command. The TWT field comprising a sixth value (e.g., 5) may indicate that the TWT command is an alternate TWT command. The TWT field comprising a seventh value (e.g., 6) may indicate that the TWT command is a dictate TWT command. The TWT field comprising an eighth value (e.g., 7) may indicate that the TWT command is a reject TWT command.

The TWT command, associated with a TWT response, may indicate that the TWT response is: an unsolicited TWT response (e.g., the TWT responding STA may demand a recipient should follow the TWT schedule contained in the element), associated with a broadcast TWT (e.g., the TWT responding STA may schedule the TWT for any STA that is receives/reads the element), etc. The TWT element 500, for an unsolicited TWT response, may include a value indicating a dictate TWT command in the TWT setup command field. The TWT request field, for the unsolicited response, may be set to a specific value (e.g., 0, or any other value). The unsolicited TWT response may be an individually addressed frame that is intended for a specific STA. A broadcast TWT may be for multiple STAs and may be carried in a broadcast frame (e.g., a beacon).The unsolicited TWT response may typically involve a frame exchange in which the STA receiving the unsolicited TWT response may respond with an acknowledgment (ACK). Broadcast TWTs may or may not be acknowledged.

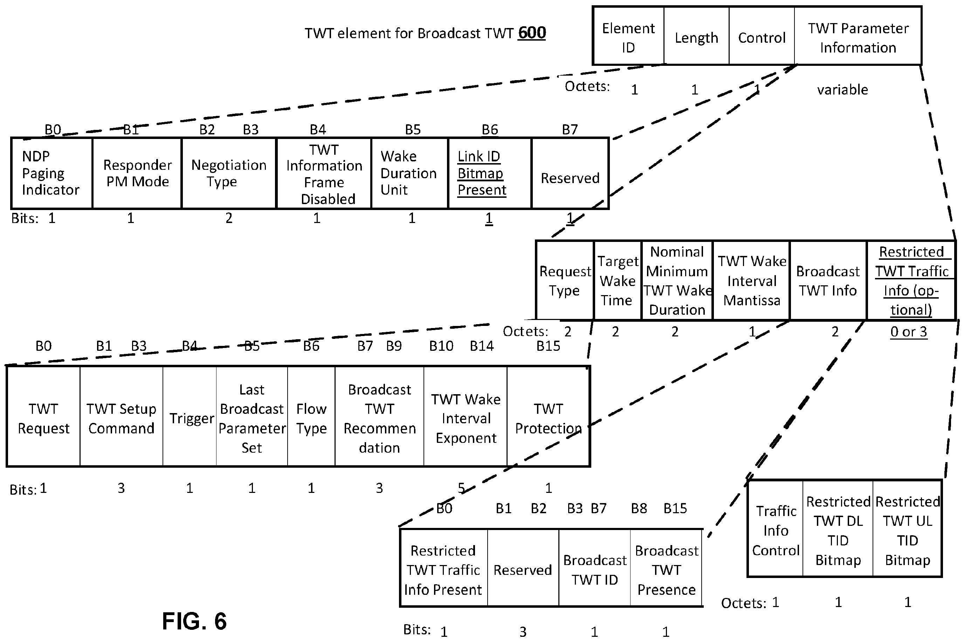

FIG. 6 shows an example TWT element for supporting restricted TWT operation. The TWT element 600 shown in FIG. 6 may comprise a plurality of fields. An element indicator/ID (e.g., 1 octet in length, or any other length) may indicate that an information element is a TWT element. A length field (e.g., 1 octet, or any other length) may indicate a length of the TWT element 600 starting from the control field until the end of the TWT element (e.g., the end of the broadcast TWT information field or the end of the restricted TWT traffic information field). The TWT element 600, for a restricted TWT, may be send/sent in a broadcast management frame (e.g., a beacon frame, a traffic indication map (TIM) broadcast frame, and/or a probe response frame, etc.). The TWT element 600 may provide non-negotiated schedules (e.g., broadcast TWT schedules). The TWT element 600 may be/represent a solicited TWT message (e.g., a response to a request to initiate TWT scheduling/setup), an unsolicited TWT message, and/or a broadcast TWT message, for example, if the TWT request field indicates a first value (e.g., 0, or any other value). The TWT element 600 may comprise one or more of a TWT field (e.g., 2 octets, or any other length), a nominal minimal wake duration field (e.g., 1 octet, or any other length), a TWT wake interval mantissa (e.g., 2 octets, or any other length), a broadcast TWT information field (e.g., 2 octets or any other length), and/or a restricted TWT traffic information field (e.g., 0 or 3 octets, or any other length).

A TWT wake interval, indicated by a TWT element that is sent by a TWT responding STA or a TWT scheduling AP, may be equal to the average time that a STA expects to elapse between successive TWT SPs start times. A TWT wake interval exponent subfield may be set to indicate a value of the exponent of the TWT wake interval value (e.g., in microseconds). The base used for the exponent may be equal to 2 (or any other value). A TWT wake interval mantissa subfield may be set to the value of the mantissa of the TWT wake interval value (e.g., in microseconds). The TWT wake interval of the requesting STA may be equal to (TWT wake interval mantissa) × 2^{(TWT Wake Interval Exponent)}, for example, if a base of 2 is used. The nominal minimum TWT wake duration field may indicate the minimum duration of time (e.g., in units indicated by the wake duration unit subfield), that the TWT requesting STA or the TWT scheduled STA is expected to be awake to complete frame exchanges for the period of TWT wake interval. The TWT wake interval may be the average time that the TWT requesting STA or the TWT scheduled STA expects to elapse between successive TWT SPs. base 2. A flow type field in the TWT response that successfully set up a TWT agreement may indicate a type of interaction between the TWT requesting STA and the TWT responding STA within a TWT SP for that TWT agreement. The flow type field equal to 0 (or any other first value) may indicate an announced TWT. The TWT responding STA of an announced TWT agreement may not send a frame to the TWT requesting STA within a TWT SP until it has received a frame (e.g., a power save poll (PS-Poll) frame or a quality of service (QoS) null frame) from the TWT requesting STA. The flow type field equal to 1 (or any other second value) may indicate an unannounced TWT. The TWT responding STA of an unannounced TWT agreement may send a frame to the TWT requesting STA within a TWT SP before it has received a frame from the TWT requesting STA.

A TWT responding STA or a TWT scheduling AP may set a TWT protection subfield to 1 (or any other value) to indicate that the TWT SP(s) corresponding to the TWT flow identifier(s) of the TWT element may be protected. The protection may be by allocating restricted access window(s) (RAW(s)) that restrict access to the medium during the TWT SP(s) for the TWTs that are set up within a BSS (e.g., a sub-1 GHz (S1G) BSS). The protection may be by enabling network allocation vector (NAV) protection during the TWT SP(s) for the TWTs that are set up within a BSS (e.g., a high efficiency (HE) BSS).

A broadcast TWT element 600 that comprises restricted TWT parameter set field(s) is also referred to as a restricted TWT element. A restricted TWT traffic information present subfield may be set to a first value (e.g., 1, or any other value) to indicate that the restricted TWT traffic information field is present. The restricted TWT traffic information field may be present in a restricted TWT parameter set field, for example, if/when the restricted TWT traffic information present subfield of the request type field is set to the first value (e.g., 1, or any other value). A DL TID bitmap valid subfield may indicate whether a restricted TWT DL TID bitmap field has valid information. The DL TID bitmap valid subfield being set to a defined value (e.g., 0, or any other value) may indicate that DL traffic of TIDs is identified as latency sensitive traffic, and the restricted TWT DL TID bitmap field is reserved. The UL TID bitmap valid subfield may indicate whether a restricted TWT UL TID bitmap field has valid information. The UL TID bitmap valid subfield being set to a defined value (e.g., 0, or any other value) may indicate that UL traffic of TIDs is identified as latency sensitive traffic, and the restricted TWT UL TID bitmap field is reserved. The restricted TWT DL TID bitmap subfield and the restricted TWT UL TID bitmap subfield may specify the TID(s) that are identified (e.g., by the TWT scheduling AP or the TWT scheduled STA) as latency sensitive traffic streams in downlink and uplink direction, respectively. A first value (e.g., 1, or any other value) at bit position k in the bitmap may indicate that TID k is classified as latency sensitive traffic stream. A second value (e.g., 0, or any other value) at bit position k in the bitmap may indicate that TID k is not classified as latency sensitive traffic stream.

An individual TWT may be a specific time or set of times negotiated between two individual stations (e.g., two STAs, or a STA and an AP, etc.) at which the stations may be awake to exchange frames during the negotiated TWT SP. A TWT requesting STA may be a STA that requests a TWT agreement. A TWT responding STA may be a STA that respond to a TWT request. A TWT request may comprise a TWT requesting STA sending a frame to initiate a TWT agreement.

A TWT may be a trigger-enabled TWT, a non-trigger-enabled TWT, an announced TWT, or an unannounced TWT. In trigger-enabled TWT, an AP may send a trigger frame for scheduling uplink multi-user transmissions from one or more STAs The uplink multi-user transmissions may use/be based on uplink OFDMA and/or uplink MU-MIMO during a trigger-enabled TWT SP. A TWT STA that receives the trigger frame may send a frame during the trigger-enabled TWT SP, to the AP, via/using the resource indicated in the trigger frame. In non-trigger-enabled TWT, an AP may not be required to send a trigger frame to schedule uplink multi-user transmissions from one or more STAs during a non-trigger-enabled TWT SP.

In announced TWT, a STA may send a frame (e.g., a PS-Poll frame or a QoS null frame) to the AP to retrieve downlink buffered data from the AP during a TWT SP. In unannounced TWT, an AP may send downlink data, to an TWT STA, without receiving a frame (e.g., a PS-Poll frame, or a QoS null frame) from the TWT STA during a TWT SP.

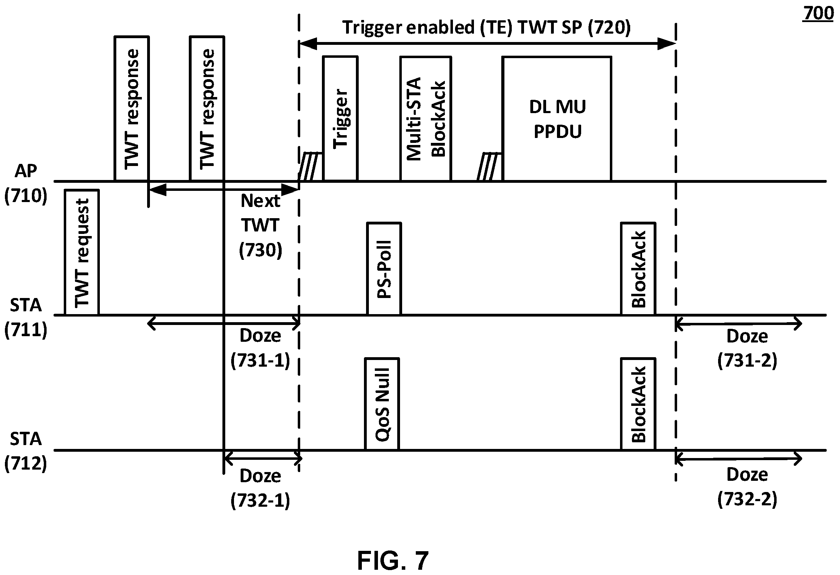

FIG. 7 shows an example of individual TWT operation. In the individual TWT operation 700, an AP 710 may be a TWT responding STA and a STA1 711 and a STA2 712 may be TWT requesting STAs. The STA1 711 may send a TWT request to the AP 710 to setup a TWT agreement (e.g., a trigger-enabled TWT agreement). The AP 710 may accept the TWT agreement with the STA1 711. The AP 710 may confirm the acceptance in/via the TWT response sent to the STA1 711. The AP 710 may send an unsolicited TWT response to the STA2 712 to set up a TWT agreement (e.g., a trigger-enabled TWT agreement) with the STA2 712. The AP 710 may send the unsolicited TWT response to the STA2 712 without receiving a TWT request from the STA2 712. TWT agreements may be set up as announced TWTs. The TWT request and/or the TWT response may comprise the TWT element 500 as shown in FIG. 5.

The STA1 711 and the STA2 712 may be in a doze state 731-1, 732-1 (e.g., after the TWT agreement setup) until a next TWT 730 as indicated in the received TWT responses. The next TWT 730 may indicate a time at which the STA1 711 and the STA2 712 may transition to an awake state. The next TWT 730 may be a time period between a TWT response and a time at which a trigger-enabled TWT SP 720 may start.

The AP 710 may send a trigger frame, for example, during a trigger-enabled TWT SP 720. The trigger-enabled TWT SP 720 may begin at the next TWT 730 as indicated in the received TWT responses. The STA1 711 and the STA2 712 may indicate (e.g., responsive to the trigger frame) that the STA1 711 and the STA2 712 are awake during the TWT SP 720. The STA1 711 may indicate that the STA1 711 is awake by sending a frame (e.g., a PS-Poll) frame. The PS-Poll frame may comprise a BSSID (e.g., a receiver address (RA)) field set to an address of an AP and a transmitter address (TA) field set to an address of the STA sending the frame. The STA2 712 may indicate that it is awake by sending a QoS null frame, for example, based on/in response to the trigger frame. The QoS null frame may comprise a MAC header (e.g., comprising one or more of a frame control field, a duration field, address fields, a sequence control field, and/or a QoS control field) and not comprise a frame body. The AP 710 may send a multi-STA block acknowledgment (M-BA) frame, for example, based on/in response to the PS-Poll frame and/or the QoS null frame. The M-BA frame may include acknowledgement information associated with one or more frames (e.g., PS-Poll frame and QoS null frame) received from one or more STAs. The STA1 711 and/or the STA2 712 may receive downlink bufferable units (DL BUs) from the AP 710. The DL BUs may correspond to one or more downlink MU PPDUs. A bufferable unit (BU) may be a MAC service data unit (MSDU), an aggregate MAC service data unit (A-MSDU), or a bufferable MAC management protocol data unit (MMPDU). The STA1 711 and/or the STA2 712 may send block acknowledgement (BlockAck) frames, for example, based on receiving the DL BUs. The STA1 711 and the STA2 712 may enter a doze state 731-2, 732-2 outside of the TWT SPs, respectively.

A STA may execute individual TWT setup exchanges. The STA may not send frames to an AP outside of negotiated TWT SPs. The STA may not send frames that are not contained within high efficiency trigger-based PPDUs (HE TB PPDUs) to the AP within trigger-enabled TWT SPs. The STA may send, to the AP, frames that are contained within HE TB PPDUs within trigger-enabled TWT SPs. The HE TB PPDU may be sent by a STA based on receiving of a trigger frame triggering uplink multi-user transmission. The AP of a trigger-enabled TWT agreement may schedule for transmission of a trigger frame for the STA within the trigger-enabled TWT SP. A STA may send an HE TB PPDU, for example, based on/in response to a trigger frame sent during the trigger-enabled TWT SP. A STA that is in power save (PS) mode may include a frame (e.g., PS-Poll frame or a QoS null frame) in the HE TB PPDU if the TWT is an announced TWT. The frame may indicate, to the AP, that the STA is currently in the awake state. The AP receiving the frame (e.g., the PS-Poll frame or the QoS Null frame or any other indication from a STA in PS mode), may send data (e.g., BUs) to the STA. The AP may send as many buffered BUs as may be available at the AP during the TWT SP.

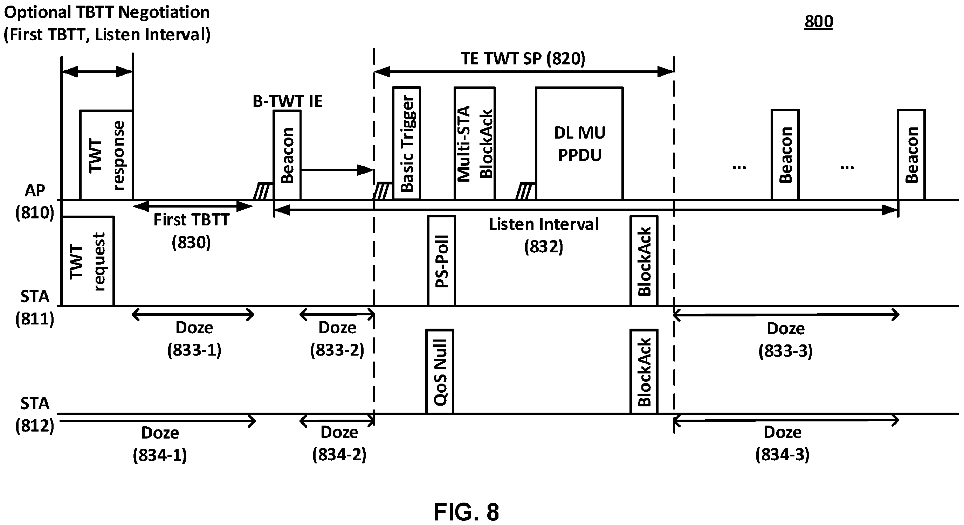

FIG. 8 shows an example of broadcast TWT operation. A broadcast TWT may be a specific time or a set of times at which one or more STAs may be awake to exchange frames with the AP (e.g., during a broadcast TWT SP). The broadcast TWT may be indicated and/or broadcasted by the AP to the one or more STAs.

An AP 810 and one or more STAs 811, 812 may operate as per the broadcast TWT operation 800. The AP 810 may be a TWT scheduling AP, and the STA1 811 and/or the STA2 812 may be TWT scheduled STAs. The AP 810 may send and/or broadcast a beacon frame (e.g., to the one or more STAs 811, 812). The AP 810 may send and/or include a broadcast TWT element (e.g., a broadcast TWT information element (IE)) in the beacon frame. The broadcast TWT element may be the TWT element 600 as shown in FIG. 6. The broadcast TWT element may indicate a broadcast TWT SP. The broadcast TWT element may comprise an indication of time 831 at which the broadcast TWT SP may start. The broadcast TWT SP may be a trigger-enabled TWT SP 820. The AP 810 may send one or more trigger frames and/or one or more DL BUs to the STA1 811 and the STA2 812, for example, during the broadcast TWT SP. Beacon frames may be sent by the AP 810 at regular intervals, for example. The regular intervals may be defined based on a target beacon transmission time (TBTT). The TBTT may indicate times at which beacon frames may be sent. For example, a time period between sending (e.g., transmissions) of successive beacon frames by the AP 810 may be based on a TBTT. The TBTT may be a time interval measured in time units (TUs). A TU may be equal to 1024 microseconds (or any other time interval). The STA1 811 and the STA2 812 may be in a doze state 833-1, 834-1 until a first TBTT 830. The STA1 811 and the STA2 812 may wake up to receive the beacon frame at the TBTT 830 and determine the broadcast TWT. The STA1 811 and the STA2 812 may wake up periodically to receive beacon frames. A time period between successive reception of beacon frames at a STA may be defined based on a listen interval for the STA. A TWT request and/or a TWT response, as shown in FIG. 8, may be used to negotiate one or more parameters (e.g., the first TBTT 830, a listen interval 832) for the broadcast TWT operation.

The STA1 811 and/or the STA2 812 may be in the doze state 833-2, 834-2 until the trigger-enabled TWT SP 820 starts (e.g., at time 831). The STA1 811 and/or the STA2 812 may be in the doze state 833-2, 834-2, for example, after the reception of a broadcast TWT element in the beacon frame. The AP 810 may send a basic trigger frame to the STA1 811 and/or the STA2 812, for example, during the trigger-enabled TWT SP 820. The STA1 811 may indicate that it is awake by sending a frame (e.g., a PS-Poll frame), for example, based on and/or in response to receiving the basic trigger frame. The STA2 812 may indicate that it is awake by sending a frame (e.g., a QoS null frame), for example, based on and/or in response to receiving the basic trigger frame. The AP 810 may send a multi-STA block acknowledgment (M-BA) frame, for example, based on/in response to the frames (e.g., the PS-Poll frame and/or the QoS null frame) from the STA1 811 and/or STA2 812. The STA1 811 and/or the STA2 812 may receive DL BUs from the AP 810, for example, after the M-BA frame and based on/in response to the frames (e.g., the PS-Poll frame and/or the QoS null frame) from the STA1 811 and/or STA2 812. The STA1 811 and/or the STA2 812 may send block acknowledgement (BlockAck) frames, for example, based on receiving the DL BUs. The STA1 811 and the STA2 812 may go to (e.g., enter and/or reenter) the doze state 833-3, 834-3 outside of the TWT SP.

A STA that intends to operate in power save mode (e.g., the STA1 811) may negotiate a wake TBTT and/or a wake interval with the AP. For example, The STA that intends to operate in power save mode (e.g., the STA1 811) send a TWT request to the AP 810. The TWT request may identify a TBTT (e.g., wake TBTT) of the first beacon frame and a wake interval between subsequent beacon frames it intends to receive (e.g., the listen interval 832). The AP 810, after and/or in response to receiving the TWT request from the STA1 811, may respond with a TWT response (e.g., accepting the TWT request). For example, the TWT response to the TWT request may confirm the wake TBTT and/or wake interval. The STA1 811 may be in a doze state until a (next) negotiated TBTT 830, for example, after successful completion of negotiation (e.g., of the TBTT and the listen interval 832). The STA1 811 may be in an awake state to receive and/or listen to beacon frames sent at the negotiated wake TBTTs 830. The STA1 811 may enter a doze state (e.g., until the next TBTT, for a time period equal to the listen interval 832), for example, if the STA 811 receives a beacon frame at and/or after the TBTT 830. The STA1 811 may enter the doze state (e.g., following reception of a beacon frame) unless a TIM element (e.g., in the beacon frame) comprises a positive indication for the STA1 811. The STA1 811 may go to the doze state, for example, after a nominal minimum TBTT wake duration time has elapsed (e.g., as measured from the TBTT start time). The STA2 812 (e.g., that has not negotiated the TBTT) may wake up to listen to and/or receive a beacon frame comprising the TWT element. The STA2 812 may be in the doze state during the TBTT. The STA2 812 may not receive a beacon frame unless the STA2 812 is configured to wake up at a TBTT to receive beacon frames. The STA2 812 may not receive a beacon frame, for example, if the STA2 812 is in a doze state during the TBTT.

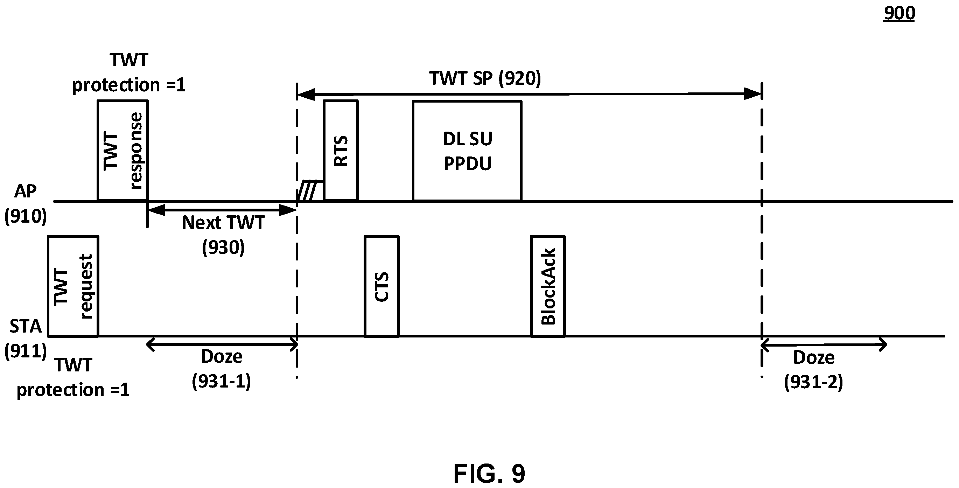

FIG. 9 shows an example of TWT protection in individual TWT operation. A network allocation vector (NAV) may be an indicator of time periods during which transmissions via a wireless medium (WM) may not initiated be by a STA. The STA may not initiate transmissions within the time periods regardless of whether or not the STA's clear channel assessment (CCA) function senses that the WM may be clear/available. The NAV may be maintained by the STA. A STA that may receive at least one valid frame, in a PSDU, may update a NAV using information from any valid duration field in the PSDU. The STA may update the NAV, for example, if a value of a received duration field is greater than the STA's current NAV value.

The TWT protection 900, as shown in FIG. 9, may be used by a STA1 911. The TWT protection 900 may be used to protect a TWT session from external transmissions by other STAs. A STA, during a TWT SP, that initiates a transmission opportunity (TXOP) to send a frame may send a request to send (RTS) frame or a clear to send (CTS) frame to protect the TWT session. The RTS frame or the CTS frame may protect the TWT session by appropriately setting NAVs of other STAs. Other STAs may set respective NAVs based on receiving the RTS frame and/or the CTS frame. The RTS frame may comprise a frame control field, a duration field, a receiver address (RA) field, a transmitter address (TA) field, and/or a frame check sequence (FCS) field. The CTS frame may comprise a frame control field, a duration field, a receiver address (RA) field, and/or a frame check sequence (FCS) field. A STA may send a CTS frame in response to a received RTS frame.

The TWT protection field, in a TWT element, may indicate whether a TWT is protected or unprotected. A TWT requesting STA (e.g., the STA 911) may set the TWT protection field to a first value (e.g., 1, or any other value) to request a TWT responding STA (e.g., AP 910) to provide protection for a set of TWT SPs. A TWT protection field equal to the first value may indicate usage of a NAV protection mechanism to protect access to the medium during/within the corresponding TWT SPs.

The STA1 911 may set the TWT protection field, in a TWT request frame to the first value (e.g., 1) to request the TWT responding STA (e.g., AP 910) to provide protection of the set of TWT SPs using a NAV protection mechanism. The AP 910 may set the TWT protection field, in a TWT response frame, to the first value (e.g., 1) to indicate the TWT SPs will be protected using a NAV protection mechanism. The STA may be in a doze state 931-1 until a next TWT 930, for example, following the reception of the TWT response frame. The AP 910 that may have set the TWT protection field to the first value (e.g., 1) may send a NAV setting frame approximately at the start of the TWT SP 920. For example, the NAV setting frame may be an RTS frame or a CTS frame. A STA that receives a NAV setting frame with a receiver address (RA, e.g., Address 1) field (e.g., in a MAC header of the NAV setting frame) that does not match a MAC address of the STA may set its NAV upon reception of the NAV setting frame and may not access the medium for a specified amount of time (e.g., as determined based on the NAV setting frame). Otherwise, the STA may send a CTS frame in response to the NAV setting frame. The STA 911 that receives the RTS frame and responds with the CTS frame may be scheduled to access the medium during the TWT SP 920. The AP 910 may send a downlink frame to the STA 911, for example, based on receiving the CTS frame. The AP may receive a block acknowledgment (e.g., BlockAck) frame (e.g., from the STA 911), for example, based on/in response to sending the downlink frame to the STA 911. The STA 911 may transition to a doze state 931-2, for example, based on/after an end of the TWT.

Traffic originating from many real time applications may have stringent latency requirements (e.g., low average latency and/or worst-case latency of the order of a few to tens of milliseconds, low jitter, etc.). The traffic may also be associated with certain reliability constraints. Traffic with stringent latency and/or reliability requirements may be referred to as latency sensitive traffic. Restricted TWT operation may allow an AP to use procedures (e.g., enhanced medium access protection and/or resource reservation mechanisms) to provide more predictable latency, reduced worst case latency, reduced jitter, and/or higher reliability for latency sensitive traffic.

A STA may negotiate (e.g., using TWT operations) awake periods with an AP to send and/or receive data packets. The STA may save its power outside the awake periods (e.g., by remaining in a doze state). TWT operation may lead to low power consumption for the participating STAs. TWT also may reduce contention level, and may support a collision-free and/or deterministic operation (e.g., in examples where the STAs are distributed over different TWT sessions).

An AP may, using restricted TWT (r-TWT) operation, allocate r-TWT SP(s). The r-TWT SP(s) may be used for transmission of data frame(s) comprising latency sensitive traffic (e.g., by the AP and/or one or more STAs). A data frame with latency sensitive traffic may be identified/indicated using r-TWT traffic information in an individual frame (e.g., TWT request frame or TWT response frame) or a broadcast frame (e.g., a beacon frame, probe response frame, etc.) sent by the AP. The r-TWT traffic information may comprise TIDs bitmaps for uplink and downlink traffic streams that may comprise latency sensitive traffic. A data frame with a TID that is not identified as latency sensitive traffic may not be sent during an r-TWT SP.

An r-TWT scheduling AP may be an extremely high throughput AP (EHT AP) that may support r-TWT operation. An r-TWT scheduled STA may be a non-AP EHT STA that may support r-TWT operation. The EHT AP may announce a r-TWT SP schedule information in a broadcast TWT element, for example, if an r-TWT agreement has been set up. Management frames (e.g., a beacon frame and/or a probe response frame) may comprise the broadcast TWT element. The EHT AP may schedule a quiet interval that overlaps with an r-TWT SP. A service interval within the r-TWT SP overlapping the quiet interval may have a duration (e.g., 1 TU, or any other time period). The service interval may start at the same time as the corresponding r-TWT SP. Overlapping quiet intervals may be scheduled by including one or more quiet elements in a beacon frame and/or a probe response frame. The overlapping quiet intervals may be scheduled such that legacy STAs may not initiate a frame transmission during the quiet interval overlapping with the r-TWT SP.

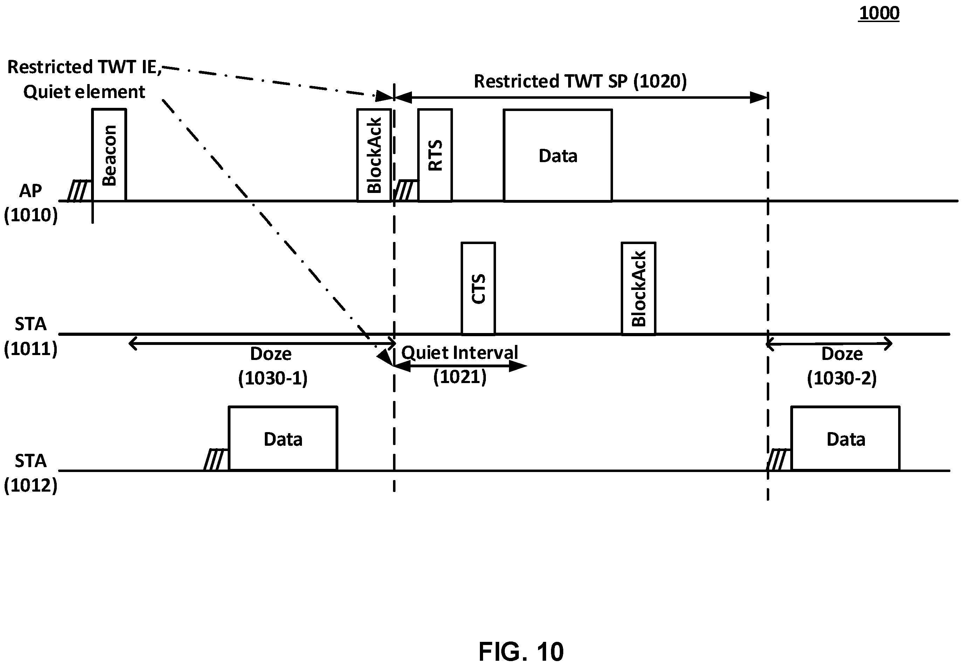

FIG. 10 shows an example r-TWT operation. An AP 1010, in the r-TWT operation 1000, may be an r-TWT scheduling AP. A STA1 1011 may be an r-TWT scheduled STA. A STA2 1012 may or may not be an r-TWT scheduled STA. For example, a STA2 1012 that is not an TWT scheduled STA may be a legacy STA or may be an EHT STA that is not scheduled by the AP 1010 during an r-TWT SP 1020. The AP 1010 may send a beacon frame comprising a TWT element. The TWT element may indicate an r-TWT SP (e.g., the r-TWT SP 1020) such as a start time of the r-TWT SP and a duration of the r-TWT SP. TIDs of traffic that is allowed to be sent during the r-TWT SP may be negotiated by the AP 1010 and the STA 1 1011 that exchanges TWT request frame and TWT response frame that are carrying TWT element for the r-TWT SP. The TWT element may comprise a quiet element indicating a quiet interval 1021. The AP 1010 may send a latency sensitive DL BU to the STA1 1011 within/during the r-TWT SP 1020. The STA2 1012, that has received the beacon frame, may send a data frame with a TID different from the indicated in the TWT element in the beacon frame. The STA2 1012 may send the data frame, for example, before the start of the r-TWT SP 1020. The STA1 1011 may be in a doze state 1030-1 until (e.g., before) the start of the r-TWT SP 1020. The STA2 1012 may end its transmission before the start of the r-TWT SP 1020. The AP 1010 and the STA1 1011 may exchange an RTS frame and a CTS frame, for example, during the r-TWT SP 1020. The STA2 1012 may not access the channel (e.g., using enhanced distributed channel access (EDCA)) at least during the quiet interval 1021 indicated in the beacon frame. The AP 1010 may send, to the STA1 1011, a data frame with a TID indicated as latency sensitive traffic (e.g., indicated in the beacon frame) during the r-TWT SP 1020. The STA2 1012 may resume its transmission, for example, if/after the r-TWT SP 1020 ends and/or if/after at least the quiet interval 1021 ends. For example, the STA2 1012 may send a data frame, for example, after the r-TWT SP 1020. The STA1 1011 may enter a doze state 1030-2, for example, after the r-TWT SP 1020.

An r-TWT SP may be allocated to one or more non-AP STAs. An r-TWT scheduled STA may not use a scheduled r-TWT SP for various reasons. The r-TWT scheduled STA may be in a power saving mode or other sleep mode and may not wake up to receive a beacon frame that includes a TWT element for the r-TWT SP. Also, or alternatively, the r-TWT scheduled STA may fail to decode a beacon frame that includes a TWT element for the r-TWT SP. The r-TWT scheduled STA may not have an UL frame to send to the associated AP during the r-TWT SP.

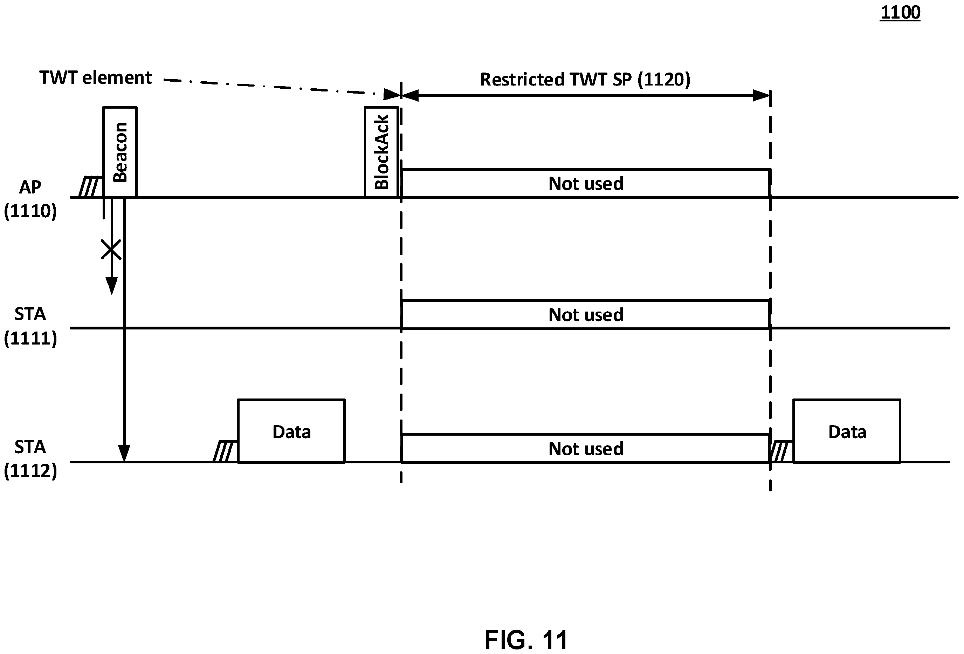

FIG. 11 shows an example 1100 in which a r-TWT SP is not used. AP 1110 may send a beacon frame including a TWT element for allocating a restricted TWT SP 1120 to STA 1111. STA 1111 may be in a power saving mode (e.g., before the transmission of the beacon frame) and may not wake up to receive the beacon frame. A STA in power saving mode wakes up to potentially receive beacon frames at least once within a listen interval of the STA. A legacy STA is not required to receive every beacon frame sent within the listen interval. A non-AP STA may therefore miss a beacon frame including a TWT element for an r-TWT SP. Due to being in power saving mode at the time of transmission of the beacon frame, STA 1111 misses the beacon frame and does not learn of restricted TWT SP 1120 indicated by the beacon frame. STA 1111 thus does not use r-TWT SP 1120 for any data transmission.

STA 1112 may receive the beacon frame and may learn of the restricted TWT SP 1120 indicated in the beacon frame. STA 1112 may not send data during the r-TWT SP 1120 based on receiving the beacon frame. For example, STA 1112 may stop sending a data frame with a TID of non-latency sensitive traffic before the start of r-TWT SP 1120 and/or defer transmission of the data frame until after the end of the r-TWT SP 1120. As such, neither STA 1111 nor STA 1111 uses r-TWT SP 1120 to send/receive frames to/from AP 1110 during r-TWT SP 1120. Radio resources of the r-TWT SP 1120 may thus remain unused and are wasted. This results in reduced radio link efficiency.

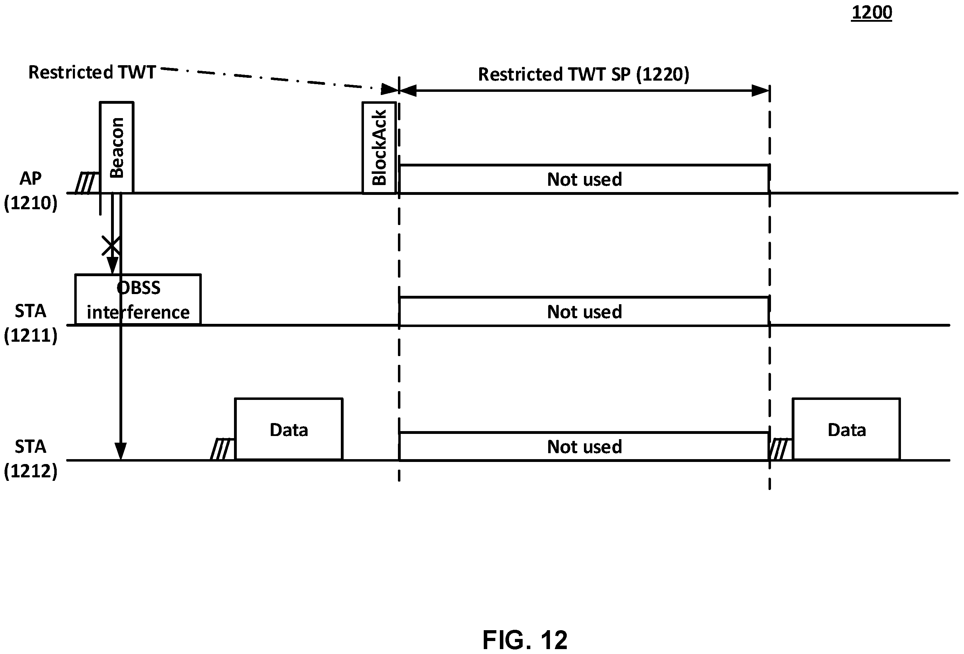

FIG. 12 shows an example 1200 in which an r-TWT SP is not used. AP 1210 may send a beacon frame including a TWT element for allocating a restricted TWT SP 1220 to STA 1211. STA 1212 may receive the beacon frame and learn of restricted TWT SP 1220 indicated in the beacon frame. STA 1212 may not be a scheduled STA of the restricted TWT SP 1220. STA 1212 may not send data during the r-TWT SP 1220 based on receiving the beacon frame. For example, STA 1212 may stop sending a data frame before the start of r-TWT SP 1220 and/or may defer transmission of the data frame until the end of r-TWT SP 1220.

STA 1211 may be a scheduled STA of r-TWT SP 1220. STA 1211 may fail to decode the beacon frame that includes the TWT element allocating the restricted TWT SP 1220. STA 1211 may thus not learn of restricted TWT SP 1220 indicated by the beacon frame and may therefore use the r-TWT SP 1220 (e.g., not send or receive any frame to/from AP 1210 during r-TWT SP 1220). As such, radio resources of r-TWT SP 1220 may be wasted.

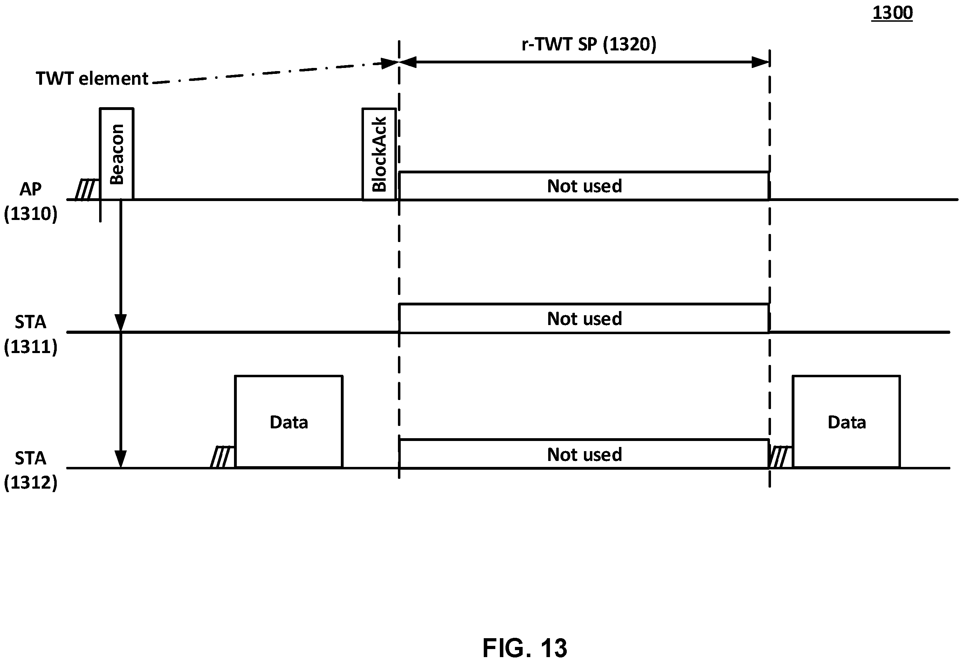

FIG. 13 shows an example 1300 in which an r-TWT SP is not used. AP 1310 may send a beacon frame including a TWT element for allocating a restricted TWT SP 1320 to STA 1311. STA 1312 may receive the beacon frame and learn of restricted TWT SP 1320. STA 1312 may not be a scheduled STA of restricted TWT SP 1320. STA 1312 may not send data during the r-TWT SP 1320 based on receiving the beacon frame. For example, STA 1312 may stop sending a data frame before the start of r-TWT SP 1320 and/or may defer transmission of the data frame until the end of r-TWT SP 1320.

The STA 1311 may be a scheduled STA of r-TWT SP 1320. STA 1311 may receive the beacon frame and may learn of restricted TWT SP 1320. But STA 1311 may not have any buffered frames to send during r-TWT SP 1320. As such, radio resources of r-TWT SP 1320 may be wasted, as no data frames with TID(s) associated with the r-TWT SP 1320 exist.

An AP and/or a STA may terminate the r-TWT SP. For example, the AP and/or the STA may terminate the r-TWT SP to avoid wasting an r-TWT SP (e.g., in a case that the AP cannot and/or does not send a trigger frame or other frame for use. For example, the AP and/or the STA may terminate the r-TWT SP based on whether and/or how the wireless medium is used during the r-TWT SP. Such terminating of an r-TWT SP may enhance throughput and/or efficiency of the wireless medium during r-TWT implementation.

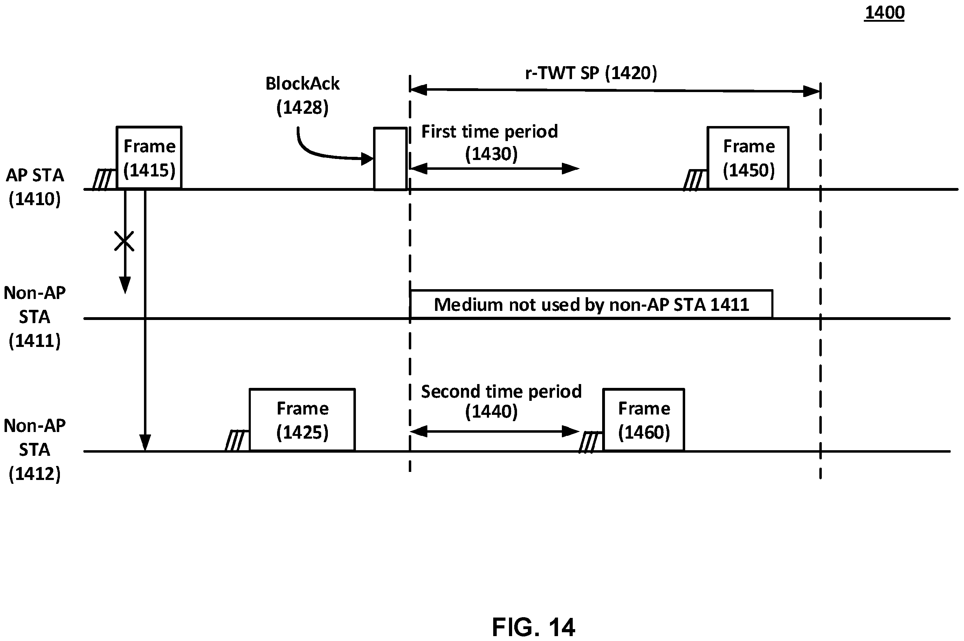

FIG. 14 shows an example 1400 of r-TWT SP termination. AP STA 1410 may send a frame 1415 indicating a r-TWT SP 1420 for one or more non-AP STAs. Frame 1415 may include a TWT element for r-TWT SP 1420. Frame 1415 may also, or alternatively, indicate one or more TIDs of MSDUs or A-MSDUs with latency sensitive traffic associated with r-TWT SP 1420. Frame 1415 may be broadcast by AP STA 1410. Frame 1415 may be sent periodically. Frame 1415 may comprise an address of AP STA 1410. Frame 1415 may be a beacon frame or a probe response frame.

Data frames may be sent/sent and/or received over the wireless medium outside of r-TWT SP 1420 (e.g., before and/or after r-TWT SP 14200) regardless of any TID of the data frames. For example, data frame 1425 may be sent (e.g., by non-AP STA 1412) and/or received (e.g., by AP STA 1410), regardless of a TID of the data frame 1425 (e.g., regardless of whether or not it indicates latency sensitive traffic). For example, data frame may be an MSDU or an A-MSDU with a TID that is not necessarily identified in frame 1415 as representing latency sensitive traffic. AP STA 1410 may send a BlockAck frame 1428 to non-AP STA 1412 in response to data frame 1425.

Non-AP STA 1411 may be a STA scheduled in r-TWT SP 1420. Non-AP STA 1411 may not receive frame 1415, and may therefore not receive the information for r-TWT SP 1420. Non-AP STA 1411 may thus not use r-TWT SP 1420 for any transmission. Non-AP STA 1412 may not be scheduled in r-TWT SP 1420. Non-AP STA 1412 may send data frame 1425 before the start of r-TWT SP 1420. Non-AP STA 1412 may receive frame 1415 indicating r-TWT SP 1420 and may, based on receiving frame 1415, stop sending data frame 1425 by the start of r-TWT SP 1420 and/or defer sending data frame 1425 until after TWT SP 1420 (e.g., not send data frame 1425 during r-TWT SP 1420). Non-AP STA 1412 may defer EDCA channel access for the transmission of a buffered data frame with any TID until the end of r-TWT SP 1420.

AP STA 1410 may check whether the wireless medium is used during a first time period 1430 within r-TWT SP 1420. AP STA 1410 may determine that the wireless medium is not used during first time period 1430. AP STA 1410 may terminate r-TWT SP 1420 based on determining that the wireless medium is not used during the first time period 1430. AP STA 1410 may send a frame 1450 to terminate r-TWT SP 1420. Frame 1450 may be, for example, one or more of a control frame, a management frame, an MSDU with any TID, or an A-MSDU with any TID. Frame 1450 may be sent using random channel access (e.g., EDCA channel access).

Also, or alternatively, non-AP STA 1412 may determine whether the wireless medium is used during a second time period 1440 within r-TWT SP 1420. Non-AP STA 1412 may determine that the wireless medium is not used during second time period 1440. Non-AP STA 1412 may terminate r-TWT SP 1420 based on determining that the wireless medium is not used during the second time period. Non-AP STA 1412 may send a frame 1460 to terminate r-TWT SP 1420. Frame 1460 may be, for example, one or more of a control frame, a management frame, an MSDU with any TID, or an A-MSDU with any TID. Frame 1460 may be sent using random channel access (e.g., EDCA channel access).

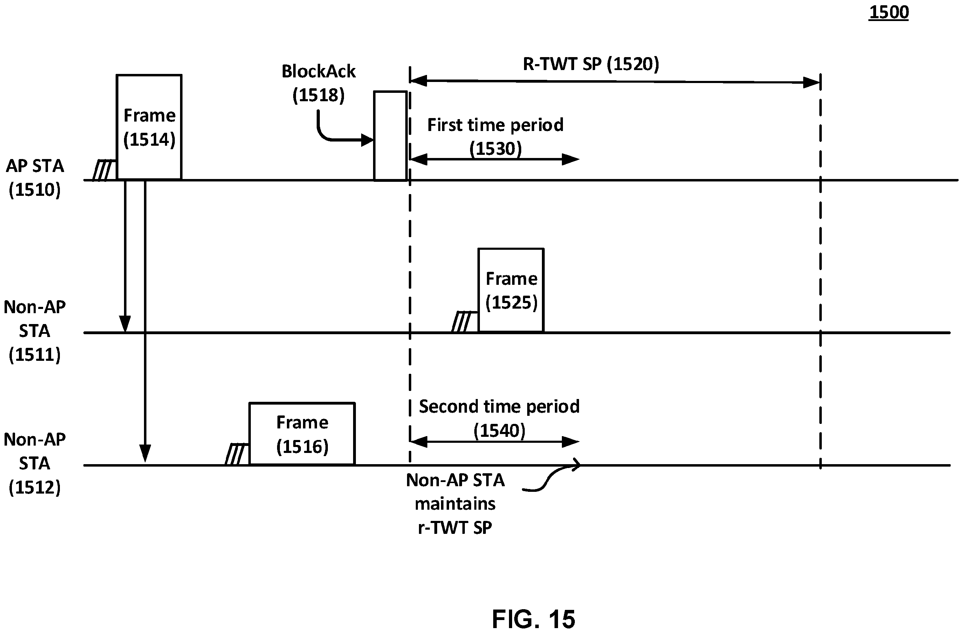

FIG. 15 shows an example 1500 of r-TWT operation. In example 1500, r-TWT SP is not terminated before its original scheduled end time. AP STA 1510 may send a frame 1514 indicating a r-TWT SP 1520 for one or more non-AP STAs (e.g., for non-AP STA 1511 and/or non-AP STA 1512). Frame 1514 may include a TWT element for r-TWT SP 1520. Frame 1514 may further indicate one or more TIDs of MSDUs or A-MSDUs with latency sensitive traffic associated with r-TWT SP 1520. Frame 1514 may be sent periodically. Frame 1514 may comprise an address of AP STA 1510. Frame 1514 may be a beacon frame and/or a probe response frame.

Before the start of r-TWT SP 1520, traffic with any TID may be able to be sent over the wireless medium. For example, AP STA 1510 may receive a data frame 1516, which may have any TID (e.g., an MSDU or an A-MSDU with a TID that is not necessarily identified in frame 1415 as representing latency sensitive traffic) from non-AP STA 1512. AP STA 1510 may send a BlockAck frame 1518 to non-AP STA 1512 in response to data frame 1516.

Non-AP STA 1511 may be scheduled in r-TWT SP 1520. Non-AP STA 1511 may receive frame 1514 which may indicate information for r-TWT SP 1520. Non-AP STA 1511 may send a frame 1525 during r-TWT SP 1520 to AP STA 1510. Frame 1525 may be an MSDU or an A-MSDU with a TID identified in frame 1514 as representing latency sensitive traffic. Non-AP STA 1512 may receive frame 1514 and may not be scheduled in r-TWT SP 1520. Non-AP STA 1512 may not send data frames during r-TWT SP 1520 based on the information in frame 1514. For example, non-AP STA 1512 may stop sending data frame 1516 before the start of r-TWT SP 1520 and/or may random channel access (e.g., EDCA channel access) for transmission of a data (e.g., a buffered data frame with any TID) until the end of the r-TWT SP 1520.

AP STA 1510 may check whether the wireless medium is used during a first time period 1530 within r-TWT SP 1520. AP STA 1510 may determine that the wireless medium is used during first time period 1530 based on determining frame 1525 was sent by non-AP STA 1511. AP STA 1510 may decide to maintain (e.g., not prematurely terminate) r-TWT SP 1520 based on the determining that the wireless medium is used during first time period 1530. Also, or alternatively, non-AP STA 1512 may determine whether the wireless medium is used during a second time period 1540 within r-TWT SP 1520. Non-AP STA 1512 may determine that the wireless medium is used during second time period 1540 based on frame 1525 sent by non-AP STA 1511. Non-AP STA 1512 may decide to maintain (e.g., not prematurely terminate) r-TWT SP 1520 based on the determining that the wireless medium is used during second time period 1540. For example, non-AP STA 1512 may defer random channel access (e.g., EDCA channel access) for transmission of a buffered data frame with any TID until the end of r-TWT SP 1520.

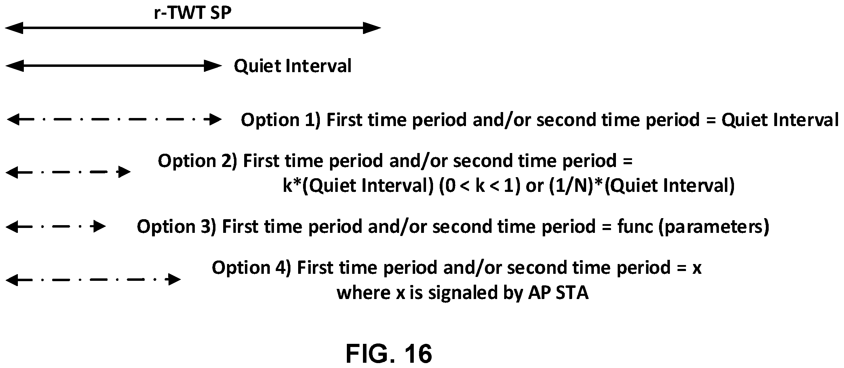

FIG. 16 shows examples of determining a length of the first time period (e.g., the first time period 1430 or 1530) and/or a length of the second time period (e.g., the second time period 1440 and/or 1540) may be determined. A length of the first time interval and/or the second time interval may be set based on a length of the r-TWT SP, a quiet interval, one or more radio link parameters and/or information sent by the AP STA, such as information in an element of a frame sent by the AP STA. A quiet interval may be a period during which certain non-AP STAs are not allowed to send data (e.g., messages and/or signals). For example, the quiet interval may be defined and/or indicated by a Quiet Element (QE) defined according with IEEE 802.11 standard technologies in one or more frequency bands.

In a first example (Option 1), a length of the first time period and/or the second time period may be determined (and/or set) based on a quiet interval, which may overlap with and/or be within the r-TWT SP. For example, the first time period and/or the second time period may be determined and/or set to the same value as the quiet interval (e.g., same duration, same start time, same stop time). For example, the first time period and/or the second time period may be set to 1 TU (e.g., 1024 µs, as in IEEE 802.11be) plus a value n (e.g., n = 0, 10 µs, etc.).

In a second example (Option 2), a length of the first time period and/or the second time period may be determined (and/or set) to be a shorter time period than a quiet interval. The length of the first time period and/or second time period may be set to k*(Quiet Interval), where 0<k<1. For example, if the quiet interval is 1 TU, the first time period and/or second time period may be set to k TU + n, where 0<k<1 and, for example, n=0 µs, 10 µs, etc. In an example, if the k equals to 0.004 and n=0, then the first time period and/or the second time period may be (1 TU (1000us) * 0.004 + 0) = 4us. In an example, if the k equals to 0.016 and n=0, then the first time period and/or the second time period may be (1 TU (1000us) * 0.016 + 0) = 16us. Alternatively, the length of the first time period and/or the second time period may be set to 1/N times of the quiet interval, where N is a positive integer. The value of N and/or k may be indicated and/or signaled by an element in a frame sent by the AP STA. Also, or alternatively, the value of N and/or k may be a fixed value (e.g., N =2, 4, etc., k=0.5, 0.25, etc.). The value of N and/or k for the first time period may be equal to and/or different than the respective value of N and/or k for the second time period.

In a third example (Option 3), the length of the first time period and/or the second time period may be determined (and/or set) based on a function of one or more radio link parameters. Such parameters may include, for example, parameters associated with r-TWT EDCA, arbitration inter-frame spacing (AIFS), short inter-frame space (SIFS), connection window times (e.g., CWmin and/or CWmax), RTS transmission (TX) time, CTS TX time, etc.). A length of the first time period and/or the second time period may be determined (and/or set) to the value of a r-TWT EDCA time, for example. The r-TWT EDCA time may be based on at least one of: AIFS [AC], CWmin[AC], and/or RTS TX time, where AC may refer to an access category for a TID identified in a TWT element for the r-TWT SP. For example, r-TWT EDCA time may be equal to AIFS [AC] + CWmin[AC] + RTS TX. In another example, r-TWT EDCA time may be equal to AIFS [AC] + CWmin[AC] + RTS TX + n (e.g. n=0 µs, 10 µs). If more than one value is derived and/or derivable for the first time period value, the length of the first time period may be determined (and/or set) to be the largest value. The length of the second time period may also, or alternatively, be determined (and/or set) to be the value of r-TWT EDCA time, wherein the r-TWT EDCA is equal to AIFS [AC] + CWmin[AC] + RTS TX time + SIFS + CTS TX time, where the AC is an access category for a TID identified in a TWT element for the r-TWT SP. If more than one value is derived and/or derivable for the second time period value, the length of the second time period may be determined (and/or set) to be the largest value. The length of the first time period may be equal to that of the second time period. The length of the first time period may be different from that of the second time period, for example, by a pre-defined time value. The function for determining the first time period may be designed to increase wireless medium channel efficiency. The first time period may be set to be a short time duration so as to leave a substantial portion of time in the r-TWT SP for transmission of frames, while also being set to a long enough time duration to allow a correct determination (e.g., by an AP STA) that the wireless medium is not going to be used.

In a fourth example (Option 4), a length of the first time period and/or the second time period may be indicated by an element in a frame sent by the AP STA. The STA may determine the length of the first time period and/or the second time period based on the element. The frame may be one or more of: a beacon frame, a probe response frame, an association response frame and/or an action frame. The at least one element may be a TWT element. The AP STA may also, or alternatively, determine the length of the first time period and/or the second time period based on an access category of at least one TID of one or more TIDs of the frame sent by the AP STA. The length of the first time period may be different from a length of the second time period.

The length of the first time period and/or the second time period may be any be any duration within the r-TWT SP. For example, the first time period and/or the second time period may be a period of inactivity after a first frame transmission during the r-TWT SP. the first time period and/or the second time period may start at a predetermined time n (e.g. n=0 µs, 10 µs, etc.) after the beginning of the r-TWT SP. The length of the first time period and/or the second time period may be based on an r-TWT carrier sense duration (CSD). For example, a length of the first time period and/or the second time period may be set to r-TWT CSD + n (e.g. n=0 µs, 10 µs, etc.).

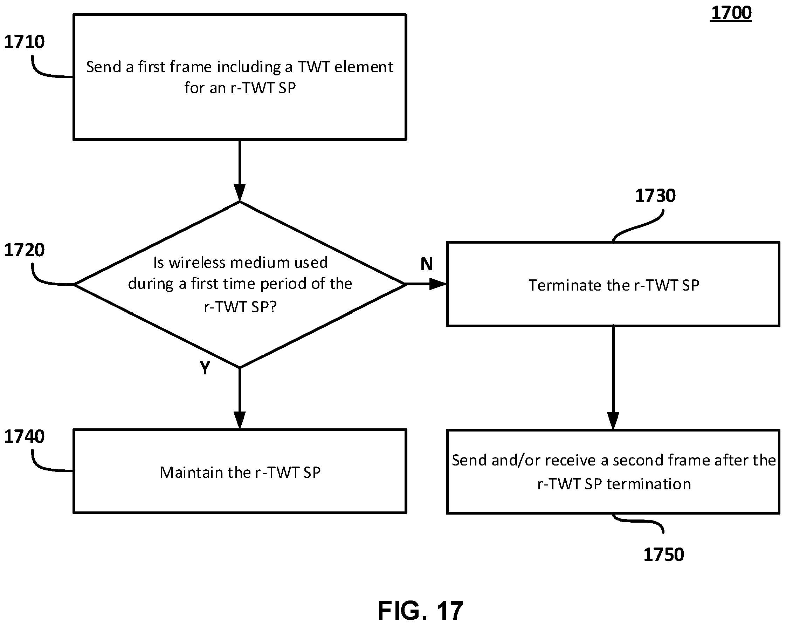

FIG. 17 shows an example 1700 of r-TWT operation. Steps of example 1700 may be performed, for example, by an AP. In step 1710, a first frame including a TWT element for an r-TWT SP may be sent. The first frame may be, for example, a beacon frame and/or a probe response frame. In step 1720, a determination may be made as to whether a wireless medium is used during a first time period within the r-TWT SP. For example, the AP STA may receive a frame during the first time period and/or otherwise receive information indicating that data was sent via the wireless medium during the first time period. The r-TWT SP may be terminated in step 1730, based on a determination that the wireless medium was not used in the first time period (1720 - N) . The wireless medium may then be used without the restriction of the r-TWT SP. For example, in step 1750, a second frame may be sent or received a second frame after the r-TWT SP termination. The second frame may be, for example, one or more of a control frame, a management frame, an MSDU with any TID, and/or an A-MSDU with any TID. Also, or alternatively, in step 1740, the r-TWT SP may be maintained based on a determination that the wireless medium was used during the first time period (1720 - Y). The wireless medium may then continue to be used with restrictions of the r-TWT SP.

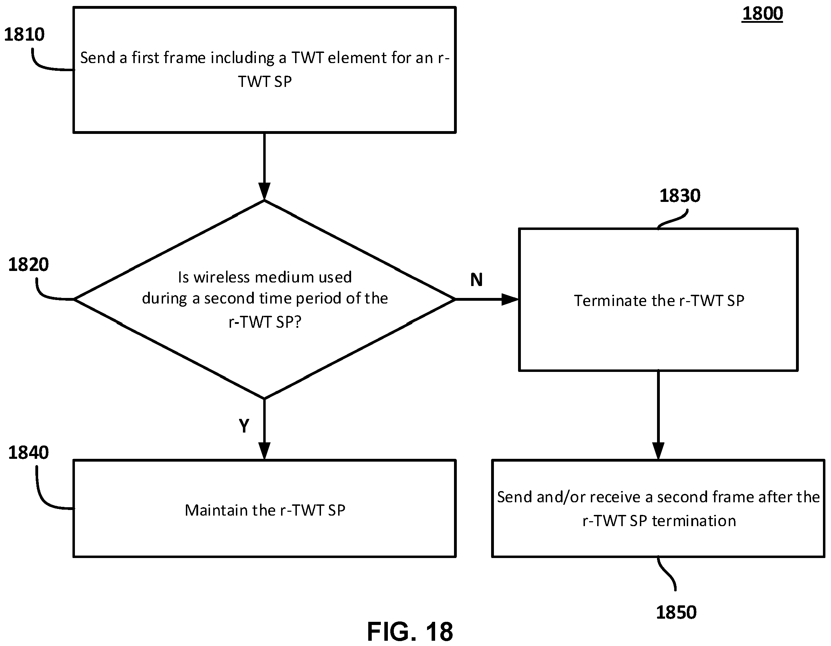

FIG. 18 shows an example 1800 of r-TWT operation. Process 1800 may be performed by a non-AP STA. In step 1810, a first frame including a TWT element for an r-TWT SP may be received. The first frame may be, for example, a beacon frame and/or a probe response frame. In step 1820, a determination may be made as to whether a wireless medium is used during a second time period within the r-TWT SP. In step 1830, the r-TWT SP may be terminated based on a determination that the wireless medium was not used during the second time period (1820 - N). The wireless medium may then be used without the restriction of the r-TWT SP. For example, in step 1850, a second frame may be sent and/or received after the r-TWT SP termination. The second frame may be one or more of a control frame, a management frame, an MSDU with any TID, or an A-MSDU with any TID. The second frame may be sent, for example, using EDCA channel access. Also, or alternatively, in step 1840, the r-TWT SP may be maintained based on a determination that the wireless medium was used during the first time period (1820 - Y). The wireless medium may then continue to be used with restrictions of the r-TWT SP.

In WLAN systems, an AP may allocate a trigger-enabled (TE) TWT SP to a STA that supports TWT operation. Receiving a trigger frame from the AP may allow the STA to send a frame during the TE TWT SP. The STA may not be allowed to send a frame using EDCA operation during the TE TWT SP. Also, or alternatively, an AP may allocate a TE r-TWT SP to a STA that supports r-TWT operation. In a TE r-TWT SP, the r-TWT scheduling AP may first trigger member r-TWT scheduled STAs, which may allow the member r-TWT scheduled STAs to send QoS data frames. The QoS data frames may correspond to TIDs that are associated with the TE r-TWT SP. In a trigger-enabled r-TWT SP, a member r-TWT scheduled STA may send an UL frame to a r-TWT scheduled AP in response to a trigger frame received from the AP. In a TE r-TWT SP, the member r-TWT scheduled STA may not be allowed to send data by using EDCA.

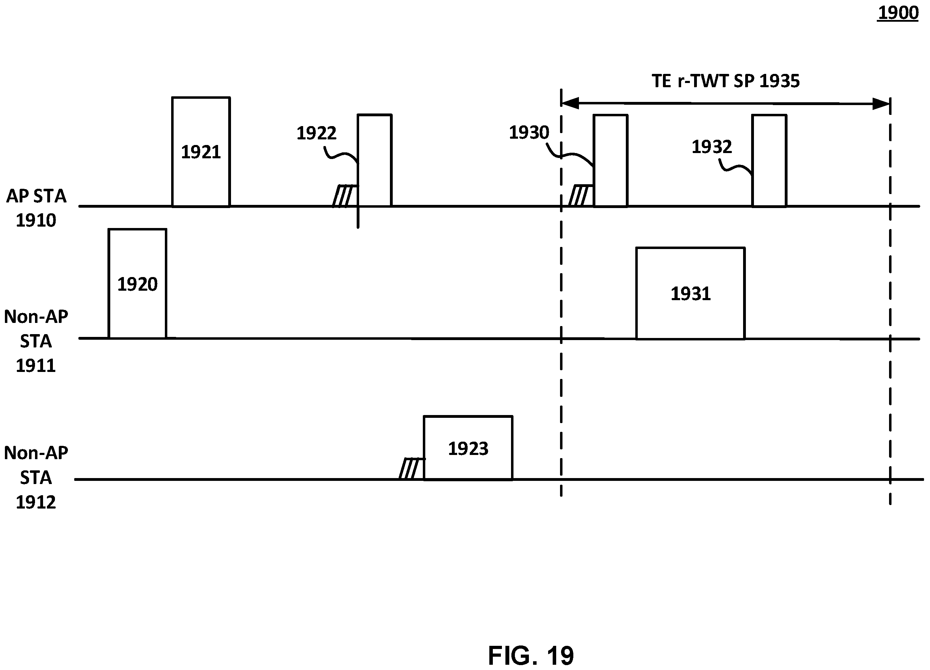

FIG. 19 shows an example 1900 of TE r-TWT SP operation. STA 1911 may send a TWT setup request frame 1920 to AP 1910. TWT setup request frame 1920 may include one or more first parameters for a TE r-TWT SP 1935. AP 1910 may send a TWT setup response frame 1921 to STA 1911 based on receiving frame 1920. TWT setup response frame 1921 may include one or more second parameters for the TE r-TWT SP 1935. The second parameters be the same as, or different from, the first parameters. TWT setup request frame 1920 and/or TWT setup response frame 1921 may comprise TID bitmaps indicating TIDs corresponding to DL or UL traffic. The DL/LTL traffic indicated in the TID bitmaps may represent DL/UL traffic that may be sent during the TE r-TWT SP 1935. A TE r-TWT SP may be set-up based on the exchanging of the TWT setup request frame 1920 and TWT setup response frame 1921. STA 1911 may be a member r-TWT scheduled STA of the TE r-TWT SP 1935, which means STA 1911 may be allowed to send data during the TE r-TWT SP 1935 based on receiving a trigger frame (e.g., trigger frame 1930) during the TE r-TWT SP 1935.

AP 1910 may send a frame 1922 comprising a TWT element indicating scheduling information of the TE r-TWT SP 1935. The frame 1922 may be sent based on (e.g., in response to) the exchanging of the TWT setup request frame 1920 and TWT setup response frame 1921. The scheduling information may indicate a start time and/or an end time of the TE r-TWT SP 1935. Frame 1922 may be a beacon frame, a broadcast probe response frame, a fast initial link setup (FILS) discovery frame, or a traffic indication map (TIM) broadcast frame.

Another non-AP STA, such as STA 1912, may not be a member r-TWT scheduled STA of the TE r-TWT SP 1935. STA 1912 may be able to send and/or receive data using random channel access outside of the TE-r-TWT SP 1935 (e.g., send a data frame 1923 by using EDCA before the start of the TE r-TWT SP 1935). STA 1912 may not be able to send and/or receive data using EDCA during the TE r-TWT SP (e.g., may stop sending data frame 1923 by the start of the TE r-TWT SP 1935).

AP 1910 may send a trigger frame 1930 to STA 1911. The trigger frame 1930 may be sent after the start of the TE r-TWT SP 1935. STA 1911 may send a trigger-based (TB) frame, such as TB PPDU 1931, to AP 1910 based on (e.g., in response to receipt of and/or enabled by receipt of) trigger frame 1930. TB PPDU 1931 may include UL traffic that is permitted to be sent during the TE r-TWT SP 1935. TB PPDU 1931 may have a TID that belongs to the TIDs indicated in the TID bitmaps exchanged by frames 1920 and 1921. AP 1910 may send a BlockAck frame 1932 in response to TB PPDU 1931. BlockAck frame 1932 may be a multi-STA BlockAck (M-BA) frame or a compressed BlockAck frame.

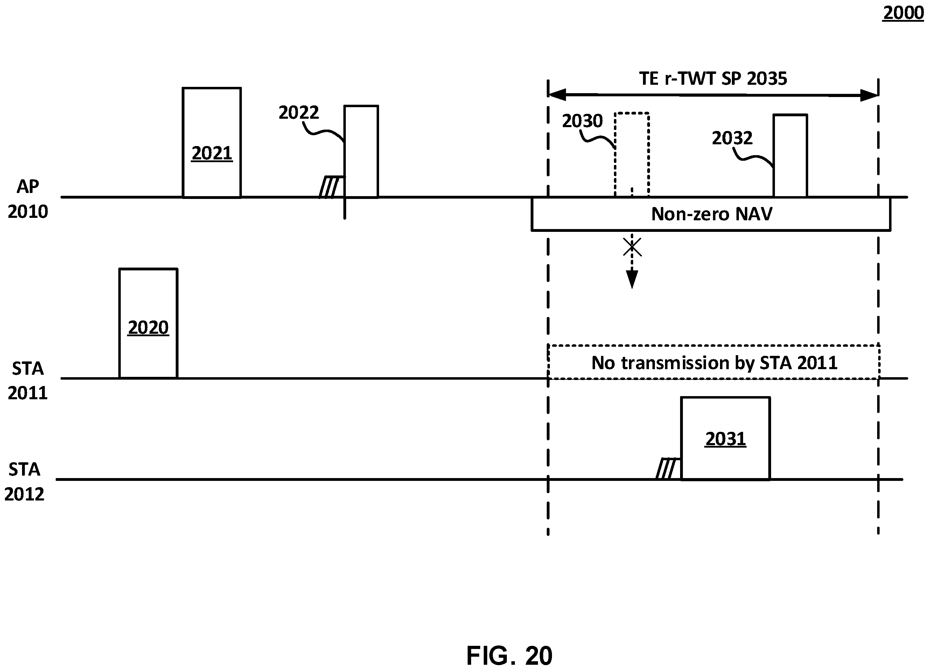

FIG. 20 shows an example 2000 of TE r-TWT operation. In example 2000 TE r-TWT operation, a trigger frame is not able to be sent during the TE r-TWT SP 2035. STA 2011 may send a TWT setup request frame 2020 to AP 2010. TWT setup request frame 2020 may include first parameters for a TE r-TWT SP 2035. AP 2010 may send a TWT setup response frame 2021 to STA 2011 based on TWT setup request frame 2020. TWT setup response frame 2021 may include second parameters for the TE r-TWT SP 2035. The second parameters may be the same as or different from the first parameters. TWT setup request frame 2020 and/or TWT setup response frame 2021 may comprise TID bitmaps indicating TIDs corresponding to DL or UL traffic. The DL/LTL traffic indicated in the TID bitmaps may represent DL/UL traffic that may be sent during the TE r-TWT SP 2035. STA 2011 may be a member r-TWT scheduled STA of the TE r-TWT SP 2035 set up based on the exchanging of the TWT setup request frame 2020 and the TWT setup response frame 2021. As such, STA 2011 may be allowed to send data in response to a received trigger frame during the TE r-TWT SP 2035. AP 2010 may send a beacon frame 2022 comprising a TWT element indicating scheduling information of the TE r-TWT SP 2035. The scheduling information may indicate a start time and an end time of the TE r-TWT SP 2035.

AP 2010 may be expected to send a trigger frame to STA 2011. For example, AP 2010 may be expected to send the trigger frame, such as trigger frame 2030, after the start of the TE r-TWT SP 2035 (e.g., near and/or within a time frame of the scheduled start time of the TE r-TWT SP). The trigger frame would be configured to trigger member r-TWT scheduled STA 2011 to send latency sensitive traffic during the TE r-TWT SP 2035. AP 2010 may not be able to send trigger frame 2030 during the TE r-TWT SP 2035. For example, AP 2010 may not be able to send trigger frame 2030 based on carrier sensing indicating a busy medium. For example, a NAV value of AP 2010 may be a non-zero value during the TE r-TWT SP 2035. STA 2011 may not receive a trigger frame 2030 from AP 2010 during the TE r-TWT SP 2035 as a result of the AP 2010 not sending the trigger frame 2030. STA 2011 may thus not send any frame during the TE r-TWT SP 2035. For example, STA 2011 may have but not send buffered latency sensitive traffic and/or a carrier sensing result indicating idle medium during the TE r-TWT SP 2035.

STA 2012, which may not be a member r-TWT scheduled STA of the TE r-TWT SP 2035, may still send a data frame 2031 to AP 2010 (e.g., by using EDCA) during the TE r-TWT SP 2035. For example, STA 2012 may send a frame 2031 after a quiet interval has elapsed from the start of the TE r-TWP SP 2035. Also, or alternatively, STA 2012 may be an EHT STA that does not support r-TWT or a legacy non-EHT STA and may thus not follow r-TWT procedure. Also, or alternatively, STA 2012 may remain silent during the TE r-TWT SP 2035 if STA 2012 follows r-TWT procedures. Frame 2031 may include non-latency sensitive traffic. AP 2010 may send a BlockAck frame 2032 to STA 2012 in response to receipt of the frame 2031.

In example 2000, latency sensitive traffic of STA 2011 may be delayed and/or discarded, despite STA 2011 being a member r-TWT scheduled STA of the TE r-TWT SP 2035 and having latency sensitive data to send. Non-latency sensitive traffic of STA 2012 may be sent during the TE r-TWT SP 2035. Thus, the traffic prioritization benefit of the TE r-TWT SP 2035 may not be realized.

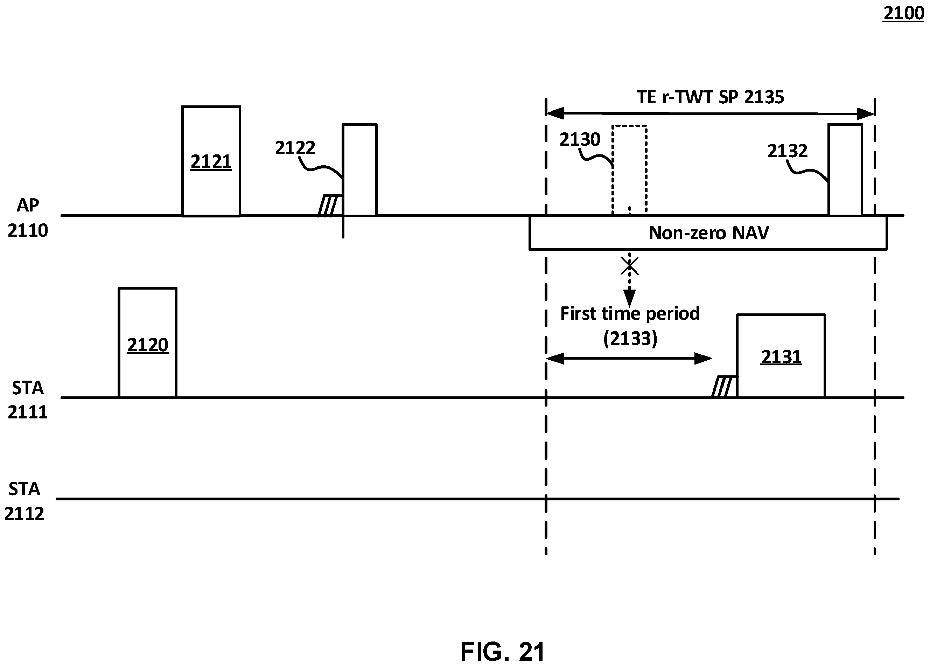

FIG. 21 shows an example 2100 of TE r-TWT operation. In example 2100 TE r-TWT operation, data may be sent by a member r-TWT scheduled STA 2111 during the TE r-TWT SP 2135 even if a trigger frame is not able to be sent and/or received. A TE r-TWT may be setup. STA 2111 may send a TWT setup request frame 2120 to AP 2110. TWT setup request frame 2120 may include first parameters for a TE r-TWT SP 2135. In response to the TWT setup request frame 2120, AP 2110 may send a TWT setup response frame 2121 to STA 2111. TWT setup response frame 2121 may include second parameters for the TE r-TWT SP 2135. The second parameters may be the same as and/or different from the first parameters. TWT setup request frame 2120 and/or TWT setup response frame 2121 may comprise TID bitmaps indicating TIDs corresponding to DL or UL traffic. The DL/LTL traffic indicated in the TID bitmaps may represent DL/LTL traffic that may be sent during the TE r-TWT SP 2135.

STA 2111 may be a member r-TWT scheduled STA of the TE r-TWT SP 2135 based on the setup of the TE r-TWT (e.g., based on the exchanging of the TWT setup request frame 2120 and the TWT setup response frame 2121). As a member r-TWT scheduled STA, STA 2111 may be allowed to send data during the TE r-TWT SP 2135. AP 2110 may send a beacon frame 2122 comprising a TWT element indicating scheduling information of the TE r-TWT SP 2135. The scheduling information may indicate a start time and an end time of the TE r-TWT SP 2135.

AP 2110 may be expected to send a trigger frame 2130 to STA 2111 during the TE r-TWT SP 2135 (e.g., after and/or within a time frame after the start of the TE r-TWT SP 2135). The trigger frame 2130 may be configured to trigger member r-TWT scheduled STA 2111 to send its latency sensitive traffic during the TE r-TWT SP 2135. AP 2110 may not be able to send the trigger frame 2130 during the TE r-TWT SP 2135. For example, AP 2110 may not be able to send the trigger frame 2130 based on a carrier sensing indicating a busy medium. For example, a NAV value of AP 2110 may be a non-zero value during the TE r-TWT SP 2135. STA 2111 may be configured not to send on the wireless medium without receiving a trigger frame from AP 2110 during the TE r-TWT SP 2135. Also, or alternatively, STA 2111 may be configured to determine that the wireless medium is not used during a first time period of the TE r-TWT SP (e.g., based on not receiving a frame from AP 2110 during a first time period 2133 of the TE r-TWT SP).

A length of the first time period 2133 may be determined according to, for example, one or more of the options described with respect to FIG. 16. The length of the first time period 2133 may be signaled by a frame (e.g., frame 2121 and/or frame 2122) sent by AP 2110. The frame may be a data frame, a control frame, a management frame (e.g., a TWT setup and/or response frame, a beacon frame, a probe response frame, an association response frame, FII,S discovery frame, or a TIM broadcast frame), QoS data/null frame, or an action (response) frame. The QoS data/null frame may comprise A-control field including a value of first time period 2133. The length of time of the first time period 2133 may be signaled by a frame (e.g., frame 2120) sent by STA 2111. The frame may be a data frame, a control frame, a management frame (e.g., a TWT setup (request) frame, a probe request frame, an association request frame), QoS data/null frame, or an action (request) frame. The QoS data/null frame may comprise A-control field including a value of first time period 2133.

The first time period 2133 may start at (e.g., be determined relative to) the beginning of the TE r-TWT SP 2135. STA 2111 may determine that the wireless medium is not used based on not receiving a frame (e.g., an expected frame) from AP 2110 during first time period 2133. The frame may be any frame in accordance with the IEEE 802.11 standard. The frame may be a trigger frame, a data frame, a control frame, a management frame, and/or an action frame. The frame may be any frame except for an immediate response frame. As used herein, the term "immediate response frame" refers to a frame that is sent in response to another frame to acknowledge and/or respond to the other frame. Examples of an immediate response frame include an Ack frame or a BlockAck frame (e.g., including a compressed BlockAck frame and/or a Multi-STA BlockAck frame) in accordance with the IEEE 802.11 standard. An Ack or BlockAck frame may be sent in response to a frame comprising an MPDU and/or an aggregate MPDU (A-MPDU). Other examples of an immediate response frame may include a CTS frame, which may be sent in response to a RTS frame, or a BSR frame, which may be sent in response to a BSRP Trigger frame. The frame may exclude an immediate response frame, received during first time period 2133, that is not addressed to and/or intended for receipt by STA 2111. The frame may exclude any immediate response frame, received during first time period 2133, irrespective of whether the immediate response frame is addressed to and/or intended for receipt by STA 2111.

STA 2111 may be able to send a non-trigger-based frame (e.g., frame 2131) on the wireless medium following first time period 2133 of the TE r-TWT SP 2135 based on determining that the wireless medium was not used during the first time period 2133 (e.g., not receiving a frame from AP 2110 during first time period 2133). The non-trigger-based frame (e.g., frame 2131) may be sent using a contention based channel access scheme. The contention based channel access scheme may be a distributed coordination function (DCF) scheme, an enhanced distributed channel access (EDCA) scheme, and/or a listen before talk (LBT) scheme. Also, or alternatively, STA 2111 may be configured to receive a trigger frame from AP 2110 before sending any data frames during the TE r-TWT SP 2135.

STA 2111 may determine that the wireless medium is not used based on not receiving frame 2130 from AP 2110 during first time period 2133. Based on this determination, STA 2111 may send a frame 2131 on the wireless medium following first time period 2133 of the TE r-TWT SP 2135. Also, or alternatively, STA 2111 may terminate the TE r-TWT SP 2135. The terminating of the r-TWT SP 2135 may include terminating (e.g., no longer sending and/or receiving data according to) a configuration of STA 2111 to send data during the TE r-TWT SP 2135 only after receiving a trigger frame (e.g., frame 2130) from AP 2110. Frame 2131 may be a non-trigger-based frame. The non-trigger-based frame may be sent using a contention based channel access scheme. The contention based channel access scheme may be a distributed coordination function (DCF) scheme, an enhanced distributed channel access (EDCA) scheme, and/or a listen before talk (LBT) scheme. Frame 2131 may include latency sensitive traffic or non-latency sensitive traffic. AP 2110 may send an Ack frame or a BlockAck frame 2132 in response to frame 2131.

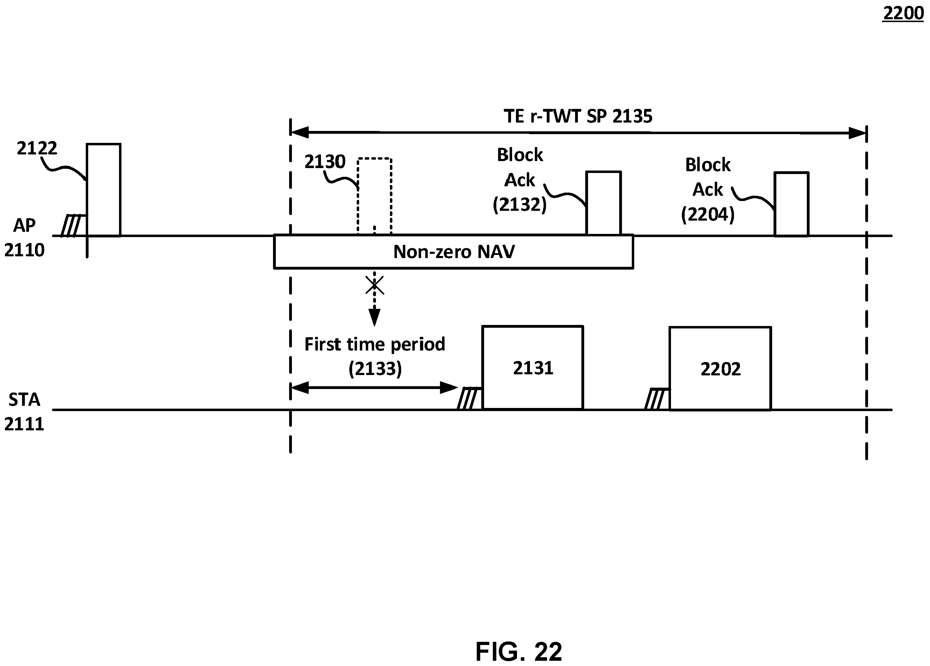

FIG. 22 shows an example 2200 of TE r-TWT operation. In example 2200 TE r-TWT operation, data may be sent by a member r-TWT scheduled STA 2111 during the TE r-TWT SP 2135, even if a trigger frame is not able to be sent and/or received. The member r-TWT scheduled STA 2111 may be able to and/or may continue to send data during the TE r-TWT SP 2135 without receiving trigger frames, even if the AP 2110 is again able to send trigger frames.

A TE r-TWT may be setup. STA 2111 may send a TWT setup request frame (e.g., as shown in FIG. 21, not shown in FIG. 22) to AP 2110 requesting the setup of a TE r-TWT. In response, AP 2110 may send a TWT setup response frame (e.g., as shown in FIG. 21, not shown in FIG. 22) to STA 2111 accepting the requested TE r-TWT. The TWT setup request frame and/or the TWT setup response frame may comprise TID bitmaps indicating TIDs corresponding to DL or UL traffic. The DL/LTL traffic indicated in the TID bitmaps may represent DL/UL traffic that may be sent during one or more SPs of the TE r-TWT. STA 2111 may be a member r-TWT scheduled STA of the TE r-TWT based on the setup of the TE r-TWT. AP 2110 may send a beacon frame 2122 comprising a TWT element indicating scheduling information of a TE r-TWT SP 2135 of the setup TE r-TWT. The scheduling information may indicate a start time and/or an end time of the TE r-TWT SP 2135.

AP 2110 may be expected (e.g., by STA 2111) to send a trigger frame to STA 2111 at the start of TE r-TWT SP 2135 (e.g., during a first time period 2133 of the TE r-TWT SP 2135). The trigger frame may be configured to trigger member r-TWT scheduled STA 2111 to send latency sensitive traffic during TE r-TWT SP 2135. AP 2110 may not be able to send a trigger frame 2130 at the start of TE r-TWT SP 2135. For example, AP 2110 may not be able to send trigger frame 2130 based on a carrier sensing indicating a busy medium. For example, a NAV value of AP 2110 may be a non-zero value at the start of TE r-TWT SP 2135.

The STA 2111 may be configured to determine whether the wireless medium is used by AP 2110 during a first time period 2133 of the TE r-TWT SP 2135. The first time period 2133 may start at the beginning of TE r-TWT SP 2135. A length of the first time period 2133 may be determined according to, for example, one or more of the options described with respect to FIG. 16. The length of the first time period 2133 may be signaled by a frame (e.g., frame 2121 or frame 2122) sent by AP 2110. The length of first time period 2133 may be signaled by a frame (e.g., frame 2120) sent by STA 2111. STA 2111 may be configured to send and/or be able to send a non-trigger-based frame on the wireless medium based on determining that the wireless medium is not used by AP 2110 during first time period 2133 (e.g., based on not receiving a trigger frame and/or another frame from the AP 2110). The non-trigger-based frame may be sent using a contention-based channel access scheme. The contention-based channel access scheme may be a distributed coordination function (DCF) scheme, an enhanced distributed channel access (EDCA) scheme, and/or a listen before talk (LBT) scheme, for example.

An STA 2111 may be configured to determine that the wireless medium is not used during first time period 2133 based on not receiving a frame from AP 2110 during first time period 2133. STA 2111 may be configured to determine that the wireless medium is not used during first time period 2133 based on not receiving, from AP 2110 during the first time period 2133, a frame including any frame in accordance with the IEEE 802.11 standard. That is, STA 2111 determines that the wireless medium is not used if no frame is received from AP 2110. Also, or alternatively, STA 2111 may determine that the wireless medium is not used if no trigger frame is received from AP 2110. The trigger frame may be a trigger frame that schedules STA 2111 for uplink transmission. Also, or alternatively, STA 2111 may determine that the wireless medium is not used if no data frame is received, no control frame is received, no management frame is received, and/or no action frame is received from AP 2110. Also, or alternatively, STA 2111 may determine that the wireless medium is not used if no frame except for an immediate response frame is received from AP 2110. STA 2111 may determine that the wireless medium is not used if only an immediate response frame is received from AP 2110, wherein the immediate response frame may or may not be addressed to and/or intended for receipt by the STA 2111. STA 2111 may determine that the wireless medium is not used if only an immediate response frame, received during first time period 2133, wherein the immediate response frame is not addressed to and/or intended for receipt by STA 2111.

For example, STA 2111 may not receive a frame (e.g., frame 2130) from AP 2110 during the first time period 2133 and therefore determine that the wireless medium is not during the first time period 2133. STA 2111 may send a non-trigger-based frame 2131 on the wireless medium following first time period 2133 of TE r-TWT SP 2135 based on the determination that no frame was received from AP 2110 during the first time period 2133. Frame 2131 may include latency sensitive traffic (e.g., associated with the TE r-TWT) and/or non-latency sensitive traffic. AP 2110 may send a BlockAck frame 2132 to STA 2111 in response to frame 2131.

STA 2111 may terminate (e.g., internally terminate and/or stop sending and/or receiving data according to protocol of) the TE r-TWT SP 2135 so as to and/or after sending non-trigger-based frame 2131. For example, the terminating of TE r-TWT SP 2135 may include terminating (e.g., no longer following) a configuration of STA 2111 according to which STA 2111 waits to receive a trigger frame from AP 2110 before sending data during TE r-TWT SP 2135. For example, STA 2111 may operate according to a rule under which STA 2111 may continue to use contention-based channel access during TE r-TWT SP 2135 after sending the non-trigger-based frame 2131. For example, STA 2111 may send a non-trigger-based frame 2202 after sending non-trigger-based frame 2131. Frame 2202 may include latency sensitive traffic (e.g., associated with the TE r-TWT) and/or non-latency sensitive traffic. AP 2110 may send a BlockAck frame 2204 to STA 2111 in response to frame 2202. This enabling the STA 2111 to send non-trigger-based frame during the TE r-TWT SP 2135 may increase contention and collision on the wireless medium during the TE r-TWT SP 2135. If AP 2110 regains access to the wireless medium (e.g., NAV decrements to zero, as shown by the end of the Non-zero NAV block in FIG. 22), AP 2110 may begin sending trigger frames to member STAs of the TE r-TWT, which may further increase contention and may collide with the transmission of frame 2202 on the wireless medium during the TE r-TWT SP 2135.

In at least some communication systems, a TWT scheduled STA may be configured to not use contention-based channel access during a TE r-TWT SP. For example, the TWT scheduled STA may not use contention-based channel access during the TE r-TWT SP as a default and/or initially during the TE r-TWT SP. For example, a TWT scheduled STA may be configured to wait for a first frame (e.g., a trigger frame) to send a data frame (e.g., a data frame associated with the first frame and/or the TE r-TWT SP. The AP may not and/or may not be able to transmit a first frame (e.g., a trigger frame) during the TE r-TWT SP and/or the STA may not be able and/or may not receive an expected first frame (e.g., a trigger frame). The STA may be configured to be able to use contention-based channel access based on a determination that the AP is unable to send the first frame and/or the STA is unable to receive the first frame. For example, the AP may indicate and/or the STA may receive information indicating a time period after which, and/or outside of which, the STA may use contention-based channel access. For example, the time period may be fixed and/or preprogrammed in a Wi-Fi system (e.g., for a Wi-Fi standard, preprogrammed in the STA and/or AP, etc.) instead of indication by the AP. For example, the STA may be able to use contention-based channel access (e.g., contention-based channel access may be enabled for the STA) on condition of not receiving a frame (e.g., an expected frame, a trigger frame, any frame, etc.) from the AP during the time period. Use of contention-based channel access by the STA during the TE r-TWT SP may cause increased contention and collision on the wireless medium during the TE r-TWT SP. It may be useful to control contention-based channel access by the STA during the TE r-TWT SP.

As described herein, contention-based channel access by a STA may be controlled. For example, contention-based channel access may be controlled by an AP and/or a STA in the context of a TE r-TWT. For example, contention-based channel access may be controlled (e.g., by an AP and/or an STA) after a STA begins sending and/or receiving frames via contention-based channel access in a TE r-TWT SP (e.g., the STA may begin sending and/or receiving frames via contention-based channel access based on not receiving a frame from the AP during a first time period of the TE r-TWT SP). For example, based on a TWT scheduled STA using contention-based channel access during in a TE r-TWT SP, a frame may be sent (e.g., from an AP associated with the TE r-TWT SP) to suspend and/or maintain contention-based channel access by the STA. The frame may any frame and/or any frame except for an immediate response frame. For example, the STA may operate according to instructions and/or rules that cause suspension of contention-based channel access based on receipt of any frame and/or any frame except for an immediate response frame from the AP. Also, or alternatively, the frame may comprise an indication (e.g., explicit signaling and/or instructions and/or one or more parameters associated with when and/or how) to suspend and/or maintain contention-based channel access by the STA (e.g., the frame may be an immediate response frame and/or an EDCA based frame, etc.).

Also, or alternatively, the concepts described herein may allow an AP and/or an STA to control contention-based channel access by the STA in other contexts than during a TWT operation. For example, the concepts described herein may apply to other communication operations and/or protocols in which contention-free channel access by an STA is a default and/or typical setting, but is replaced by contention-based channel access for a communication device (e.g., contention-based channel access has been enabled and/or a default/typical protocol calling for contention-free channel access and/or otherwise restricted channel access has been overridden to enable contention-based channel access). Subsequent control of the contention-based channel access by the STA may be performed as described herein.

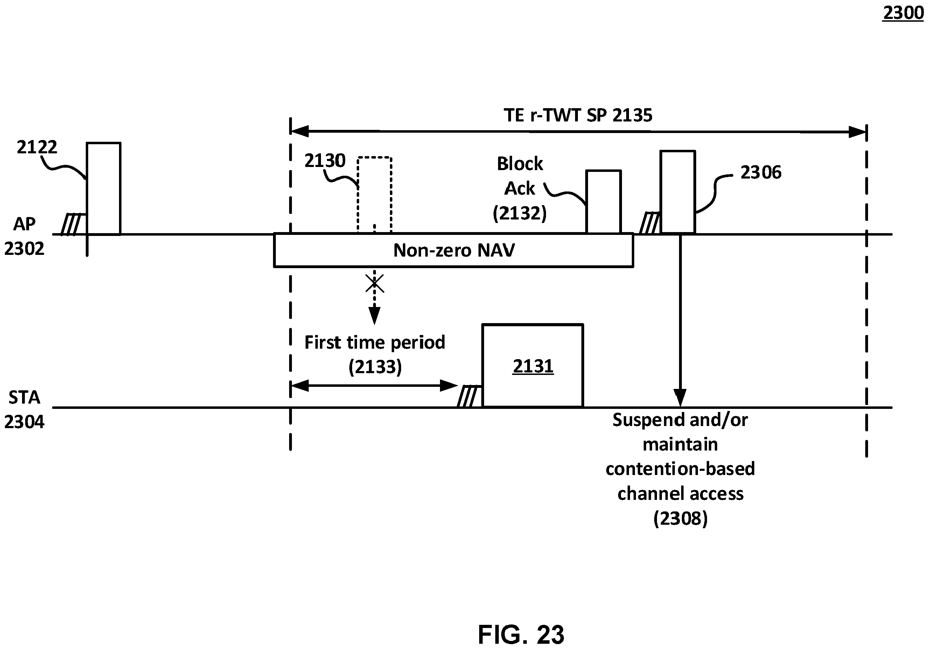

FIG. 23 shows an example 2300 of controlling contention-based channel access in TE r-TWT operation. In example 2300 TE r-TWT operation, data may be sent by a member r-TWT scheduled STA 2304 during the TE r-TWT SP 2135, even if a trigger frame is not able to be sent and/or received. The member r-TWT scheduled STA 2304 may be able to and/or may continue to send data during the TE r-TWT SP 2135 without receiving trigger frames. AP 2302 may be able to send a frame 2306 to control sending of data by STA 2304. For example, receipt of frame 2306 may cause the STA to suspend and/or maintain contention-based channel access 2308 beginning immediately upon receipt of the frame 2306. Also, or alternatively, receipt of frame 2306 may cause the STA to suspend and/or maintain contention-based channel access at a delay (see, e.g., 2506, discussed below).

A TE r-TWT may be setup. STA 2304 may send a TWT setup request frame (e.g., as in FIG. 21, not shown in FIG. 23) to AP 2302 requesting the setup of the TE r-TWT. AP 2302 may send a TWT setup response frame (e.g., as in FIG. 21, not shown in FIG. 23) to STA 2304 accepting the requested TE r-TWT, for example, in response to the TWT setup request frame. The TWT setup request frame and/or the TWT setup response frame may comprise TID bitmaps indicating TIDs corresponding to DL or UL traffic. The DL/LTL traffic indicated in the TID bitmaps may represent DL/UL traffic that may be sent during SPs of the TE r-TWT. The STA 2304 may be a member r-TWT scheduled STA of the TE r-TWT based on the set up TE r-TWT. The AP 2302 may send a beacon frame 2122 comprising a TWT element indicating scheduling information of a TE r-TWT SP 2135 of the setup TE r-TWT. The scheduling information may indicate a start time and an end time of the TE r-TWT SP 2135.

The AP 2302 may be expected (e.g., by the STA 2304) to send a trigger frame to the STA 2304 at the start of the TE r-TWT SP 2135 (e.g., during a first time period 2133 of the TE r-TWT SP 2135). The trigger frame may be configured to trigger member r-TWT scheduled STA 2304 to send latency sensitive traffic during TE r-TWT SP 2135. AP 2302 may not be able to send a trigger frame 2130 at the start of TE r-TWT SP 2135 and/or STA 2304 may not be able to receive a trigger frame 2130. For example, AP 2302 may not be able to send trigger frame 2130 based on a carrier sensing indicating a busy medium. For example, a NAV value of AP 2302 may be a non-zero value at the start of TE r-TWT SP 2135.

STA 2304 may be configured to determine whether the wireless medium is used (e.g., by AP 2302) during a first time period 2133 of TE r-TWT SP 2135. The first time period 2133 may start at the beginning of the TE r-TWT SP 2135. A length of first time period 2133 may be determined according to, for example, one or more of the options described with respect to FIG. 16. Also, or alternatively, the first time period may have a fixed value (e.g., one symbol duration (e.g., 4 us or 16us), 1 us, 2 us, etc.) in the Wi-Fi system (e.g., fixed and/or preprogrammed in a Wi-Fi system, such as for a Wi-Fi standard, preprogrammed in the STA and/or AP, etc.). The length of first time period 2133 may be signaled by a frame (e.g., frame 2121 or frame 2122) sent by AP 2302. The length of the first time period 2133 may be signaled by a frame (e.g., frame 2120) sent by STA 2304. STA 2304 may be configured to send and/or be able to send a non-trigger-based frame on the wireless medium following first time period 2133 based on determining that the wireless medium is not used by AP 2302 during first time period 2133. The non-trigger-based frame may be sent using a contention-based channel access scheme. The contention-based channel access scheme may be a distributed coordination function (DCF) scheme, an enhanced distributed channel access (EDCA) scheme, or a listen before talk (LBT) scheme.

STA 2304 may be configured to determine that the wireless medium is not used during first time period 2133 based on not receiving a frame from AP 2302 during first time period 2133. STA 2304 may determine that the wireless medium is not used if no frame in accordance with the IEEE 802.11 standard is received from AP 2302. Also, or alternatively, STA 2304 may determine that the wireless medium is not used if no trigger frame is received from AP 2302. The trigger frame may or may not be a trigger frame that schedules STA 2304 for uplink transmission. Also, or alternatively, STA 2304 may determine that the wireless medium is not used if no data frame is received, no control frame is received, no management frame is received, or no action frame is received from AP 2302. STA 2111 may determine that the wireless medium is not used if no frame except for an immediate response frame is received from AP 2110. The immediate response frame, received during first time period 2133, may or may not be addressed to and/or intended for receipt by STA 2111. STA 2304 may determine that the wireless medium is not used based on not receiving frame 2130 from AP 2302 during first time period 2133. STA 2304 may send a non-trigger-based frame 2131 on the wireless medium following first time period 2133 of TE r-TWT SP 2135 based on the determination that the wireless medium was not used during the first time period 2133 (e.g., based on the determination that no frame and/or no trigger frame was sent by the AP 2302 during the first time period). Frame 2131 may include latency sensitive traffic (associated with the TE r-TWT) and/or non-latency sensitive traffic. AP 2302 may send a BlockAck frame 2132 to STA 2304 after or in response to frame 2131.

STA 2304 may terminate (e.g., internally terminate and/or stop sending and/or receiving data according to) TE r-TWT SP 2135 so as to and/or after sending non-trigger-based frame 2131. The terminating of TE r-TWT SP 2135 may include terminating (e.g., no longer following) a configuration at STA 2304 according to which STA 2304 should wait to receive a trigger frame from AP 2302 before sending during TE r-TWT SP 2135. As such, STA 2304 may operate according to a rule under which STA 2304 may continue to use contention-based channel access during TE r-TWT SP 2135 after sending non-trigger-based frame 2131.

STA 2304 may be configured to suspend contention-based channel access upon receiving a frame from AP 2302 after sending non-trigger-based frame 2131. Contention-based channel access may be suspended if the frame is received from AP 2302 within a predetermined period after sending the non-trigger-based frame in step 3214 (e.g., before a scheduled end of the TE r-TWT SP 2135). Suspending contention-based channel access may comprise deferring (e.g., postponing to a later time, such as until after the scheduled end of the TE r-TWT SP 2135 and/or until other information is received to allow contention-based channel access) and/or stopping contention-based-channel access (e.g., until after the scheduled end of the TE r-TWT SP 2135 and/or until other information is received to allow contention-based channel access).

The frame 2306 received from the AP 2302 (e.g., receipt 2308) may cause suspension of contention-based channel access by the STA 2304 during the TE r-TWT SP 2135. The frame may cause suspension of contention-based channel access by the STA 2304 during the TE r-TWT SP 2135 without explicitly indicating suspension of contention-based channel access by the STA during the TE r-TWT SP2135. For example, the STA 2304 may be configured to suspend contention-based channel access (e.g., during the TE r-TWT SP 2135) based on receipt of a frame 2306 from the AP after determining that contention-based channel access may be used based on not receiving a frame from the AP 2302 during a first time period 2133.

Any frame 2306 (e.g., any frame in accordance with the IEEE 802.11 standard) received from the AP 2302 after the STA 2304 sends the non-trigger-based frame 2131 may cause suspension of contention-based channel access by the STA during the TE r-TWT SP. Also, or alternatively, the frame 2306 may be of one or more specific types of frames, such as a data frame, a control frame, a management frame, and/or an action frame. For example, the frame 2306 may be a trigger frame. The trigger frame may be a buffer status report pull (BSRP) frame. The trigger frame may be a trigger frame that schedules uplink transmission by the STA. For example, the trigger frame may be configured to trigger the STA 2304 to send traffic associated with the TE r-TWT during the TE r-TWT SP 2135. The STA 2304 may send to the AP 2302 a data frame (e.g., a trigger-based frame, not shown in FIG. 23) comprising a TID associated with the TE r-TWT. The trigger frame (e.g., frame 2306) may indicate an extension of the TE r-TWT SP 2135 (e.g., a later end time of the TE r-TWT SP).

The frame 2306 may be a frame other than an immediate response frame (e.g., ACK, BlockAck, multi-STA BlockAck, etc.). For example, an immediate response frame sent by the AP 2302 after the STA 2304 sends the non-trigger-based frame 2131 may not cause suspension of contention-based channel access by the STA 2304 during the TE r-TWT SP 2135. Also, or alternatively, transmission of an immediate response frame addressed to and/or intended for receipt by the STA 2304, after the STA 2304 sends the non-trigger-based frame 2131, may cause suspension of contention-based channel access by the STA 2304 during the TE r-TWT SP 2135.

AP 2302 may suspend contention-based channel access by AP 2304 after and/or in response to receiving the non-trigger-based frame 2131 from AP 2304. AP 2302 may send a frame 2306 that causes suspension of contention-based channel access by STA 2304 (e.g., the STA 2304 may operate by rules that cause suspension of contention-based channel access based on receipt of the frame 2306). The sent frame 2306 may be a frame already queued for transmission by AP 2302 and/or a frame specifically generated and/or selected for transmission to cause suspension of contention-based channel access by STA 2304.

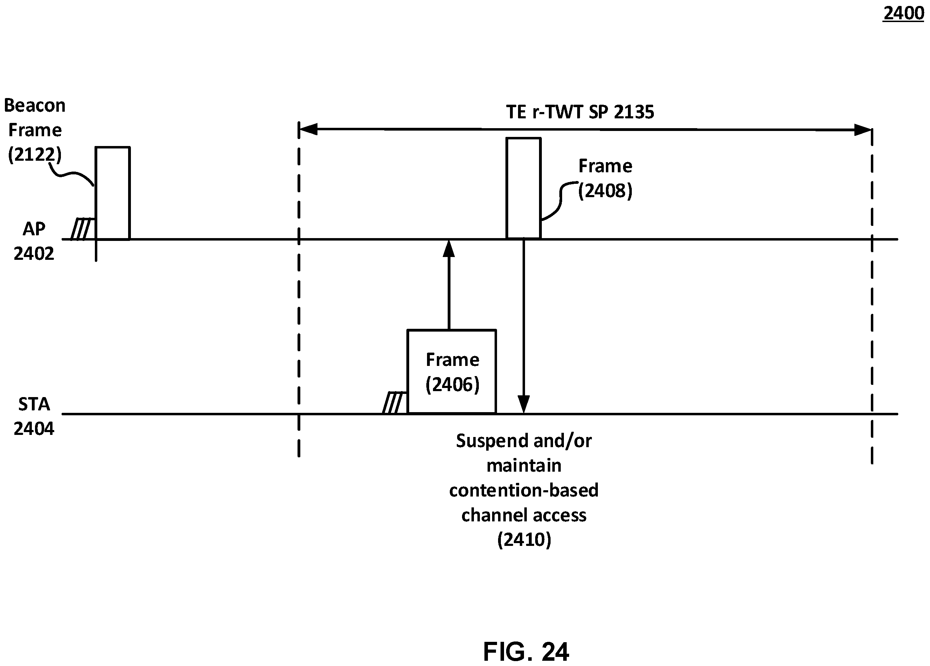

FIG. 24 shows an example 2400 of controlling contention based channel access in TE r-TWT operation. A TE r-TWT may be setup. STA 2404 may send a TWT setup request frame (not shown) to AP 2402 requesting setup of a TE r-TWT. AP 2402 may send a TWT setup response frame (not shown) to STA 2404 accepting the requested TE r-TWT. The TWT setup request frame and/or the TWT setup response frame may comprise TID bitmaps indicating TIDs corresponding to DL or UL traffic. The DL/UL traffic indicated in the TID bitmaps may represent DL/LTL traffic that may be sent during SPs of the TE r-TWT. STA 2404 may be a member r-TWT scheduled STA of the TE r-TWT based on setup of the TE r-TWT (e.g., based on exchanging of the TWT setup request frame and the TWT setup response frame). AP 2402 may send a beacon frame 2122 comprising a TWT element indicating scheduling information of a TE r-TWT SP 2135 of the setup TE r-TWT. The scheduling information may indicate a start time and/or an end time of the TE r-TWT SP 2135.

STA 2404 may be configured to use contention-based channel access to send a frame (e.g., frame 2406) to AP 2404 during TE r-TWT SP 2135 (e.g., based on operation rules of the STA 2404). For example, STA 2404 may be configured to determine whether the wireless medium is used by AP 2402 during a first time period (e.g., as shown in FIGS. 21-23, not shown in FIG. 24) of TE r-TWT SP 2135. The first time period may start at the beginning of TE r-TWT SP 2135. STA 2404 may be configured to send a non-trigger-based frame (e.g., frame 2406) via the wireless medium based on determining that the wireless medium was not used by AP 2402 during the first time period.

STA 2404 may send a non-trigger-based frame 2406 to AP 2402 during TE r-TWT SP 2135. AP 2404 may send a second frame 2408 configured to suspend and/or maintain contention-based channel access by STA 2404 during TE r-TWT SP 2135, for example, based on receipt of the non-trigger-based frame 2406. Second frame 2408 may be a frame that explicitly indicates suspension and/or maintenance of contention-based channel access by STA 2404 during TE r-TWT SP 2135. Second frame 2408 may also, or alternatively, be an immediate response frame (e.g., BlockAck, multi-STA BlockAck, etc.). STA 2404 may suspend and/or maintain contention-based channel access 2410 during TE r-TWT SP 2135 based on second frame 2408., The STA 2404 may immediately suspend contention-based channel access (e.g., as shown as 2410) during TE r-TWT SP 2135 based on the second frame 2408 indicating suspension of contention-based channel access by STA 2404. For example, based on a suspension of contention-based channel access by the STA 2404 during the TE r-TWT SP 2135, the STA 2404 may wait to receive a trigger frame from AP 2402 before sending any further frames via the wireless medium, based on having suspended the contention-based channel access for the remainder of the TE r-TWT SP 2135. Also, or alternatively, the STA 2404 may suspend contention-based channel access for a second time period (not shown) during the TE r-TWT SP 2135 based on receipt of the second frame 2408. Contention-based channel access may be enabled for the STA as described herein (e.g., based on failing to receive a third frame from the AP during the second time period).

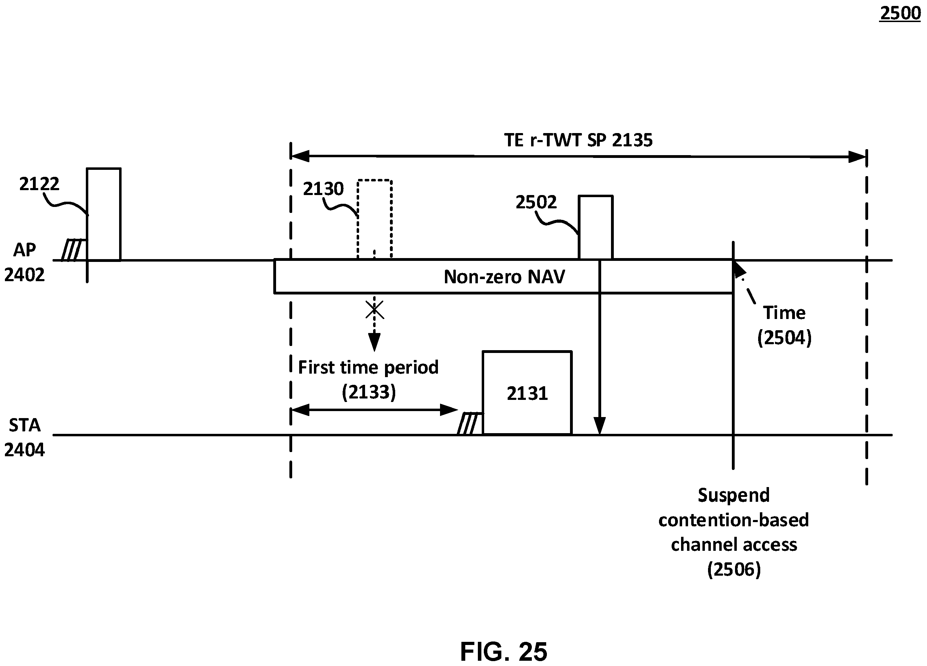

FIG. 25 shows an example 2500 of controlling contention-based channel access in TE r-TWT operation. A TE r-TWT may be setup. STA 2404 may send a TWT setup request frame (e.g., as shown in FIG. 21, not shown in FIG. 25) to AP 2402 requesting the setup of a TE r-TWT. In response, AP 2402 may send a TWT setup response frame (e.g., as shown in FIG. 21, not shown in FIG. 25) to STA 2404 accepting the requested TE r-TWT. The TWT setup request frame and/or the TWT setup response frame may comprise TID bitmaps indicating TIDs corresponding to DL or UL traffic. The DL/UL traffic indicated in the TID bitmaps may represent DL/LTL traffic that may be sent during one or more TE r-TWT SPs of the TE r-TWT. STA 2404 may be a member r-TWT scheduled STA of the TE r-TWT based on setup of the TE r-TWT (e.g., based on exchanging of the TWT setup request frame and the TWT setup response frame). AP 2402 may send a beacon frame 2122 comprising a TWT element indicating scheduling information of a TE r-TWT SP 2135 of the setup TE r-TWT (e.g., based on setup of the TE r-TWT). The scheduling information may indicate a start time and/or an end time of the TE r-TWT SP 2135.

AP 2402 may be expected (e.g., by the STA 2404) to send a trigger frame to STA 2404 at the start of TE r-TWT SP 2135. The trigger frame triggers member r-TWT scheduled STA 2404 to send latency sensitive traffic during TE r-TWT SP 2135. as shown in FIG. 25, AP 2402 may not be able to send a trigger frame 2130 at the start of TE r-TWT SP 2135. For example, AP 2402 may not be able to send trigger frame 2130 based on a carrier sensing indicating a busy medium. For example, a NAV value of AP 2402 may be a non-zero value at the start of TE r-TWT SP 2135.

STA 2404 may be configured to use contention-based channel access to send a frame to AP 2404 during TE r-TWT SP 2135 (e.g., based on operation rules of and/or stored by the STA 2404). For example, STA 2404 may be configured to determine whether the wireless medium is used by AP 2402 during a first time period 2133 of TE r-TWT SP 2135. The first time period 2133 may start at the beginning of TE r-TWT SP 2135. STA 2404 may be configured to send a non-trigger-based frame on the wireless medium following the first time period 2133 based on determining that the wireless medium is not used by AP 2402 during the first time period 2133.

STA 2404 may send a non-trigger-based frame 2131 to AP 2402 during TE r-TWT SP 2135 (e.g., based on the determining that the wireless medium was not used by AP 2402 during the first time period 2133. AP 2404 may send a second frame 2502 configured to suspend or maintain contention-based channel access by STA 2404 during TE r-TWT SP 2135 after and/or in response to receipt of the non-trigger based frame 2131. Second frame 2502 may be a frame that explicitly indicates suspension and/or maintenance of contention-based channel access by STA 2404 during TE r-TWT SP 2135. Second frame 2502 may be an immediate response frame (e.g., BlockAck, multi-STA BlockAck, etc.). STA 2404 may be configured to suspend and/or maintain contention-based channel access during TE r-TWT SP 2135 (e.g., based on second frame 2502).

Second frame 2502 may comprise an indication that contention-based channel access by the STA should be suspended and/or maintained during the TE r-TWT SP. The indication in second frame 2502 may indicate, for example: maintenance of contention-based channel access by the STA during the TE r-TWT SP; immediate suspension of contention-based channel access by the STA during the TE r-TWT SP; and/or delayed suspension of contention-based channel access by the STA during the TE r-TWT SP.

The indication in the second frame 2502 may comprise an indication to suspend (e.g., immediately and/or after a delay) of contention-based channel access by the STA 2404 during the TE r-TWT SP 2135. Immediate suspension of contention-based channel access by the STA 2404 during the TE r-TWT SP 2135 may be indicated in the second frame 2502, for example, based on the NAV value of the AP 2402 being determined to be zero and/or equal to and/or below a threshold. Delayed suspension of contention-based channel access by the STA during the TE r-TWT SP may be indicated in the second frame 2502 based on the NAV value of the AP 2402 being above and/or or equal to a threshold.

AP 2402 may determine that suspension of contention-based channel access 2506 by the STA 2404 start a specific time 2504 (e.g., not immediately with receipt and/or processing of the frame 2502) and/or based on one or more conditions being met (e.g., based on the NAV of AP 2402 satisfying a criteria, such as being below a threshold). The decision by AP 2402 may be based on the NAV of AP 2402 being above a threshold at the time of transmission of second frame 2502. The indication in second frame 2502 may thus indicate delayed suspension of contention-based channel access by STA 2404 during TE r-TWT SP 2135 (e.g., to a particular time and/or when one or more conditions are satisfied, such as when the NAV of AP 2402 drops below the threshold). The second frame 2502 may, for example, comprise an indication of a start time of suspension of contention-based channel access by the STA 2404. The start time of suspension of contention-based channel access by STA 2404 may be based on (e.g., determined to begin at a time with respect to) and/or equal to the time 2504. The start time of suspension of contention-based channel access by the STA 2404 may be set to N least significant bytes (LSB) of a timing synchronization function (TSF) timer (e.g., N=1, 2, 3, 4, 5, 6, 7, 8). The start time of suspension of contention-based channel access may be indicated by indicating a time offset from another time. For example, the start time of suspension of contention-based channel access may be indicated as a time offset from a time that STA 2404 receives second frame 2502 from AP 2402 (e.g., a wait time). STA 2404 may set a timer for suspending contention-based channel access based on the start time of suspension of contention-based channel access indicated in second frame 2502.

The second frame 2502 sent by the AP 2402 and comprising the indication to suspend and/or maintain contention-based channel access by the STA during the TE r-TWT SP may be an immediate response frame. The immediate response frame may be, for example, a BlockAck frame. The BlockAck frame may be a compressed BlockAck variant frame.

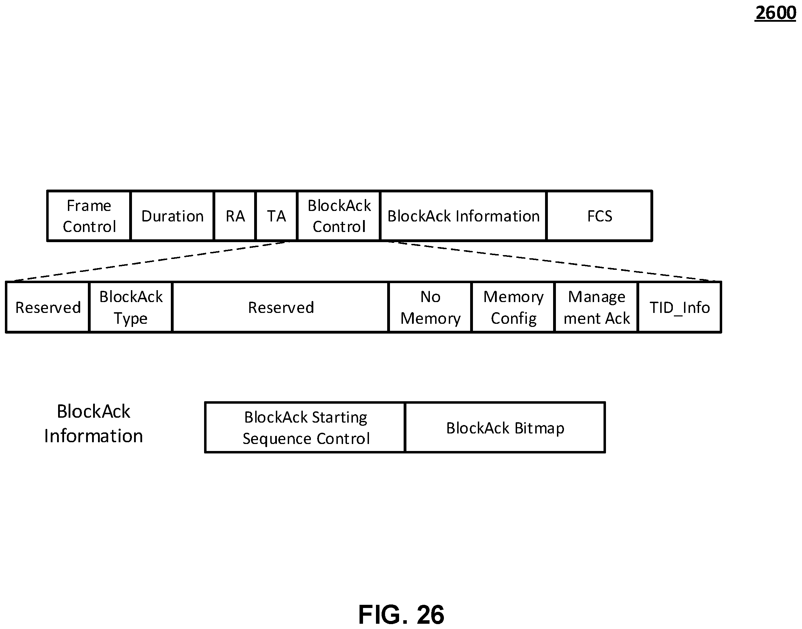

FIG. 26 shows an example format 2600 of a BlockAck frame. Example format 2600 corresponds to a compressed BlockAck (variant) frame as defined in the IEEE 802.11 standard draft "IEEE P802.11-REVme^{™}/D1.2, April 2022." BlockAck frame format 2600 may include one or more of a Frame Control field, a Duration field, a receiver address (RA) field, a transmitter address (TA) field, a BlockAck Control field, a BlockAck Information field, and a Frame Check Sequence (FCS) field. The BlockAck Control field may include one or more first Reserved bits, a BlockAck Type subfield, one or more second Reserved bits, a No Memory subfield, a Memory Config subfield, a Management Ack subfield, and/or an TID_Info subfield. The TID_Info subfield of the BlockAck Control field of the compressed BlockAck frame may contain a TID for which the BlockAck frame may be sent. In the compressed BlockAck variant, the BlockAck Information field includes a BlockAck Starting Sequence Control subfield and a BlockAck Bitmap subfield. A Starting Sequence Number subfield (not shown) of the BlockAck Starting Sequence Control subfield contains the sequence number of the first MSDU or A-MSDU for which the BlockAck frame is sent.

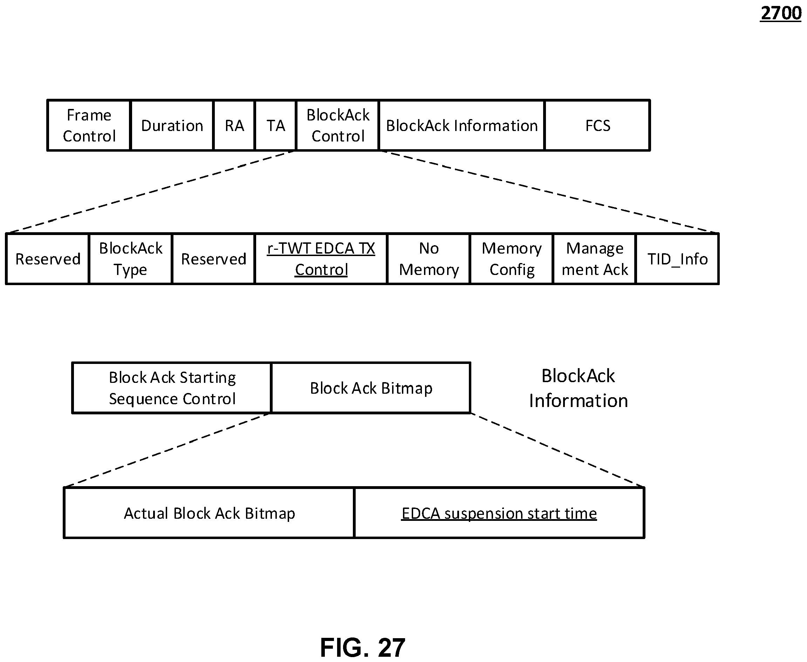

FIG. 27 shows an example format 2700 of a BlockAck frame. Example BlockAck frame format 2700 corresponds to a compressed BlockAck frame that may be used for the frame comprising the indication to suspend or maintain contention-based channel access by the STA during the TE r-TWT SP. BlockAck frame format 2700 may include one or more of the same fields as BlockAck frame format 2600, namely a Frame Control field, a Duration field, a RA field, a TA field, a BlockAck Control field, a BlockAck Information field, and/or an FCS field. The BlockAck Control field of BlockAck frame format 2700 may differ from the BlockAck Control field of BlockAck frame format 2600, for example, by including a r-TWT EDCA TX Control subfield.

The r-TWT EDCA TX Control subfield may allow for indicating whether and/or for how long to suspend contention-based channel access. For example, one or more bits of the second Reserved bits of BlockAck frame format 2600 may be used to provide the r-TWT EDCA TX Control subfield. The r-TWT EDCA TX Control subfield may be 1-bit long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate suspension of contention-based channel access by the STA during the TE r-TWT SP. The r-TWT EDCA TX Control subfield may be 2-bits long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate immediate suspension of contention-based channel access by the STA during the TE r-TWT SP. A third value (e.g., 2) of the r-TWT EDCA TX Control subfield may indicate delayed suspension of contention-based channel access by the STA during the TE r-TWT SP.

The BlockAck frame may comprise an indication of a suspension start time. For example, the BlockAck Information field may further comprise an EDCA suspension start time subfield. For example, the EDCA suspension start time subfield may be included and/or used based on the r-TWT EDCA TX Control subfield being set to a value (e.g., the third value) indicating delayed suspension of contention-based channel access by the STA during the TE r-TWT SP. The BlockAck Bitmap subfield of the BlockAck Information field may comprise an EDCA suspension start time subfield, in addition to an Actual BlockAck Bitmap subfield which corresponds to the existing BlockAck Bitmap subfield, for example, as shown in FIG. 26. The location of the EDCA suspension start time subfield within the BlockAck Bitmap subfield may vary. For example, the EDCA suspension start time subfield may be located in the beginning of the BlockAck Bitmap subfield, in the middle of the BlockAck Bitmap subfield, and/or at the end of the BlockAck Bitmap subfield as shown in FIG. 27. Also, or alternatively, the BlockAck frame may further comprise an indication of a suspension duration and/or end time. For example, the BlockAck Information field may further comprise an EDCA suspension duration subfield. The EDCA suspension may start at the time indicated in the EDCA suspension start time subfield and end at and/or after the time indicated in the EDCA suspension duration has passed from the start time.

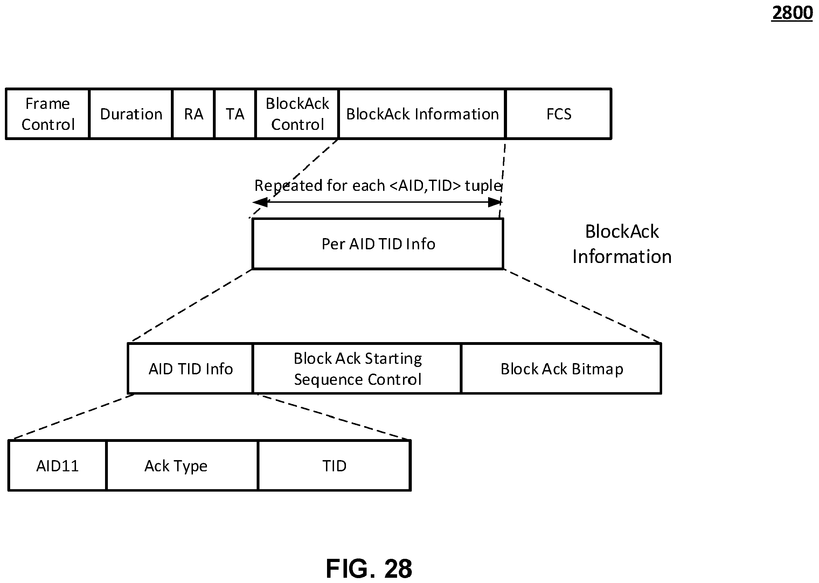

FIG. 28 shows an example format 2800 of a multi-STA BlockAck frame. The immediate response frame may be a multi-STA BlockAck frame. Example format 2800 corresponds to a multi-STA BlockAck frame as defined in the IEEE 802.11 standard draft "IEEE P802.11-REVme^{™}/D1.2, April 2022." The multi-STA BlockAck frame is supported if either UL multi-user (MU) or multi-TID A-MPDU operation is supported. The multi-STA BlockAck frame acknowledges MPDUs carried in an HE TB PPDU or multi-STA multi-TID, multi-STA single-TID, or single-STA multi-TID A-MPDUs. As shown in FIG. 28, multi-STA BlockAck frame format 2800 may include a Frame Control field, a Duration field, a RA field, a TA field, a BlockAck Control field, a BlockAck Information field, and an FCS field. The BlockAck Information field includes one or more Per AID TID Info fields.

An AP (e.g., a high-efficiency (HE) AP) may be configured to send a multi-STA BlockAck frame in which the Per AID TID Info fields are addressed to more than one STA. The AP may be configured to set the RA field to the broadcast address. The AP that sends a multi-STA BlockAck frame in which the Per AID TID Info fields are all addressed to a single recipient STA (e.g., in response to a HE TB PPDU) may be configured to set the RA field of the multi-STA BlockAck frame to either the address of the recipient STA and/or to the broadcast address. The AP that sends a multi-STA BlockAck frame, in which the Per AID TID Info fields are addressed to a single recipient STA and that is not sent in response to an HE TB PPDU, may be configured to set the RA field of the multi-STA BlockAck frame to the address of the recipient STA. A non-AP STA (e.g., a non-AP HE STA) may be configured to set the RA field to the TA field of the soliciting frame or to the address of the recipient STA whose Data or Management frames are acknowledged.

The BlockAck Control field may include includes one or more first Reserved bits, a BlockAck Type subfield, one or more second Reserved bits, a No Memory subfield, a Memory Config subfield, a Management Ack subfield, and/or a TID_Info subfield (not shown in FIG. 28). The BlockAck Information field of the multi-STA BlockAck frame may comprises one or more Per AID TID Info fields. The format of the Per AID TID Info field may depend and/or be based on the value of an AID11 subfield of an AID TID Info field of the Per AID TID Info field. For example, the Per AID TID Info field may include an AID TID Info subfield, a BlockAck Starting Sequence Control subfield, and a BlockAck Bitmap subfield, based on the value of the AID11 subfield indicating anything other than an unassociated STA (e.g., indicating a value other than 2045, which is used as an identifier for any unassociated STA.

An AID TID Info subfield may include the AID11 subfield, an Ack Type subfield, and/or a TID subfield. The AID11 subfield may carries the 11 LSBs of the AID of the non-AP STA for which the Per AID TID Info subfield is intended. The AID11 subfield may be set to 0 based on the multi-STA BlockAck frame being addressed and/or intended to be sent to an AP. A value of 2045 in the AID11 subfield may be used as an identifier for any unassociated STA. The Ack Type subfield and TID subfield may be set to 0 and 15, respectively, based on the AID11 subfield being set to 2045, or otherwise being addressed to and/or intended for an unassociated STA.

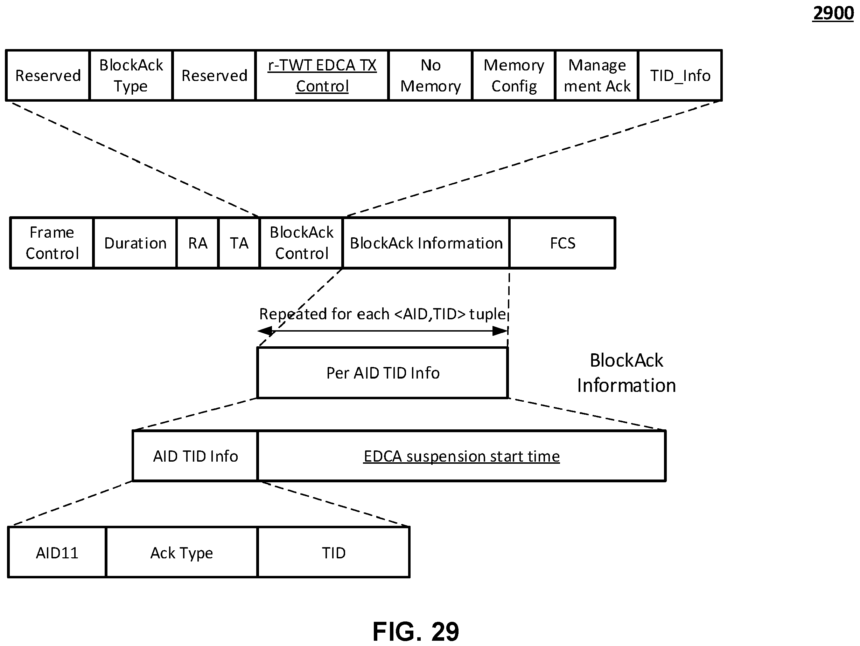

FIG. 29 shows an example format 2900 of a multi-STA BlockAck frame. Example BlockAck frame format 2900 corresponds to a multi-STA BlockAck frame that may comprise the indication to suspend or maintain contention-based channel access by the STA during the TE r-TWT SP. BlockAck frame format 2900 may include same fields as BlockAck frame format 2800, namely a Frame Control field, a Duration field, a RA field, a TA field, a BlockAck Control field, a BlockAck Information field, and/or an FCS field.

The BlockAck Control field of multi-STA BlockAck frame format 2900 may comprise an r-TWT EDCA TX Control subfield. For example, one or more bits of the one or more second Reserved bits of BlockAck frame format 2800 may be used to provide the r-TWT EDCA TX Control subfield. The r-TWT EDCA TX Control subfield may be 1-bit long, for example. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate suspension of contention-based channel access by the STA during the TE r-TWT SP. The r-TWT EDCA TX Control subfield may be 2-bit long, for example. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate immediate suspension of contention-based channel access by the STA during the TE r-TWT SP. A third value (e.g., 2) of the r-TWT EDCA TX Control subfield may indicate delayed suspension of contention-based channel access by the STA during the TE r-TWT SP.

The multi-STA BlockAck frame format may comprise a field for providing an EDCA suspension start time. For example, the BlockAck Information field may comprise an EDCA suspension start time subfield. The BlockAck Information field may include (e.g., in addition to any other per AID TID Info fields provided for each AID, TID tuple) a Per AID TID Info field comprising an EDCA suspension start time subfield. The Per AID TID Info field comprising the EDCA suspension start time subfield may have an AID1 1 subfield set to the AID of the STA for which contention-based channel access is meant to be suspended. The Ack Type subfield of the Per AID TID Info field may be set to 0. The TID subfield of the Per AID TID Info field may be set to a specific value (e.g., 14).

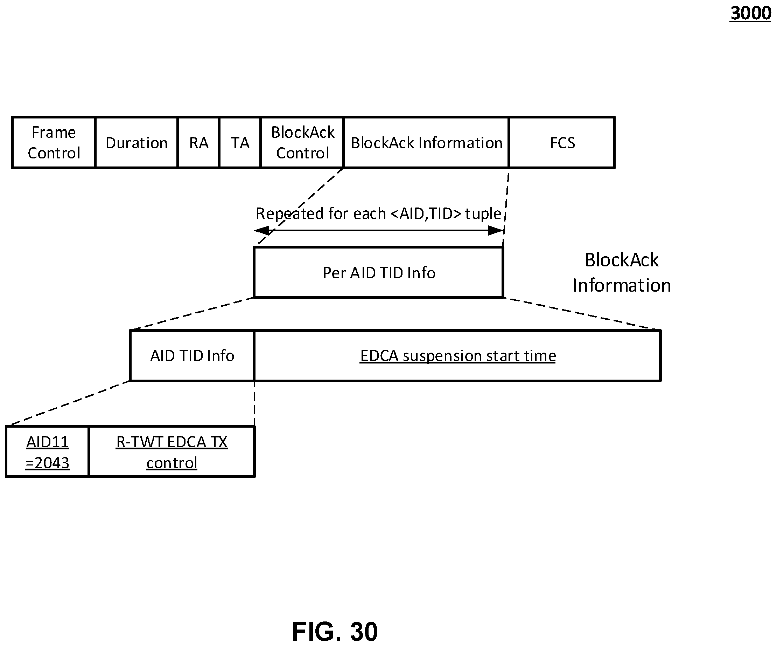

FIG. 30 shows an example format 3000 of a multi-STA BlockAck frame. Example BlockAck frame format 3000 may corresponds to a multi-STA BlockAck frame that may comprise the indication to suspend or maintain contention-based channel access by the STA during the TE r-TWT SP. As shown in FIG. 30, BlockAck frame format 3000 may include some and/or all of same fields as BlockAck frame format 2900, namely a Frame Control field, a Duration field, a RA field, a TA field, a BlockAck Control field, a BlockAck Information field, and/or an FCS field.

The BlockAck Information field of multi-STA BlockAck frame format 3000 may comprise a r-TWT EDCA TX Control subfield. As shown in FIG. 30, the BlockAck Information field may comprise (e.g., in addition to any other per AID TID Info fields provided for each AID, TID tuple) a Per AID TID Info field comprising an r-TWT EDCA TX Control subfield. The r-TWT EDCA TX Control subfield may be provided in an AID TID Info subfield of the Per AID TID Info field. The Per AID TID Info field comprising the r-TWT EDCA TX Control subfield may have an AID 11 subfield set to a specific value (e.g., 2043). The specific value may be a value that indicates that the per AID TID Info subfield includes an r-TWT EDCA TX Control subfield. The RA field may be set to the address of one or more specific intended recipient STAs (e.g., the STA intended by the r-TWT EDCA TX Control subfield). The r-TWT EDCA TX Control subfield may be 1-bit long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate suspension of contention-based channel access by the STA during the TE r-TWT SP. The r-TWT EDCA TX Control subfield may be 2-bit long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate immediate suspension of contention-based channel access by the STA during the TE r-TWT SP. A third value (e.g., 2) of the r-TWT EDCA TX Control subfield may indicate delayed suspension of contention-based channel access by the STA during the TE r-TWT SP. The Per AID TID Info field with the specific AID11 value (e.g., 2043) may further include an EDCA suspension start time subfield based on the r-TWT EDCA TX Control subfield indicating delayed suspension of contention-based channel access, for example (e.g., if the r-TWT EDCA TX Control subfield is set to the third value indicating delayed suspension of contention-based channel access by the STA during the TE r-TWT SP).

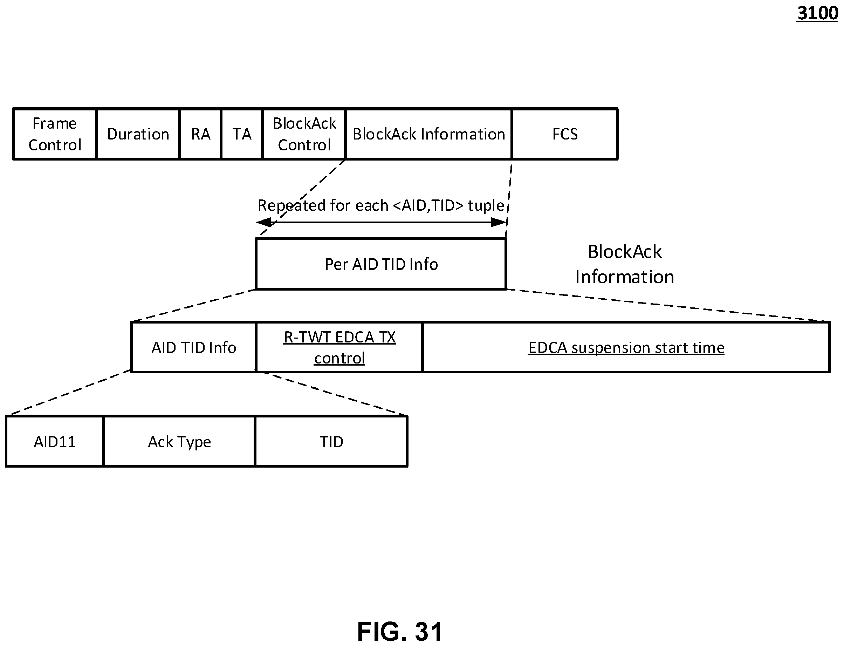

FIG. 31 shows an example format 3100 of a multi-STA BlockAck frame. Example BlockAck frame format 3100 corresponds to a multi-STA BlockAck frame that may be used for the frame comprising the indication to suspend or maintain contention-based channel access by the STA during the TE r-TWT SP. BlockAck frame format 3100 may include one or more of a Frame Control field, a Duration field, a RA field, a TA field, a BlockAck Control field, a BlockAck Information field, and/or an FCS field.

The BlockAck Information may include one or more Per AID TID Info fields. A Per AID TID Info field may include an AID TID Info subfield. The AID TID Info subfield may include an AID 11 subfield, an Ack Type subfield, and/or a TID subfield. The AID 11 subfield may be set to the AID of the intended STA, the Ack Type subfield may be set to 0, and the TID subfield may be set to a specific value (e.g., 14), so as to indicate a presence of an r-TWT EDCA TX Control subfield. The Per AID TID Info field may include an r-TWT EDCA TX Control subfield (e.g., after the AID TID Info subfield).

The r-TWT EDCA TX Control subfield may be 1-bit long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate suspension of contention-based channel access by the STA during the TE r-TWT SP. The r-TWT EDCA TX Control subfield may be 2-bit long. A first value (e.g., 0) of the r-TWT EDCA TX Control subfield may indicate maintenance of contention-based channel access by the STA during the TE r-TWT SP. A second value (e.g., 1) of the r-TWT EDCA TX Control subfield may indicate immediate suspension of contention-based channel access by the STA during the TE r-TWT SP. A third value (e.g., 2) of the r-TWT EDCA TX Control subfield may indicate delayed suspension of contention-based channel access by the STA during the TE r-TWT SP. The Per AID TID Info field (with the Ack Type set to 0 and the TID set to the specific value) may further include an EDCA suspension start time subfield, for example, based on the r-TWT EDCA TX Control subfield, or another part of the multi-STA BlockAck frame format, indicating delayed suspension (e.g., if the r-TWT EDCA TX Control subfield is set to the third value indicating delayed suspension of contention-based channel access by the STA during the TE r-TWT SP).

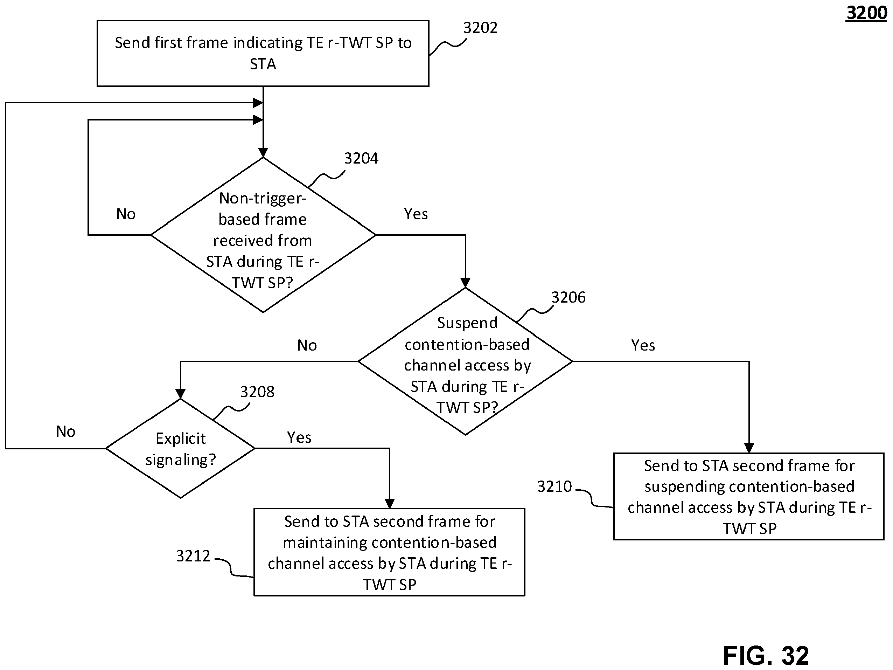

FIG. 32 shows an example 3200 of controlling contention-based channel access. The controlling contention-based channel access 3200 may be performed by an AP, for example. In step 3203, a first frame indicating a TE r-TWT SP may be sent to a STA. The STA may be an STA that is associated with the AP. The TE r-TWT SP may be associated with a TE r-TWT setup by the AP for the STA. For example, the AP and the STA may exchange TWT setup frames to setup the TE r-TWT, and the first frame indicating the TE r-TWT SP may be sent based on the setup TE r-TWT. For example, the AP may receive from the STA a TWT setup request frame requesting the setup of the TE r-TWT. The AP may send a TWT setup response frame, for example, in response to receiving the TWT setup request. The TWT setup response may accept the requested TE r-TWT. The TE r-TWT may have associated therewith one or more TIDs. The one or more TIDs may be associated with latency-sensitive traffic of the STA and/or the AP. The first frame may be a beacon frame, for example. The first frame may indicate a start time and/or an end time of the TE r-TWT SP.

In step 3204, a determination may be made as to whether a non-trigger-based frame has been received from the STA after the start time of the TE r-TWT SP. The determination may be made that the STA sent the non-trigger-based frame after the start time of the TE r-TWT SP. The non-trigger-based frame may be a frame sent by the STA without being triggered (e.g., without the STA receiving a trigger frame from the AP and/or without the AP having sent a trigger frame). The non-trigger-based frame may be a frame sent using contention-based channel access. The contention-based channel access may be based on a distributed coordination function (DCF) scheme, an enhanced distributed channel access (EDCA) scheme, and/or a listen before talk (LBT) scheme, for example. The non-trigger-based frame may comprise a data frame, a control frame, a management frame, an action frame, and/or a QoS null frame.

A determination may be made again (e.g., repeatedly and/or periodically after expiration of a timer) as to whether a non-trigger-based frame has been received based on an initial determination that a non-trigger based frame was not received (step 3204 - no). If it is determined that a non-trigger based frame has been received (step 3204 - yes) a determination may be made in step 3206 as to whether to suspend contention-based channel access by the STA during the TE r-TWT SP. The AP may determine whether to suspend contention-based channel access by the STA during the TE r-TWT SP based on one or more of: a NAV value at the AP, a presence and/or absence of traffic associated with the TE r-TWT at the STA (e.g., data, of the STA, associated with the TE r-TWT), queue size information of traffic associated with the TE r-TWT at the STA, a number of member STAs of the TE r-TWT, and/or a number of non-trigger-based frames received during the TE r-TWT SP from the STA.

The AP may determine a NAV value at the AP based on receiving the non-trigger-based frame. The AP may determine not to suspend contention-based channel access by the STA during the TE r-TWT SP based on the NAV value satisfying a criteria, such as being higher than and/or equal to a threshold. The AP may determine to suspend contention-based channel access by the STA during the TE r-TWT SP based on the NAV value not satisfying the criteria and/or satisfying a different criteria (e.g., being lower than and/or equal to the threshold).

The AP may determine whether or not the STA has data associated with the TE r-TWT (e.g., determine the presence and/or absence of traffic, associated with the TE r-TWT, at the STA) based on receiving the non-trigger-based frame. The AP may determine not to suspend contention-based channel access by the STA during the TE r-TWT SP based on determining the STA has data associated with the TE r-TWT (e.g., to send). The AP may determine to suspend contention-based channel access by the STA during the TE r-TWT SP based on the AP determining the STA does not have data associated with the TE r-TWT.

The AP may determine a queue size of traffic, associated with the TE r-TWT, at the STA based on receiving the non-trigger-based frame. The AP may determine not to suspend contention-based channel access by the STA during the TE r-TWT SP based on determining that the queue size of traffic associated with the TE r-TWT at the STA satisfies a criteria (e.g., is higher than and/or equal to a threshold). The AP may determine to suspend contention-based channel access by the STA during the TE r-TWT SP based on determining that the queue size of traffic associated with the TE r-TWT at the STA does not satisfy the criteria and/or satisfies a different criteria (e.g., is lower than and/or equal to the threshold).

The AP may determine a number of member STAs of the TE r-TWT based on receiving the non-trigger-based frame. The AP may determine not to suspend contention-based channel access by the STA during the TE r-TWT SP based on the number of member STAs associated with the TE r-TWT satisfying a criteria (e.g., being lower than and/or equal to a threshold). The AP may determine to suspend contention-based channel access by the STA during the TE r-TWT SP based on the number of member STAs associated with the TE r-TWT not satisfying the criteria and/or satisfying a different criteria (e.g., being higher than and/or equal to the threshold.

The AP may determine a number of non-trigger-based frames received during the TE r-TWT SP from one or more member STAs of the TE r-TWT SP. The AP may determine not to suspend contention-based channel access by the STA during the TE r-TWT SP based on the number of non-trigger-based frames received satisfying a criteria (e.g., being lower than and/or equal to a threshold). The AP may determine to suspend contention-based channel access by the STA during the TE r-TWT SP based on the number of non-trigger-based frames received not satisfying the criteria and/or satisfying a different criteria (e.g., being higher than and/or equal to the threshold).

In step 3210, a second frame may be sent to the STA to suspend contention-based channel access by the STA during the TE r-TWT SP based on a determination to suspend contention-based channel access by the STA during the TE r-TWT SP (step 3206 - yes). The second frame may be a frame configured to cause suspension of contention-based channel access by the STA during the TE r-TWT SP, for example, according to operation rules of the STA. The second frame may be configured to cause suspension of contention-based channel access by the STA during the TE r-TWT SP without explicitly indicating suspension of contention-based channel access by the STA during the TE r-TWT SP.

The second frame may be any frame in accordance with the IEEE 802.11 standard. Any frame received by the STA from the AP, after the STA sent the non-trigger-based frame, may be interpreted by the STA as suspending contention-based channel access by the STA during the TE r-TWT SP (e.g., based on instructions and/or rules store by the STA). For example, the second frame may include a data frame, a control frame, a management frame, and/or an action frame. For example, the second frame may be a trigger frame. The trigger frame may be a buffer status report pull (BSRP) frame. The trigger frame may be a trigger frame configured to schedules uplink transmission by the STA. For example, the trigger frame may be configured to trigger the STA to send traffic associated with the TE r-TWT during the TE r-TWT SP. In response to receiving the trigger frame, the STA may send, to the AP, a data frame (e.g., a trigger-based frame) comprising a TID associated with the TE r-TWT. The trigger frame may indicate a modification of the TE r-TWT SP (e.g., a later end time and/or an earlier end time of the TE r-TWT SP, relative to an originally scheduled end time of the TE r-TWT SP).

An immediate response frame (e.g., ACK, BlockAck, multi-STA BlockAck) may not serve as the second frame. The mere sending by the AP of an immediate response frame, and/or receipt by the STA of an immediate response frame, after the STA sends the non-trigger-based frame may not cause suspension of contention-based channel access by the STA during the TE r-TWT SP. Excluding an immediate response frame as a second frame that may suspend and/or maintain the TE r-TWT SP may avoid a problem that immediate response frames may be sent even for an AP having a non-zero NAV value. The AP may still be unable to send a trigger frame for traffic associated with the TE r-TWT even when it is able to send an immediate response frame, so it may still be useful and/or important to allow contention-based channel STA so that the medium is not wasted and/or latency sensitive data is able to be sent. Suspending contention-based channel access by the STA during the TE r-TWT SP may result in the medium being unused if the AP still cannot send trigger frames.

The second frame may be a frame that explicitly indicates suspension of contention-based channel access by the STA during the TE r-TWT SP. The second frame may be an immediate response frame. The second frame may comprise an indication configured to suspend and/or maintain contention-based channel access by the STA during the TE r-TWT SP. The second frame may indicate, for example: maintenance of contention-based channel access by the STA during the TE r-TWT SP; immediate suspension of contention-based channel access by the STA during the TE r-TWT SP; and/or delayed suspension of contention-based channel access by the STA during the TE r-TWT SP.

The second frame may indicate immediate suspension of contention-based channel access by the STA during the TE r-TWT SP and/or delayed suspension of contention-based channel access by the STA during the TE r-TWT SP. Immediate suspension of contention-based channel access by the STA during the TE r-TWT SP may be indicated in the second frame based on a determination that the NAV value of the AP is zero and/or below and/or equal to a threshold. Delayed suspension of contention-based channel access by the STA during the TE r-TWT SP may be indicated in the second frame based on a determination that the NAV value of the AP is above and/or equal to a threshold.

The second frame may also, or alternatively, comprise an indication of a start time of suspension of contention-based channel access by the STA (e.g., based on the second frame indicating delayed suspension of contention-based channel access by the STA during the TE r-TWT SP). The start time of suspension of contention-based channel access by the STA may be based on the value of the NAV at the AP. For example, the start time of suspension of contention-based channel access by the STA may be set based on the time that the NAV at the AP is anticipated to reach down to zero.

In step 3210, the AP may determine whether the second frame should cause suspension of contention-based channel access by the STA during the TE r-TWT SP via implicit and/or explicit signaling. The AP may determine based on, for example, one or more of: whether the STA is configured (e.g., programmed) to accept and/or respond to implicit and/or explicit signaling for suspension; whether the AP has a frame, queued to send to the STA, that would (e.g., implicitly) cause suspension of contention-based channel access by the STA during the TE r-TWT SP (e.g., receipt of the frame causes suspension of contention-based channel access by the STA during the TE r-TWT SP); whether the AP determines to cause a delayed suspension of contention-based channel access by the STA during the TE r-TWT SP (e.g., explicit signaling may be used if delayed suspension is determined to be used), and/or whether a remaining time of the TE r-TWT SP is above and/or below a threshold.

In step 3208, a determination may be made as to whether to explicitly signal to the AP maintenance (e.g., allowing continued use) of contention-based channel access by the STA during the TE r-TWT SP based on the AP determining that contention-based channel access by the STA during the TE r-TWT SP should be maintained (step 3206 - no). The determination by the AP may be based on, for example, one or more of: whether the STA is configured (e.g., programmed) to accept and/or respond to implicit and/or explicit signaling for maintenance; whether the AP has a frame queued for transmission to the STA that may be used to carry explicit signaling of maintenance of contention-based channel access by the STA during the TE r-TWT SP; whether the AP determines that frame transmission that would cause suspension of contention-based channel access by the STA during the TE r-TWT SP, whether the NAV at the AP has a value that satisfies a criteria (e.g., is above a threshold); and/or whether a remaining time of the TE r-TWT SP being satisfies a criteria (e.g., is above and/or below a threshold).

The AP may determine implicit signaling should be used, and/or explicit signaling should not be used, for maintenance of contention-based channel access by the STA during the TE r-TWT SP (step 3208 - no). The AP may return to determining whether a non-trigger-based frame was received from the STA, as in step 3204. The AP may or may not send a frame that is not configured to cause suspension of contention-based channel access by the STA during the TE r-TWT SP. For example, the AP may send an immediate response frame, which may be interpreted by the STA as a frame that does not cause suspension of contention-based channel access by the STA during the TE r-TWT SP.

The AP may determine that explicit signaling should be used for maintenance of contention-based channel access by the STA during the TE r-TWT SP (step 3208 - yes). In step 3212, a second frame for maintaining contention-based channel access by the STA during the TE r-TWT SP may be sent to the STA based on the determination that explicit signaling should be used (step 3208 - yes). The second frame may be, for example, an immediate response frame. The second frame may comprise an indication to suspend and/or maintain contention-based channel access by the STA during the TE r-TWT SP. The second frame may indicate: maintenance of contention-based channel access by the STA during the TE r-TWT SP. The AP may set an indication in the second frame (e.g., select, modify, etc., one or more data fields in the second frame) to maintain contention-based channel access by the STA during the TE r-TWT SP.

The second frame comprising the indication to suspend and/or maintain contention-based channel access by the STA during the TE r-TWT SP (e.g., in steps 3210 and/or 3212) may be an immediate response frame. The second frame comprising the indication to suspend and/or maintain contention-based channel access by the STA during the TE r-TWT SP may be a BlockAck frame. The BlockAck frame may be a compressed BlockAck frame. The indication to suspend and/or maintain contention-based channel access by the STA during the TE r-TWT SP may be provided in a BlockAck Control field of the compressed BlockAck frame. The indication to suspend and/or maintain contention-based channel access by the STA during the TE r-TWT SP may be provided in a r-TWT EDCA TX Control subfield of the BlockAck Control field of the compressed BlockAck frame. The indication in the second frame indicates delayed suspension of contention-based channel access by the STA during the TE r-TWT SP, the indication of the start time of suspension of contention-based channel access by the STA may be provided in a BlockAck Information field of the compressed BlockAck frame. The indication of the start time of suspension of contention-based channel access by the STA may be provided, for example, in a BlockAck Bitmap subfield of the BlockAck Information field of the compressed BlockAck frame.

The second frame comprising the indication to suspend /or maintain contention-based channel access by the STA during the TE r-TWT SP (e.g., in steps 3210 and/or 3212) may be a multi-STA BlockAck frame. The indication to suspend and/or maintain contention-based channel access by the STA during the TE r-TWT SP may be provided in a BlockAck Information field of the multi-STA BlockAck frame. The indication to suspend and/or maintain contention-based channel access by the STA during the TE r-TWT SP may be provided in a Per AID TID Info field of the BlockAck Information field of the multi-STA BlockAck frame. An AID 11 subfield of the Per AID TID Info field may be set to a predefined value (e.g., 2043). The indication to suspend and/or maintain contention-based channel access by the STA during the TE r-TWT SP may be provided in a r-TWT EDCA TX Control subfield of the Per AID TID Info field. The indication to suspend and/or maintain contention-based channel access by the STA during the TE r-TWT SP may be provided in a BlockAck Control field of the multi-STA BlockAck frame. The indication to suspend and/or maintain contention-based channel access by the STA during the TE r-TWT SP may be provided in a r-TWT EDCA TX Control subfield of the BlockAck Control field of the multi-STA BlockAck frame. The indication in the multi-STA BlockAck frame may indicate delayed suspension of contention-based channel access by the STA during the TE r-TWT SP, the indication of the start time of suspension of contention-based channel access by the STA may be provided in the BlockAck Information field of the multi-STA BlockAck frame. The indication of the start time of suspension of contention-based channel access by the STA may be provided in a Per AID TID Info field of the BlockAck Information field of the multi-STA BlockAck frame.

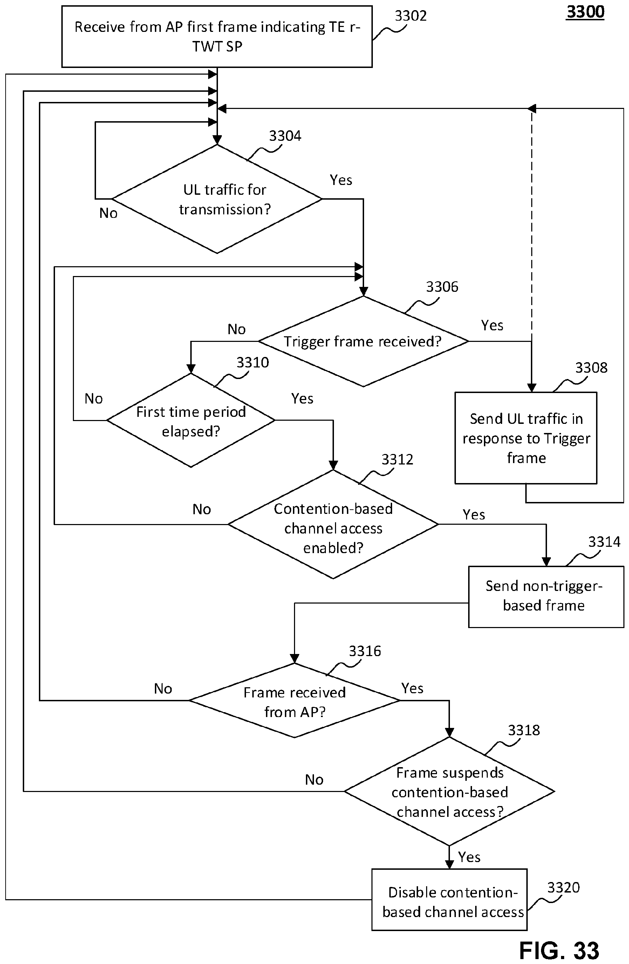

FIG. 33 shows an example 3300 for controlling and/or regulating contention-based channel access. For example, one or more STAs, such as a STA associated with an AP configured to performs example controlling and/or regulating contention-based channel access 3200. In step 3302, a first frame indicating a TE r-TWT SP may be received from an AP. The AP may be an AP with which the STA is associated. The TE r-TWT SP may be associated with a TE r-TWT setup by the AP for the STA. The AP and the STA may exchange TWT setup frames to setup the TE r-TWT. For example, the AP may receive, from the STA, a TWT setup request frame requesting the setup of the TE r-TWT. The AP may send, to the STA a TWT setup response frame (e.g., in response to receipt of the TWT setup request frame). The TWT setup response may accept the requested TE r-TWT. The TE r-TWT may have associated therewith one or more TIDs. The one or more TIDs may be associated with latency-sensitive traffic at the STA and/or the AP. The first frame may be, for example, a beacon frame and/or may indicate a start time and/or an end time of the TE r-TWT SP.

In step 3304, a determination may be made as to whether the STA has UL traffic to send (e.g., the determination may be made based on receipt of the first frame and/or based on information indicating a start time of the TE r-TWT SP). The determination as to whether the STA has UL traffic to send may be made at and/or close to (e.g., after) the start of the TE r-TWT SP. The UL traffic may be for a TID of the one or more TIDs associated with the TE r-TWT. For example, it may be determined whether a TID of UL traffic of (e.g., one or more data frames on) the STA is one of the one or more TIDs associated with the TE r-TWT. If it is determined that the STA has no UL traffic to send (e.g., no UL traffic associated with the TE r-TWT) (step 3304 - no), the determination may be made again as to whether the STA has UL traffic to send, for example, according to step 3304 (e.g., repeatedly and/or periodically, and/or after expiration of a timer).

In step 3306, a determination may be made as to whether a trigger frame has been received from the AP. The trigger frame may be a trigger frame configured to schedule UL transmission by the STA. In step 3308, UL traffic may be sent based on the determination indicating a trigger frame was received (step 3306 - yes), for example, in response to the received trigger frame. For example, the UL traffic may be sent via a resource unit (RU) indicated by the trigger frame. The determination may be made again as to whether the STA has UL traffic to send, for example, according to step 3304 (e.g., repeatedly and/or periodically, and/or after expiration of a timer). For example, the determination may be made again as to whether the STA has UL traffic to send after and/or in response to the UL traffic having been sent. Also, or alternatively, the UL traffic may not be sent (e.g., based on the received trigger frame indicating other UL traffic and/or a determination that the UL traffic should be sent at a different time, based on one or more conditions stopping the UL traffic from being sent, etc.). As such, the determination may be made again as to whether the STA has UL traffic to send based on the trigger frame having been received (dashed line in FIG. 33.

In step 3310 a determination may be made as to whether a first time period (e.g., from the start of the TE r-TWT SP) has elapsed. For example, the determination may be made as to whether the first time period has elapsed based on a determination that a trigger frame and/or another expected frame was not received (step 3306 - no). The first time period may be a first time as discussed herein (e.g., as discussed with reference to FIGS. 14-16, 21-25, etc.). Another determination may be made as to whether the first time period has elapsed based on a determination that the first time period has not elapsed (e.g., continually, periodically, based on a time, etc.).

In step 3312, a determination may be made as to whether contention-based channel access is enabled for and/or by the STA. A determination may be made as to whether or not a trigger frame was received, as in step 3306 based on the determination being made that contention-based channel access is not enabled (step 3312 - no).

In step 3314, a non-trigger-based frame may be sent based on the determination being made that contention-based channel access is enabled for and/or by the STA. The non-trigger-based frame may be sent (e.g., by the STA) without being triggered (e.g., without receiving a trigger frame from the AP). The non-trigger-based frame may be sent using contention-based channel access. The contention-based channel access may be based on a distributed coordination function (DCF) scheme, an enhanced distributed channel access (EDCA) scheme, and/or a listen before talk (LBT) scheme, for example. The non-trigger-based frame may comprise a data frame, a control frame, a management frame, an action frame, and/or a QoS null frame.

In step 3316, a determination may be made as to whether a frame has been received from the AP. The determination may be made as to whether a frame is received from the AP within a predetermined period after sending the non-trigger-based frame in step 3314. Another determination may be made as to whether there is UL traffic for transmission (e.g., additional UL data frames), according to step 3304 for example, based on the determination being made that a frame has been received from the AP (step 3316 - no).

In step 3318, based on a frame having been received (step 3316 - yes), a determination may be made as to whether the frame received from the AP is configured to cause and/or indicates suspension of contention-based channel access at the STA. As described herein, a frame from the AP configured to suspend contention-based channel for the STA may be a frame that is configured to implicitly and/or explicitly cause suspension of contention-based channel access by the STA and/or a frame that explicitly indicates suspension of contention-based channel for the STA. Another determination may be made as to whether there is UL traffic for transmission as in step 3304 based on the frame is not configured to cause and/or does not indicate suspension of contention-based channel STA (step 3318 - no).

In step 3320, contention-based channel access by the STA may be disabled (e.g., based on and/or in accordance with the received frame) based on a determination that the received frame is configured to cause and/or indicates suspension of contention-based channel STA (step 3318 - yes). The frame from the AP may, for example, indicate a delayed suspension of contention-based channel access by the STA. The frame may indicate a start time of suspension of contention-based channel access by the STA. A timer may be set for disabling contention-based channel access at the STA based on the start time of suspension of contention-based channel access by the STA indicated in the frame. Also, or alternatively, the STA may store information indicating a default delay time and/or a rule for waiting an amount of time to suspend contention-based channel access based on, for example, an amount and/or type of UL traffic of the STA. The frame may not explicitly indicate and/or comprise any information (e.g., instructions, data values, signals, etc.) to cause suspension of contention-based channel access. The STA may store instructions and/or operate according to rules indicating that receipt of the frame causes suspension of contention-based channel access. Another determination may be made as to whether the STA has UL traffic for transmission (e.g., as in step 3304), for example, after contention-based channel access is disabled.

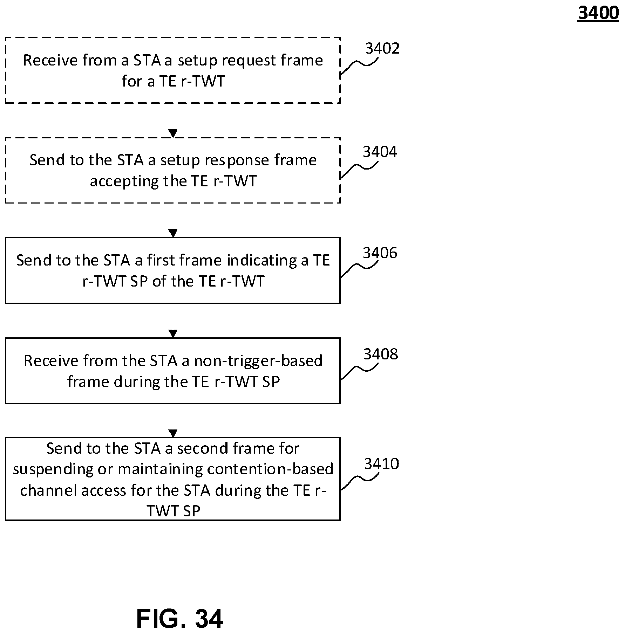

FIG. 34 shows an example 3400 of controlling contention-based channel access for an STA. Steps of example 3400 may be performed by an AP, for example. In step 3402, a setup request frame for a TE r-TWT may be received (e.g., from a STA). The STA may be an STA associated with the AP. The setup request frame may be a TWT setup request frame. The setup request frame may request the setup of a TE r-TWT for the STA. The setup request frame may include one or more parameters for the requested TE r-TWT. For example, the setup request frame may indicate one or more TIDs associated with the TE r-TWT.

In step 3404, a setup response frame accepting the TE r-TWT may be sent (e.g., to the STA). The setup response frame may be a TWT setup response frame. The setup response frame may include one or more parameters for the requested TE r-TWT. The one or more parameters may be the same and/or different than the one or more parameters included in the setup request frame.

In step 3406, a first frame indicating a TE r-TWT SP of the TE r-TWT may be sent to the STA. The first frame may be sent based on the TE r-TWT being setup (e.g., based on the setup response frame accepting the TE r-TWT being sent) The first frame may be, for example, a beacon frame. The first frame may indicate a start time and/or an end time of the TE r-TWT SP.

In step 3408, a non-trigger-based frame may be received (e.g., from the STA) during the TE r-TWT SP. The non-trigger-based frame may be sent by the STA without the STA having been triggered to send the frame by the AP (e.g., without the AP having sent a frame to trigger the non-trigger-based frame sent by the STA and/or without the STA having received a trigger frame from the AP). The non-trigger-based frame may be sent using contention-based channel access. The contention-based channel access may be based on a distributed coordination function (DCF) scheme, an enhanced distributed channel access (EDCA) scheme, and/or a listen before talk (LBT) scheme, for example. The non-trigger-based frame may comprise a data frame, a control frame, a management frame, an action frame, and/or a QoS null frame.

In step 3410, a second frame may be sent to the STA for suspending and/or maintaining contention-based channel access by the STA during the TE r-TWT SP. The second frame may comprise an indication to suspend and/or maintain contention-based channel access by the STA during the TE r-TWT SP. The second frame may indicate one or more of: maintenance of contention-based channel access by the STA during the TE r-TWT SP; immediate suspension of contention-based channel access by the STA during the TE r-TWT SP (e.g., suspension upon receipt and/or processing of the second frame by the STA); and/or delayed suspension of contention-based channel access by the STA during the TE r-TWT SP. The second frame comprising the indication to suspend and/or maintain contention-based channel access by the STA during the TE r-TWT SP may be an immediate response frame. The second frame comprising the indication to suspend and/or maintain contention-based channel access by the STA during the TE r-TWT SP may be a BlockAck frame. The BlockAck frame may be a compressed BlockAck frame. The indication to suspend and/or maintain contention-based channel access by the STA during the TE r-TWT SP may be provided in a BlockAck Control field of the compressed BlockAck frame. The indication to suspend and/or maintain contention-based channel access by the STA during the TE r-TWT SP may be provided in a r-TWT EDCA TX Control subfield of the BlockAck Control field of the compressed BlockAck frame. An indication of a start time and/or delay time of suspension of contention-based channel access by the STA may be provided in the second frame (e.g., in a BlockAck Information field of a BlockAck frame) based on the second frame comprising an indication of delayed suspension of contention-based channel STA during the TE r-TWT SP. The indication of the start time of suspension of contention-based channel access by the STA may be provided in a BlockAck Bitmap subfield of the BlockAck Information field, for example.

The second frame comprising the indication to suspend or maintain contention-based channel access by the STA during the TE r-TWT SP may be a multi-STA BlockAck frame. The indication to suspend or maintain contention-based channel access by the STA during the TE r-TWT SP may be provided in a BlockAck Information field of the multi-STA BlockAck frame. The indication to suspend or maintain contention-based channel access by the STA during the TE r-TWT SP may be provided in a Per AID TID Info field of the BlockAck Information field of the multi-STA BlockAck frame. An AID11 subfield of the Per AID TID Info field may be set to a predefined value (e.g., 2043). The indication to suspend or maintain contention-based channel access by the STA during the TE r-TWT SP may be provided in a r-TWT EDCA TX Control subfield of the Per AID TID Info field. The second frame comprising the indication to suspend and/or maintain contention-based channel access by the STA during the TE r-TWT SP may be a multi-STA BlockAck frame. The indication to suspend and/or maintain contention-based channel access by the STA during the TE r-TWT SP may be provided in a BlockAck Control field of the multi-STA BlockAck frame. The indication to suspend and/or maintain contention-based channel access by the STA during the TE r-TWT SP may be provided in a r-TWT EDCA TX Control subfield of the BlockAck Control field of the multi-STA BlockAck frame.

The second frame may comprise an indication of a start time of suspension of contention-based channel access by the STA. For example, the indication of the start time may be included in the second frame based on the second frame being configured to cause and/or indicating a delayed suspension of contention-based channel STA during the TE r-TWT SP. The indication of the start time may be provided in the BlockAck Information field of a BlockAck frame (e.g., a multi-STA BlockAck frame) as the second frame. The indication of the start time of suspension of contention-based channel access by the STA may be provided in a Per AID TID Info field of the BlockAck Information field of the BlockAck frame (e.g., a multi-STA BlockAck frame).

The second frame may be a frame configured to cause suspension of contention-based channel access by the STA during the TE r-TWT SP according to operation rules of the STA. The second frame may be configured to cause suspension of contention-based channel access by the STA during the TE r-TWT SP without explicitly indicating suspension of contention-based channel access by the STA during the TE r-TWT SP. For example, the STA may operate according to instructions and/or rules that contention-based channel access should be suspended (immediately and/or with a delay that is predetermined and/or indicated by the instructions and/or rules) based on receipt of any and/or one or more types of frames as the second frame from the AP. The second frame may be any frame in accordance with the IEEE 802.11 standard. Any frame sent by the AP after the STA sends the non-trigger-based frame may be interpreted by the STA (e.g., according to the instructions and/or rules) as suspending contention-based channel access by the STA during the TE r-TWT SP. The second frame may include a data frame, a control frame, a management frame, and/or an action frame. For example, and without limitation, the second frame may include a trigger frame. The second frame may include a frame other than an immediate response frame (e.g., ACK, BlockAck, multi-STA BlockAck).

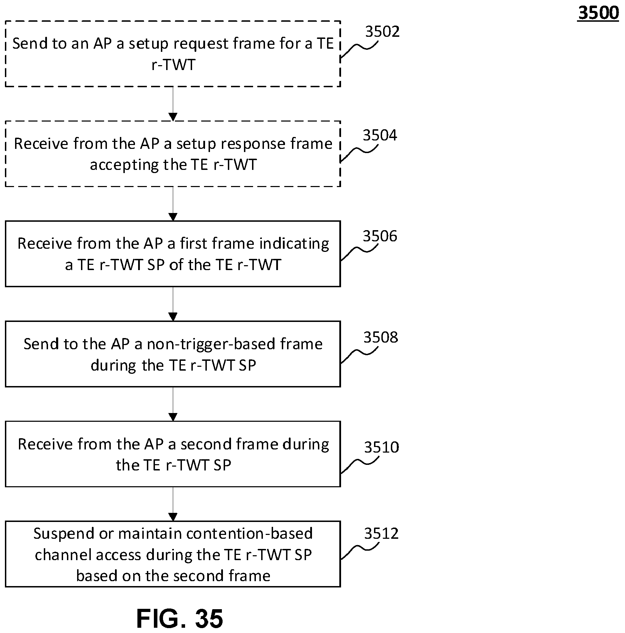

FIG. 35 shows an example 3500 of controlling contention-based channel access for an STA. Steps of example 3500 may be performed by a STA, for example. In step 3502, a setup request frame for a TE r-TWT may be sent to an AP. The AP may be an AP with which the STA is associated. The setup request frame may be a TWT setup request frame. The setup request frame may be configured to request and/or cause setup of a TE r-TWT by the AP. The setup request frame may include one or more parameters for the requested TE r-TWT. For example, the setup request frame may indicate one or more TIDs associated with the TE r-TWT.

In step 3504, a setup response frame accepting the TE r-TWT may be received from the AP, for example. The setup response frame may be a TWT setup response frame. The setup response frame may include one or more parameters for the requested TE r-TWT. The one or more parameters may be the same as and/or different than the one or more parameters included in the setup request frame.

In step 3506, a first frame indicating a TE r-TWT SP of the TE r-TWT may be received (e.g., from the AP). The first frame may be, for example, a beacon frame. The first frame may indicate a start time and/or an end time of the TE r-TWT SP, for example.

In step 3508, a non-trigger-based frame may be sent (e.g., to the AP) during the TE r-TWT SP. The non-trigger-based frame may sent by the STA without the STA being triggered to send the frame (e.g., without being triggered by the AP, such as by receiving a trigger frame from the AP). The non-trigger-based frame may be sent using contention-based channel access. Contention-based channel access may be based on a distributed coordination function (DCF) scheme, an enhanced distributed channel access (EDCA) scheme, and/or a listen before talk (LBT) scheme, for example. The non-trigger-based frame may comprise a data frame, a control frame, a management frame, an action frame, and/or a QoS null frame.

The non-trigger-based frame may be sent after a first time period of the TE r-TWT SP has elapsed and/or in response to a first time period of the TE r-TWT SP having elapsed. The non-trigger-based frame may be sent based on a determination that a third frame was not received during the first time period of the TE r-TWT SP. The third frame may include any frame in accordance with the IEEE 802.11 standard. The third frame may include any frame in accordance with the IEEE 802.11 standard other than an immediate response frame. The third frame may include a data frame, a control frame, a management frame, or an action frame. The third frame may include a trigger frame.

In step 3510, a second frame may be received from the AP during the r-TWT SP (e.g., after and/or in response to determining that the first time period passed and/or that the third frame was not received and/or no frame was received from the AP during the first time period). The second frame may be any frame in accordance with the IEEE 802.11 standard. The second frame may be any second frame as described herein.

In step 3512, contention-based channel access may be suspended and/or maintained for the STA during the TE r-TWT SP. For example, contention-based channel access may be suspended and/or maintained based on the second frame received in step 3510 and/or based on the receipt of the second frame in step 3510. The STA may operate by rules that causes it to suspend contention-based channel access based on receipt of the second frame. The second frame may cause suspension of contention-based channel access by the STA during the TE r-TWT SP without explicitly indicating suspension of contention-based channel access by the STA during the TE r-TWT SP (e.g., receipt of the frame causes suspension). The second frame may include any frame in accordance with the IEEE 802.11 standard. For example, the STA may operate according to instructions and/or rules such that any frame received by the STA from the AP after the STA sends the non-trigger-based frame and/or after the STA enables contention-based channel access may be interpreted by the STA as suspending contention-based channel access by the STA during the TE r-TWT SP.

The second frame may include a data frame, a control frame, a management frame, and/or an action frame. For example, and without limitation, the second frame may be a trigger frame. The trigger frame may be a buffer status report pull (BSRP) frame. The trigger frame may be a trigger frame that schedules uplink transmission by the STA. The trigger frame may indicate an extension of the TE r-TWT SP, e.g., a later end time of the TE r-TWT SP. The second frame may be any frame other than an immediate response frame (e.g., ACK, BlockAck, multi-STA BlockAck). Mere receiving of an immediate response frame by the STA after the STA sends the non-trigger-based frame and/or enables contention-based channel access may not cause suspension of contention-based channel access by the STA during the TE r-TWT SP.

The second frame may be a frame that explicitly indicates suspension and/or maintenance of contention-based channel access by the STA during the TE r-TWT SP. Contention-based channel access by the STA may be suspended and/or maintained during the TE r-TWT SP based on information included in the second frame. For example, the second frame may comprise an indication to suspend and/or maintain contention-based channel access by the STA during the TE r-TWT SP. The second frame may indicate, for example: maintenance of contention-based channel access by the STA during the TE r-TWT SP; immediate suspension of contention-based channel access by the STA during the TE r-TWT SP; and/or delayed suspension of contention-based channel access by the STA during the TE r-TWT SP.

The second frame comprising the indication to suspend or maintain contention-based channel access by the STA during the TE r-TWT SP may be an immediate response frame. The second frame comprising the indication to suspend or maintain contention-based channel access by the STA during the TE r-TWT SP may be a BlockAck frame. The BlockAck frame may be a compressed BlockAck frame. The indication to suspend and/or maintain contention-based channel access by the STA during the TE r-TWT SP may be provided in a BlockAck Control field of the compressed BlockAck frame. The indication to suspend and/or maintain contention-based channel access by the STA during the TE r-TWT SP may be provided in a r-TWT EDCA TX Control subfield of the BlockAck Control field of a BlockAck frame (e.g., of the compressed BlockAck frame). An indication of a start time of suspension of contention-based channel access by the STA may be provided (e.g., in a BlockAck Information field of a BlockAck frame) based on the second frame indicating delayed suspension of contention-based channel access by the STA during the TE r-TWT SP. The indication of the start time of suspension of contention-based channel access by the STA may be provided in a BlockAck Bitmap subfield of the BlockAck Information field of the BlockAck frame (e.g., a compressed BlockAck frame).

The second frame comprising the indication to suspend and/or maintain contention-based channel access by the STA during the TE r-TWT SP may be a multi-STA BlockAck frame. The indication to suspend and/or maintain contention-based channel access by the STA during the TE r-TWT SP may be provided in a BlockAck Information field of the multi-STA BlockAck frame. The indication to suspend and/or maintain contention-based channel access by the STA during the TE r-TWT SP may be provided in a Per AID TID Info field of the BlockAck Information field of the multi-STA BlockAck frame. An AID11 subfield of the Per AID TID Info field may be set to a predefined value (e.g., 2043). The indication to suspend and/or maintain contention-based channel access by the STA during the TE r-TWT SP may be provided in a r-TWT EDCA TX Control subfield of the Per AID TID Info field.

The second frame comprising the indication to suspend and/or maintain contention-based channel access by the STA during the TE r-TWT SP may be a multi-STA BlockAck frame. The indication to suspend and/or maintain contention-based channel access by the STA during the TE r-TWT SP may be provided in a BlockAck Control field of the multi-STA BlockAck frame. The indication to suspend and/or maintain contention-based channel access by the STA during the TE r-TWT SP may be provided in a r-TWT EDCA TX Control subfield of the BlockAck Control field of the multi-STA BlockAck frame.

An indication of a start time of suspension of contention-based channel access by the STA may be provided in the BlockAck Information field based on the second frame (e.g. BlockAck frame) indicates delayed suspension of contention-based channel access by the STA during the TE r-TWT SP. The indication of the start time of suspension of contention-based channel access by the STA may be provided in a Per AID TID Info field of the BlockAck Information field of the multi-STA BlockAck frame.

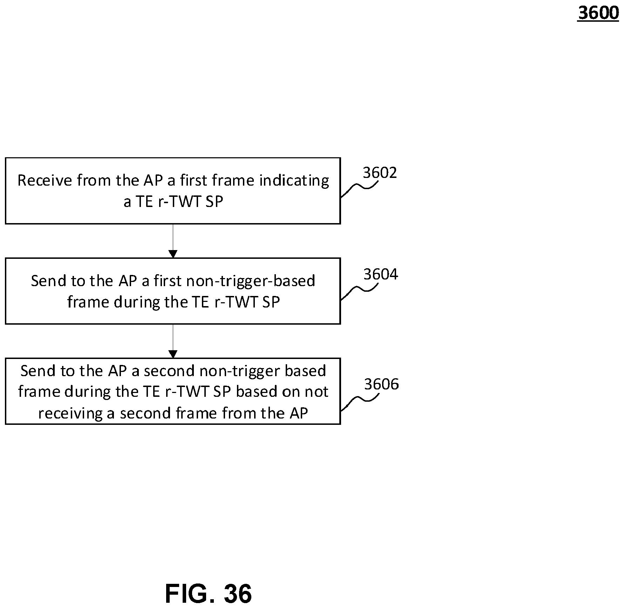

FIG. 36 shows an example process 3600 of controlling contention-based channel access for an STA. Steps of example 3600 may be performed by a STA, for example. In step 3602, a first frame indicating a TE r-TWT SP may be received from an AP. The AP may be an AP with which the STA is associated. The TE r-TWT SP may be associated with a TE r-TWT setup by the AP for the STA. The AP and the STA may exchange TWT setup frames to setup the TE r-TWT (e.g., prior to and/or prompting the first frame being sent and/or received). For example, the AP may receive from the STA a TWT setup request frame requesting the setup of the TE r-TWT. The AP may respond to the STA by sending a TWT setup response frame. The TWT setup response may be configured to accept and/or indicate acceptance of the requested TE r-TWT. The TE r-TWT may have associated therewith one or more TIDs. The one or more TIDs may be associated with latency-sensitive traffic of the STA and/or the AP. The first frame may be a beacon frame. The first frame may indicate a start time and/or an end time of the TE r-TWT SP.

In step 3604, a first non-trigger-based frame may be sent to the AP during the TE r-TWT SP. The first non-trigger-based frame may be sent after a first time period of the TE r-TWT SP has elapsed and/or in response to a determination that the first time period elapsed. The first non-trigger-based frame may be sent based on a determination that no frame was received and/or a third frame was not received by the STA from the AP during the first time period of the TE r-TWT SP. The third frame may include any frame in accordance with the IEEE 802.11 standard. The third frame may include any frame in accordance with the IEEE 802.11 standard other than an immediate response frame. The third frame may include a data frame, a control frame, a management frame, and/or an action frame. The third frame may include a trigger frame.

The first non-trigger-based frame may be sent using contention-based channel access. Contention-based channel access may be based on a distributed coordination function (DCF) scheme, an enhanced distributed channel access (EDCA) scheme, and/or a listen before talk (LBT) scheme, for example. The first non-trigger-based frame may comprise a data frame, a control frame, a management frame, an action frame, and/or a QoS null frame.

In step 3606, a second non-trigger-based frame may be sent to the AP during the TE r-TWT SP (e.g., based on not receiving a second frame from the AP and/or not receiving any frame indicating that contention-based access should be suspended). The second frame may be a frame that is configured to suspend contention-based channel access by the STA during the TE r-TWT SP. The second frame may be a frame that implicitly and/or explicitly is configured to cause suspension of contention-based channel at the STA. The second frame may be any frame in accordance with the IEEE 802.11 standard. The second frame may include any frame in accordance with the IEEE 802.11 standard other than an immediate response frame. The second frame may include a data frame, a control frame, a management frame, and/or an action frame. The second frame may include a trigger frame. Contention-based channel access may be maintained based on not receiving a second frame as described herein.

The second non-trigger-based frame may be sent using contention-based channel access. Contention-based channel access may be based on a distributed coordination function (DCF) scheme, an enhanced distributed channel access (EDCA) scheme, and/or a listen before talk (LBT) scheme, for example. The second non-trigger-based frame may comprise a data frame, a control frame, a management frame, an action frame, and/or a QoS null frame.

A TWT scheduling AP and a TWT scheduled STA may follow rules as defined in the IEEE 802.11 standard draft "IEEE P802.11-REVme^{™}/D1.2, April 2022." For example, among other sections, a TWT scheduling AP may follow the rules defined in section 26.8.3.2 (Rules for TWT scheduling AP) of the IEEE 802.11 standard draft "IEEE P802.11-REVme^{™}/D1.2, April 2022.". Among other sections, a TWT scheduled STA may follow the rules defined in section 26.8.3.3 (Rules for TWT scheduled STA) and 26.8.5 (Power save operation during TWT SPs) of the IEEE 802.11 standard draft "IEEE P802.11-REVme^{™}/D1.2, April 2022."

According to the rules defined in section 26.8.3.2: A TWT scheduling AP that receives a PS-Poll and/or a U-APSD trigger frame and/or any other indication from a TWT scheduled STA in PS mode, during and/or before a specific announced TWT SP but after the end of the most recent TWT SP preceding the specific TWT SP (if any), that the TWT scheduled STA is in the awake state during the TWT SP shall follow the rules defined in 11.2.3.6 (AP operation), except that the AP should deliver to the TWT scheduled STA as many buffered BUs as are available at the AP, provided that the BU delivery does not exceed the duration of the TWT SP, the TWT scheduled STA has indicated that it is in the awake state for that TWT SP, and the TWT scheduled STA has not entered the doze state (see 26.8.4.3 (TWT Information frame exchange for broadcast TWT) and 26.8.5 (Power save operation during TWT SPs)).

A TWT scheduling AP that sends frames to a TWT scheduled STA that is in PS mode during an unannounced TWT SP shall follow the rules defined in 11.2.3.6 (AP operation), except that the AP should deliver to the TWT scheduled STA as many buffered BUs as available at the AP, provided that the BU delivery does not exceed the duration of the TWT SP and the TWT scheduled STA has not entered the doze state (see 26.8.4.3 (TWT Information frame exchange for broadcast TWT) and 26.8.5 (Power save operation during TWT SPs)). NOTE 7-The TWT scheduling AP can deliver the buffered BUs in A-MPDUs sent under a BlockAck agreement if the TWT is an announced TWT and the TWT scheduled STA is awake for that TWT SP or if the TWT is an unannounced TWT (at the start of which the TWT scheduled STA is assumed to already be awake). The buffered BUs can be delivered in multiple PPDUs sent within the TWT SP. The TWT scheduling AP can exceed the duration of the TWT SP if the TWT scheduled STA is in active mode.

According to the rules defined in section 26.8.3.3: A TWT scheduled STA should not send frames to the TWT scheduling AP outside of broadcast TWT SPs and should not send frames that are not contained within HE TB PPDUs to the TWT scheduling AP within TE broadcast TWT SPs, except that the STA can send frames within negotiated individual TWT SPs as defined in 26.8.2 (Individual TWT agreements). NOTE 1-The TWT scheduled STA decides which frames to send within and/or outside a TWT SP; and while it is recommended that the TWT scheduled STA not send using EDCA within and/or outside TWT SPs, the TWT scheduled STA might still do so. If the STA decides to send, then the STA might contend for accessing the medium as defined in 10.23.2 (HCF contention-based channel access (EDCA)) and in 26.2.7 (EDCA operation using MU EDCA parameters).

According to the rules defined in section 26.8.5: A TWT requesting STA or a TWT scheduled STA that is not in PS mode and that sends a frame with the Power Management subfield set to 1 during a TWT SP shall remain in the awake state until the AdjustedMinimumTWTWakeDuration time has elapsed from the TWT SP start time or until a TWT SP termination event is detected, whichever occurs first for that particular TWT SP.

A TWT requesting STA or a TWT scheduled STA in PS mode that is in the awake state for a TWT SP may transition to the doze state after AdjustedMinimumTWTWakeDuration time has elapsed from the TWT SP start time even if it has previously sent a PS-Poll frame or U-APSD trigger frame and has not yet received the expected frames from the AP in response. For a TE TWT SP, if the AdjustedMinimumTWTWakeDuration time has elapsed from the scheduled TWT SP start time and no Trigger frames are received by the STA, the HE STA may enter doze state if no other condition requires the STA to remain awake. When a TWT SP termination event is detected within a TWT SP by a STA in PS mode that is participating in the TWT SP, the STA may transition to the doze state without waiting for the expiration of the AdjustedMinimumTWTWakeDuration time as described in 10.47.1 (TWT overview), even if it has previously sent a PS-Poll frame or U-APSD trigger frame and has not yet received the expected frames from the AP in response.

A TWT requesting STA or a TWT scheduled STA shall classify any of the following events as a TWT SP termination event: the transmission by the TWT requesting STA of an acknowledgment in response to an individually addressed QoS Data or QoS Null frame sent by the TWT responding STA that had the EOSP subfield equal to 1; the transmission by the TWT scheduled STA of an acknowledgment in response to an individually addressed QoS Data or QoS Null frame sent by the TWT scheduling AP that had the EOSP subfield equal to 1; the transmission by the TWT requesting STA of an acknowledgment in response to an individually addressed frame that is neither a QoS Data frame nor a QoS Null frame, but that was sent by the TWT responding STA with the More Data field equal to 0; the transmission by the TWT scheduled STA of an acknowledgment in response to an individually addressed frame that is neither a QoS Data frame nor a QoS Null frame, but that was sent by the TWT scheduling AP with the More Data field equal to 0; the reception of an individually addressed or broadcast QoS Data or QoS Null frame sent by the TWT responding STA or TWT scheduling AP that does not solicit an immediate response and had the EOSP subfield equal to 1; the reception of an individually addressed frame that is neither a QoS Data frame nor a QoS Null frame, but that was sent by the TWT responding STA or TWT scheduling AP, does not solicit an immediate response, and had the More Data field equal to 0; the reception of a Trigger frame sent by the TWT responding STA or TWT scheduling AP that has the More TF field equal to 0 and is not addressed to the TWT requesting STA or TWT scheduled STA, provided that the TWT requesting STA or TWT scheduled STA either is awake for an announced TE TWT SP but did not send an indication that it is in the awake state to the TWT responding STA or TWT scheduling AP or is awake for an unannounced TE TWT SP; the transmission or reception by the TWT requesting STA of the acknowledgment for a TWT Information frame that satisfies specific conditions in 26.8.4.2 (TWT Information frame exchange for individual TWT) and 26.8.4.4 (TWT Information frame exchange for flexible wake time); the transmission or reception by the TWT scheduled STA of the acknowledgment for a TWT Information frame that satisfies specific conditions in 26.8.4.3 (TWT Information frame exchange for broadcast TWT) and 26.8.4.4 (TWT Information frame exchange for flexible wake time).

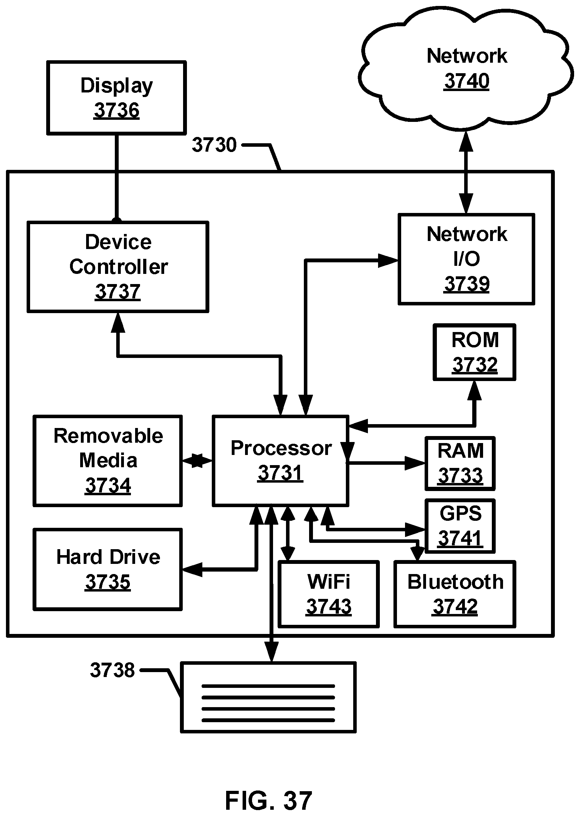

FIG. 37 shows example elements of a computing device that may be used to implement any of the various devices described herein, including, for example, a STA (e.g., 110, 120, 160, 170, 312, 313, 711, 712, 811, 812, 911, 1011, 1012, 1404, 1454), an AP (e.g., 110, 120, 311, 710, 810, 910, 1010, 1402, 1452), a non-AP/STA MLD (e.g., 420, 1104, 1504, 1604, 1704, 1804), an AP MLD (e.g., 410, 1102, 1502, 1602, 1702, 1802, 1902), communication devices (e.g., 210, 260), and/or any computing and/or communication device described herein. The computing device 3730 may include one or more processors 3731, which may execute instructions stored in the random-access memory (RAM) 3733, the removable media 3734 (such as a Universal Serial Bus (USB) drive, compact disk (CD) or digital versatile disk (DVD), or floppy disk drive), or any other desired storage medium. Instructions may also be stored in an attached (or internal) hard drive 3735. The computing device 3730 may also include a security processor (not shown), which may execute instructions of one or more computer programs to monitor the processes executing on the processor 3731 and any process that requests access to any hardware and/or software components of the computing device 3730 (e.g., ROM 3732, RAM 3733, the removable media 3734, the hard drive 3735, the device controller 3737, a network interface 3739, a GPS 3741, a Bluetooth interface 3742, a Wi-Fi interface 3743, etc.). The computing device 3730 may include one or more output devices, such as the display 3736 (e.g., a screen, a display device, a monitor, a television, etc.), and may include one or more output device controllers 3737, such as a video processor. There may also be one or more user input devices 3738, such as a remote control, keyboard, mouse, touch screen, microphone, etc. The computing device 3730 may also include one or more network interfaces, such as a network interface 3739, which may be a wired interface, a wireless interface, or a combination of the two. The network interface 3739 may provide an interface for the computing device 3730 to communicate with a network 3740 (e.g., a RAN, or any other network). The network interface 3739 may include a modem (e.g., a cable modem), and the external network 3740 may include communication links, an external network, an in-home network, a provider's wireless, coaxial, fiber, or hybrid fiber/coaxial distribution system (e.g., a DOCSIS network), or any other desired network. Additionally, the computing device 3730 may include a location-detecting device, such as a global positioning system (GPS) microprocessor 3741, which may be configured to receive and process global positioning signals and determine, with possible assistance from an external server and antenna, a geographic position of the computing device 3730.

The example in FIG. 37 may be a hardware configuration, although the components shown may be implemented as software as well. Modifications may be made to add, remove, combine, divide, etc. components of the computing device 3730 as desired. Additionally, the components may be implemented using basic computing devices and components, and the same components (e.g., processor 3731, ROM storage 3732, display 3736, etc.) may be used to implement any of the other computing devices and components described herein. For example, the various components described herein may be implemented using computing devices having components such as a processor executing computer-executable instructions stored on a computer-readable medium, as shown in FIG. 37. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.
Clause 1. A method comprising sending, by an access point (AP) to a non-AP station (STA), a first frame indicating a trigger-enabled (TE) restricted target wake time (r-TWT) service period (SP) for the AP and the STA.
Clause 2. The method of clause 1, further comprising receiving, by the AP from the STA, a non-trigger-based frame during the TE r-TWT SP.
Clause 3. The method of any one of clauses 1-2, further comprising sending, by the AP to the STA, a second frame for suspending contention-based channel access by the STA during the TE r-TWT SP.
Clause 4. The method of any one of clauses 1-3, wherein the non-trigger-based frame comprises at least one of latency-sensitive data or high priority data.
Clause 5. The method of any of one of clauses 1-4, further comprising determining, based on the receiving the non-trigger-based frame, that contention-based channel access is enabled for the STA.
Clause 6. The method of any one of clauses 1-5, wherein the second frame comprises at least one of a data frame, a control frame, a management frame, an action frame, or a trigger frame.
Clause 7. The method of any one of clauses 1-6, wherein the second frame comprises a buffer status report pull (BSRP) frame.
Clause 8. The method of any one of clauses 1-7, wherein the second frame is configured to cause the STA to send traffic associated with the TE r-TWT during the TE r-TWT SP.
Clause 9. The method of any one of clauses 1-8, wherein the second frame indicates an extension of a duration of the TE r-TWT SP.
Clause 10. The method of any one of clauses 1-9, wherein the second frame is any frame in accordance with the IEEE 802.11 standard.
Clause 11. The method of any one of claims 1-10, wherein the second frame is not an immediate response frame.
Clause 12. The method of any one of clauses 1-11, wherein the second frame comprises an indication to suspend contention-based channel access by the STA during the TE r-TWT SP.
Clause 13. The method of any one of clauses 1-11, wherein the second frame indicates one or more of maintenance of contention-based channel access by the STA during the TE r-TWT SP; immediate suspension of contention-based channel access by the STA during the TE r-TWT SP; or delayed suspension of contention-based channel access by the STA during the TE r-TWT SP.
Clause 14. The method of any one of clauses 12-13, wherein the second frame comprises an indication of a start time for suspending contention-based channel access by the STA.
Clause 15. The method of any one of clauses 1-5, 7-10 and 12-14, wherein the second frame is an immediate response frame.
Clause 16. The method of any one of clauses 12-15, wherein the second frame is a BlockAck frame.
Clause 17. The method of clause 16, wherein the BlockAck frame is a compressed BlockAck frame.
Clause 18. The method of any one of clauses 16-17, wherein the indication to suspend contention-based channel access by the STA during the TE r-TWT SP is provided in a BlockAck Control field of the BlockAck frame.
Clause 19. The method of any one of clauses 16-18, wherein the indication to suspend contention-based channel access by the STA during the TE r-TWT SP is provided in a BlockAck Control field of the BlockAck frame.
Clause 20. The method of any one of clauses 16-19, wherein the indication of the start time of suspension of contention-based channel access by the STA is provided in a BlockAck Bitmap subfield of the BlockAck Information field of the compressed BlockAck frame.
Clause 21. The method of any one of clauses 16-20, wherein the BlockAck frame is a multi-STA BlockAck frame.
Clause 22. The method of clause 21, wherein the indication to suspend contention-based channel access by the STA during the TE r-TWT SP is provided in a BlockAck Information field of the multi-STA BlockAck frame.
Clause 2 >. The method of clause 22, wherein the indication to suspend contention-based channel access by the STA during the TE r-TWT SP is provided in a Per AID TID Info field of the BlockAck Information field of the multi-STA BlockAck frame.
Clause 24. The method of clause 23, wherein an AID11 subfield of the Per AID TID Info field is set to a predefined value.
Clause 25. The method of any one of clauses 23-24, wherein the indication to suspend contention-based channel access by the STA during the TE r-TWT SP is provided in a r-TWT EDCA TX Control subfield of the Per AID TID Info field.
Clause 26. The method of any one of clauses 21-25, wherein the indication to suspend contention-based channel access by the STA during the TE r-TWT SP is provided in a BlockAck Control field of the multi-STA BlockAck frame.
Clause 27. The method of clause 26, wherein the indication to suspend contention-based channel access by the STA during the TE r-TWT SP is provided in a r-TWT EDCA TX Control subfield of the BlockAck Control field of the multi-STA BlockAck frame.
Clause 28. The method of any of clauses 21-27, wherein the indication in the second frame indicates delayed suspension of contention-based channel access by the STA during the TE r-TWT SP, and wherein the indication of the start time of suspension of contention-based channel access by the STA is provided in a BlockAck Information field of the multi-STA BlockAck frame.
Clause 29. The method of clause 28, wherein the indication of the start time of suspension of contention-based channel access by the STA is provided in a Per AID TID Info field of the BlockAck Information field of the multi-STA BlockAck frame.
Clause 30. The method of any one of clauses 1-29, wherein the contention-based channel access is based on one or more of a distributed coordination function (DCF) scheme, an enhanced distributed channel access (EDCA) scheme, or a listen before talk (LBT) scheme.
Clause 31. The method of any one of clauses 1-30, wherein the non-trigger-based frame comprises one or more of a data frame, a control frame, a management frame, an action frame, or a QoS null frame.
Clause 32. The method of any one of clauses 1-31, wherein the receiving the non-trigger-based frame comprises receiving the non-trigger-based frame via contention-based channel access.
Clause 33. The method of any one of clauses 1-32, further comprising receiving, by the AP from the STA, a data frame comprising a traffic identifier (TID) associated with the second frame.
Clause 34. The method of any one of clauses 1-33, wherein the second frame comprises information, based on a network allocation vector (NAV) value of the AP, for suspending contention-based channel access by the STA.
Clause 35. The method of any one of clauses 1-34, further comprising receiving, by the AP from the STA, a setup request frame for the TE r-TWT; and sending, by the AP to the STA, a setup response frame accepting the TE r-TWT.
Clause 36. A computing device comprising one or more processors; and memory storing instructions that, when executed by the one or more processors, cause the computing device to perform the method of any one of clauses 1-35.
Clause 37. A system comprising an AP configured to perform the method of any one of clauses 1-35; and a STA configured to receive the second frame of from the AP.
Clause 38. A computer-readable medium storing instructions that, when executed, cause performance of the method of any one of clauses 1-35.
Clause 39. A method comprising receiving, by a STA from an AP, a first frame indicating a TE r-TWT SP for the AP and the STA.
Clause 40. The method of clause 39, further comprising sending, by the STA to the AP, a non-trigger-based frame during the TE r-TWT SP.
Clause 41. The method of any one of clauses 39-40, further comprising receiving, by the STA from the AP, a second frame during the TE r-TWT SP.
Clause 42. The method of any one of clauses 39-41, further comprising suspending, based on the receiving the second frame, contention-based channel access by the STA during the TE r-TWT SP based on the second frame.
Clause 43. The method of any one of clause 39-42, further comprising enabling, based on a trigger-frame not being received during a first time period of the TE r-TWT SP, contention-based channel access during the TE r-TWT SP.
Clause 44. The method of any one of clauses 39-43, wherein the sending the non-trigger-based frame comprises sending the non-trigger-based frame via contention-based channel access.
Clause 45. The method of any one of clauses 39-44, wherein the second frame comprises one or more of a data frame, a control frame, a management frame or an action frame.
Clause 46. The method of any one of clauses 39-45, wherein the second frame is a trigger frame.
Clause 47. The method of any one of clauses 39-46, wherein the second frame comprises a buffer status report pull (BSRP) frame.
Clause 48. The method of any one of clauses 41-47, wherein the trigger frame is configured to trigger the STA to send traffic associated with the TE r-TWT during the TE r-TWT SP.
Clause 49. The method of any one of clauses 39-48, further comprising sending, via contention-free channel access based on the receiving the second frame, a data frame comprising a traffic identifier (TID) associated with the TE r-TWT.
Clause 50. The method of clause 49, wherein the second frame is a trigger frame and wherein the data frame comprising the TID is sent in response to the trigger frame.
Clause 51. The method of any one of clauses 39-50, further comprising extending, based on the second frame, a time duration of the TE r-TWT SP.
Clause 52. The method of any one of clauses 39-51, wherein the suspending the contention-based channel access is based on receiving, from the AP, any frame in accordance with the IEEE 802.11 standard.
Clause 53. The method of any one of clauses 39-52, wherein the suspending the contention-based channel access is based on receiving, from the AP, any frame other than an immediate response frame.
Clause 54. The method of any one of clauses 39-53, wherein the suspending contention-based channel access by the STA during the TE r-TWT SP is based on timing information in the second frame.
Clause 56. The method of clause 39-55, wherein the second frame comprises an indication to suspend contention-based channel access by the STA during the TE r-TWT SP.
Clause 57. The method of clause 56, wherein the indication in the second frame indicates one or more of immediate suspension of contention-based channel access by the STA during the TE r-TWT SP; or delayed suspension of contention-based channel access by the STA during the TE r-TWT SP.
Clause 58. The method of clause 57, wherein the indication in the second frame indicates delayed suspension of contention-based channel access by the STA during the TE r-TWT SP, the second frame further comprising an indication of a start time of suspension of contention-based channel access by the STA.
Clause 59. The method of any of clauses 56-58, wherein the second frame is an immediate response frame.
Clause 60. The method of any of clauses 56-59, wherein the immediate frame is a BlockAck frame.
Clause 61. The method of clause 60, wherein the BlockAck frame is a compressed BlockAck frame.
Clause 62. The method of clause 60-61, wherein the indication to suspend contention-based channel access by the STA during the TE r-TWT SP is provided in a BlockAck Control field of the compressed BlockAck frame.
Clause 63. The method of clause 62, wherein the indication to suspend contention-based channel access by the STA during the TE r-TWT SP is provided in a r-TWT EDCA TX Control subfield of the BlockAck Control field of the compressed BlockAck frame.
Clause 64. The method of any one of clauses 60-63, wherein the indication in the second frame indicates delayed suspension of contention-based channel access by the STA during the TE r-TWT SP, and wherein the indication of the start time of suspension of contention-based channel access by the STA is provided in a BlockAck Information field of the BlockAck frame.
Clause 65. The method of clause 64, wherein the indication of the start time of suspension of contention-based channel access by the STA is provided in a BlockAck Bitmap subfield of the BlockAck Information field of the BlockAck frame.
Clause 66. The method of clause 60, wherein the BlockAck frame is a multi-STA BlockAck frame.
Clause 67. The method of clause 66, wherein the indication to suspend contention-based channel access by the STA during the TE r-TWT SP is provided in a BlockAck Information field of the multi-STA BlockAck frame.
Clause 68. The method of clause 67, wherein the indication to suspend contention-based channel access by the STA during the TE r-TWT SP is provided in a Per AID TID Info field of the BlockAck Information field of the multi-STA BlockAck frame.
Clause 69. The method of clause 68, wherein an AID 11 subfield of the Per AID TID Info field is set to a predefined value.
Clause 70. The method of any of clauses 68-69, wherein the indication to suspend contention-based channel access by the STA during the TE r-TWT SP is provided in a r-TWT EDCA TX Control subfield of the Per AID TID Info field.
Clause 71. The method of any one of clauses 65-70, wherein the indication to suspend contention-based channel access by the STA during the TE r-TWT SP is provided in a BlockAck Control field of the multi-STA BlockAck frame.
Clause 72. The method of clause 71, wherein the indication to suspend contention-based channel access by the STA during the TE r-TWT SP is provided in a r-TWT EDCA TX Control subfield of the BlockAck Control field of the multi-STA BlockAck frame.
Clause 73. The method of any of clauses 60-72, wherein the indication in the second frame indicates delayed suspension of contention-based channel access by the STA during the TE r-TWT SP, and wherein the indication of the start time of suspension of contention-based channel access by the STA is provided in a BlockAck Information field of the BlockAck frame.
Clause 74. The method of clause 73, wherein the indication of the start time of suspension of contention-based channel access by the STA is provided in a Per AID TID Info field of the BlockAck Information field of the BlockAck frame.
Clause 75. The method of any of one of clauses 39-74, wherein the contention-based channel access is based on a distributed coordination function (DCF) scheme, an enhanced distributed channel access (EDCA) scheme, or a listen before talk (LBT) scheme.
Clause 76. The method of any of any one of clauses 39-75, wherein the sending, by the STA to the AP, of the non-trigger-based frame during the TE r-TWT SP is based on not receiving, by the STA from the AP, a third frame during a first time period of the TE r-TWT SP.
Clause 77. The method of clause 76, wherein the sending, by the STA to the AP, the non-trigger-based frame comprises sending the non-trigger-based frame following the first time period.
Clause 78. The method of any of clauses 39-77, wherein the non-trigger-based frame comprises one or more of a data frame, a control frame, a management frame, an action frame, or a QoS null frame.
Clause 79. The method of any one of clauses 39-78, further comprising enabling, based on not receiving a fourth frame from the AP during a second time period, the suspended contention-based channel access.
Clause 80. The method of any one of clauses 39-79, further comprising sending, by the STA to the AP, a setup request frame for the TE r-TWT; and receiving, by the STA from the AP, a setup response frame accepting the TE r-TW.
Clause 81. A computing device comprising one or more processors; and memory storing instructions that, when executed by the one or more processors, cause the computing device to perform the method of any one of claims 39-80.
Clause 82. A system comprising STA configured to perform the method of any one of clauses 39-80; and an AP configured to send the second frame.
Clause 83. A computer-readable medium storing instructions that, when executed, cause performance of the method of any one of clauses 39-80.
Clause 84. A method comprising receiving, by a STA from an AP, a first frame indicating TE r-TWT SP for the AP and the STA.
Clause 85. The method of clause 84, further comprising enabling, based on a trigger-frame not being received from the AP during a first time period, contention-based channel access for the STA during the TE r-TWT SP.
Clause 86. The method of any one of claims 84-85, further comprising, receiving, after the first time period from the AP, a second frame.
Clause 87. The method of any one of claims 84-86, further comprising disabling, based on the receiving the second frame, the contention-based channel access for the STA during the TE r-TWT SP.
Clause 88. The method of any one of claims 84-87, further comprising sending, to the AP via contention-based channel access, a non-trigger-based frame.
Clause 89. The method of any one of clauses 84-88, wherein the disabling the contention-based channel access is based on an indication, in the second frame, that contention-based channel access should be suspended.
Clause 90. The method of any one of clauses 84-89, wherein the second frame comprises an indication of a start time for suspending contention-based channel access for the STA.
Clause 91. The method of any one of clauses 84-90, further comprising sending, by the STA to the AP, a setup request frame for the TE r-TWT; and receiving, by the STA from the AP, a setup response frame accepting the TE r-TW.
Clause 92. A computing device comprising one or more processors; and memory storing instructions that, when executed by the one or more processors, cause the computing device to perform the method of any one of clauses 84-91.
Clause 93. A system comprising a STA configured to perform the method of any one of clauses 84-91; and an AP configured to send the second frame.
Clause 94. A computer-readable medium storing instructions that, when executed, cause performance of the method of any one of clauses 84-91.
Clause 95. A method comprising receiving, by a station (STA) from an access point (AP), a first frame indicating a trigger-enabled (TE) restricted target wake time (r-TWT) service period (SP) for the AP and the STA.
Clause 96. The method of clause 95, further comprising sending, by the STA to the AP, a non-trigger-based frame during the TE r-TWT SP.
Clause 97. The method of any one of clauses 95-96, further comprising receiving, by the STA from the AP, a second frame during the TE r-TWT SP.
Clause 98. The method of any one of clauses 95-97, further comprising suspending or maintaining contention-based channel access by the STA during the TE r-TWT SP based on the second frame.
Clause 99. The method of any one of clauses 95-98, wherein the second frame is a data frame, a control frame, a management frame, or an action frame.
Clause 100. The method of any one of clauses 95-99, wherein the second frame is a trigger frame.
Clause 101. The method of any one of clauses 95-100, wherein the trigger frame comprises a buffer status report pull (BSRP) frame.
Clause 102. The method of clause 100, wherein the second frame is a trigger frame configured to trigger the STA to send traffic associated with the TE r-TWT during the TE r-TWT SP.
Clause 103. The method of clause 102, further comprising sending, by the STA to the AP, a data frame comprising a traffic identifier (TID) associated with the TE r-TWT, in response to the trigger frame.
Clause 104. The method of any of clauses 95-103, wherein the trigger frame indicates an extension of the TE r-TWT SP.
Clause 105. The method of any one of clauses 95-104, wherein the second frame is any frame in accordance with the IEEE 802. 11 standard.
Clause 106. The method of any one of clauses 95-107, wherein the second frame is other than an immediate response frame.
Clause 107. The method of any of clauses 95-106, comprising suspending contention-based channel access by the STA during the TE r-TWT SP based on receiving the second frame from the AP.
Clause 108. The method of clause 107, wherein the second frame comprises an indication to suspend or maintain contention-based channel access by the STA during the TE r-TWT SP.
Clause 109. The method of clause 108, wherein the indication in the second frame indicates maintenance of contention-based channel access by the STA during the TE r-TWT SP, immediate suspension of contention-based channel access by the STA during the TE r-TWT SP; or delayed suspension of contention-based channel access by the STA during the TE r-TWT SP.
Clause 110. The method of any one of clauses 108-109, wherein the indication in the second frame indicates delayed suspension of contention-based channel access by the STA during the TE r-TWT SP, the second frame further comprising an indication of a start time of suspension of contention-based channel access by the STA.
Clause 111. The method of any of clauses 97-110, wherein the second frame is an immediate response frame.
Clause 112. The method of any of clauses 97-111, wherein the immediate frame is a BlockAck frame.
Clause 113. The method of clause 112, wherein the BlockAck frame is a compressed BlockAck frame.
Clause 114. The method of clause 113, wherein the indication to suspend or maintain contention-based channel access by the STA during the TE r-TWT SP is provided in a BlockAck Control field of the compressed BlockAck frame.
Clause 115. The method of clause 114, wherein the indication to suspend or maintain contention-based channel access by the STA during the TE r-TWT SP is provided in a r-TWT EDCA TX Control subfield of the BlockAck Control field of the compressed BlockAck frame.
Clause 116. The method of any of clauses 113-115, wherein the indication in the second frame indicates delayed suspension of contention-based channel access by the STA during the TE r-TWT SP, and wherein the indication of the start time of suspension of contention-based channel access by the STA is provided in a BlockAck Information field of the compressed BlockAck frame.
Clause 117. The method of clause 116, wherein the indication of the start time of suspension of contention-based channel access by the STA is provided in a BlockAck Bitmap subfield of the BlockAck Information field of the compressed BlockAck frame.
Clause 118. The method of clause 112, wherein the BlockAck frame is a multi-STA BlockAck frame.
Clause 119. The method of clause 118, wherein the indication to suspend or maintain contention-based channel access by the STA during the TE r-TWT SP is provided in a BlockAck Information field of the multi-STA BlockAck frame.
Clause 120. The method of clause 119, wherein the indication to suspend or maintain contention-based channel access by the STA during the TE r-TWT SP is provided in a Per AID TID Info field of the BlockAck Information field of the multi-STA BlockAck frame.
Clause 121. The method of clause 120, wherein an AID 11 subfield of the Per AID TID Info field is set to a predefined value.
Clause 122. The method of any of clauses 118-121, wherein the indication to suspend or maintain contention-based channel access by the STA during the TE r-TWT SP is provided in a r-TWT EDCA TX Control subfield of the Per AID TID Info field.
Clause 123. The method of any one of clauses 118-122, wherein the indication to suspend or maintain contention-based channel access by the STA during the TE r-TWT SP is provided in a BlockAck Control field of the multi-STA BlockAck frame.
Clause 124. The method of clause 123, wherein the indication to suspend or maintain contention-based channel access by the STA during the TE r-TWT SP is provided in a r-TWT EDCA TX Control subfield of the BlockAck Control field of the multi-STA BlockAck frame.
Clause 125. The method of any of clauses 112-124, wherein the indication in the second frame indicates delayed suspension of contention-based channel access by the STA during the TE r-TWT SP, and wherein the indication of the start time of suspension of contention-based channel access by the STA is provided in a BlockAck Information field of the BlockAck frame.
Clause 126. The method of clause 125, wherein the indication of the start time of suspension of contention-based channel access by the STA is provided in a Per AID TID Info field of the BlockAck Information field of the BlockAck frame.
Clause 127. The method of any of clauses 95-126, wherein the non-trigger-based data frame is a frame that is sent using contention-based channel access.
Clause 128. The method of any of clauses 95-127, wherein the contention-based channel access is based on a distributed coordination function (DCF) scheme, an enhanced distributed channel access (EDCA) scheme, or a listen before talk (LBT) scheme.
Clause 129. The method of any of clauses 95-128, wherein the sending, by the STA to the AP, of the non-trigger-based frame during the TE r-TWT SP is based on not receiving, by the STA from the AP, a third frame during a first time period of the TE r-TWT SP.
Clause 130. The method of clause 129, wherein the sending, by the STA to the AP, the non-trigger-based frame comprises sending the non-trigger-based frame following the first time period.
Clause 131. The method of any of clauses 95-130, wherein the non-trigger-based frame comprises a data frame, a control frame, a management frame, an action frame, or a QoS null frame.
Clause 132. The method of any one of clauses 95-131, further comprising sending, by the STA to the AP, a setup request frame for the TE r-TWT; and receiving, by the STA from the AP, a setup response frame accepting the TE r-TW.
Clause 133. The method of any one of clauses 95-132, further comprising enabling, based on not receiving, by the STA from the AP, a fourth frame during a second time period of the TE r-TWT SP, the suspended contention-based channel access by the STA.
Clause 134. The method of clause 133, wherein the second time period is subsequent to the first time period.
Clause 135. A computing device comprising one or more processors; and memory storing instructions that, when executed by the one or more processors, cause the computing device to perform the method of any one of clauses 95-134.
Clause 136. A system comprising a STA configured to perform the method of any one of clauses 95-134; and an AP configured to send the second frame.
Clause 137. A computer-readable medium storing instructions that, when executed, cause performance of the method of any one of clauses 95-134.
Clause 138. A method comprising receiving, by a station (STA) from an access point (AP), a first frame indicating a trigger-enabled (TE) restricted target wake time (r-TWT) service period (SP) for the AP and the STA.
Clause 139. The method of claim 138, further comprising sending, by the STA to the AP, a first non-trigger-based frame during the TE r-TWT SP.
Clause 140. The method of any one of claims 138 or 139, further comprising, based on not receiving a second frame from the AP, sending, by the STA to the AP, a second non-trigger-based frame during the TE r-TWT SP.
Clause 141. The method of any one of claims 138-140, wherein the second frame is a data frame, a control frame, a management frame, or an action frame.
Clause 142. The method of any one of claims 138-141, wherein the second frame is a trigger frame.
Clause 143. The method of any one of claims 138-142, wherein the second frame is any frame in accordance with the IEEE 802. 11 standard.
Clause 144. The method of any one of claims 138-143, wherein the second frame is any frame in accordance with the IEEE 802. 11 standard other than an immediate response frame.
Clause 145. The method of any one of claims 138-144, wherein the sending, by the STA to the AP, of the first non-trigger-based data frame is based on not receiving, by the STA from the AP, a third frame during a first time period of the TE r-TWT SP.
Clause 146. The method of clause 145, wherein the third frame is a data frame, a control frame, a management frame, or an action frame.
Clause 147. The method of any one of clauses 145-146, wherein the third frame is a trigger frame.
Clause 148. The method of any one of clauses 145-147, wherein the third frame is any frame in accordance with the IEEE 802. 11 standard.
Clause 149. The method of any one of clauses 145-148, wherein the third frame is any frame in accordance with the IEEE 802. 11 standard other than an immediate response frame.
Clause 150. The method of any one of clauses 138-149, further comprising sending, by the STA to the AP, a setup request frame for the TE r-TWT; and receiving, by the STA from the AP, a setup response frame accepting the TE r-TW.
Clause 151. A computing device comprising one or more processors; and memory storing instructions that, when executed by the one or more processors, cause the computing device to perform the method of any one of clauses 138-150.
Clause 152. A system comprising a STA configured to perform the method of any one of clauses138-150; and an AP configured to receive the first and second non-trigger-based frames.
Clause 153. A computer-readable medium storing instructions that, when executed, cause performance of the method of any one of clauses 138-150.
Clause 154. A method comprising sending, by an access point (AP) to a station (STA), a first frame indicating a trigger-enabled (TE) restricted target wake time (r-TWT) service period (SP) for the AP and the STA.
Clause 155. The method of clause 154, further comprising receiving, by the AP from the STA, a non-trigger-based frame during the TE r-TWT SP.
Clause 156. The method of any one of clauses 154-155, further comprising sending, by the AP to the STA, a second frame for suspending or maintaining contention-based channel access by the STA during the TE r-TWT SP.
Clause 157. The method of any one of clauses 154-157, further comprising receiving, by the AP from the STA, a setup request frame for the TE r-TWT.
Clause 158. The method of any one of clauses 154-58, further comprising sending, by the AP to the STA, a setup response frame accepting the TE r-TWT.
Clause 159. The method of any one of clauses 154-158, wherein the second frame causes suspension of contention-based channel access by the STA during the TE r-TWT SP.
Clause 160. The method of any one of clauses 154-159, wherein the second frame is a data frame, a control frame, a management frame, or an action frame.
Clause 161. The method of any one of clauses 154-160, wherein the second frame is a trigger frame.
Clause 162. The method of clause 161, wherein the trigger frame comprises a buffer status report pull (BSRP) frame.
Clause 163. The method of any one of clauses 161-162, wherein the trigger frame is configured to trigger the STA to send traffic associated with the TE r-TWT during the TE r-TWT SP.
Clause 164. The method of any one of clauses 161-163, further comprising receiving, by the AP from the STA, a data frame comprising a traffic identifier (TID) associated with the TE r-TWT, in response to the trigger frame.
Clause 165. The method of any of any one of clauses 161-164, wherein the trigger frame indicates an extension of a duration of the TE r-TWT SP.
Clause 166. The method of any one of clauses 154-165, wherein the second frame is any frame in accordance with the IEEE 802. 11 standard.
Clause 167. The method of any one of clauses 154-166, wherein the second frame is other than an immediate response frame.
Clause 168. The method of any one of clauses 154-167, wherein the second frame comprises an indication to suspend or maintain contention-based channel access by the STA during the TE r-TWT SP.
Clause 169. The method of clause 168, wherein the indication in the second frame indicates maintenance of contention-based channel access by the STA during the TE r-TWT SP, immediate suspension of contention-based channel access by the STA during the TE r-TWT SP, or delayed suspension of contention-based channel access by the STA during the TE r-TWT SP.
Clause 170. The method of any one of clauses 168-169, wherein the indication in the second frame indicates delayed suspension of contention-based channel access by the STA during the TE r-TWT SP, the second frame further comprising an indication of a start time of suspension of contention-based channel access by the STA.
Clause 171. The method of any one of clauses 168-170, wherein the second frame is an immediate response frame.
Clause 172. The method of any one of clauses 168-171, wherein the second frame is a BlockAck frame.
Clause 173. The method of clause 172, wherein the BlockAck frame is a compressed BlockAck frame.
Clause 174. The method of any one of clauses 172-173, wherein the indication to suspend or maintain contention-based channel access by the STA during the TE r-TWT SP is provided in a BlockAck Control field of the compressed BlockAck frame.
Clause 175. The method of clause 174, wherein the indication to suspend or maintain contention-based channel access by the STA during the TE r-TWT SP is provided in a r-TWT EDCA TX Control subfield of the BlockAck Control field of the compressed BlockAck frame.
Clause 176. The method of any one of clauses 173-175, wherein the indication in the second frame indicates delayed suspension of contention-based channel access by the STA during the TE r-TWT SP, and wherein the indication of the start time of suspension of contention-based channel access by the STA is provided in a BlockAck Information field of the compressed BlockAck frame.
Clause 177. The method of clause 176, wherein the indication of the start time of suspension of contention-based channel access by the STA is provided in a BlockAck Bitmap subfield of the BlockAck Information field of the compressed BlockAck frame.
Clause 178. The method of clause 172, wherein the BlockAck frame is a multi-STA BlockAck frame.
Clause 179. The method of clause 178, wherein the indication to suspend or maintain contention-based channel access by the STA during the TE r-TWT SP is provided in a BlockAck Information field of the multi-STA BlockAck frame.
Clause 180. The method of clause 179, wherein the indication to suspend or maintain contention-based channel access by the STA during the TE r-TWT SP is provided in a Per AID TID Info field of the BlockAck Information field of the multi-STA BlockAck frame.
Clause 181. The method of clause 180, wherein an AID 11 subfield of the Per AID TID Info field is set to a predefined value.
Clause 182. The method of any of clauses 180-181, wherein the indication to suspend or maintain contention-based channel access by the STA during the TE r-TWT SP is provided in a r-TWT EDCA TX Control subfield of the Per AID TID Info field.
Clause 183. The method of any one of clauses 178-182, wherein the indication to suspend or maintain contention-based channel access by the STA during the TE r-TWT SP is provided in a BlockAck Control field of the multi-STA BlockAck frame.
Clause 184. The method of clause 183, wherein the indication to suspend or maintain contention-based channel access by the STA during the TE r-TWT SP is provided in a r-TWT EDCA TX Control subfield of the BlockAck Control field of the multi-STA BlockAck frame.
Clause 185. The method of any one of clauses 178-184, wherein the indication in the second frame indicates delayed suspension of contention-based channel access by the STA during the TE r-TWT SP, and wherein the indication of the start time of suspension of contention-based channel access by the STA is provided in a BlockAck Information field of the multi-STA BlockAck frame.
Clause 186. The method of clause 185, wherein the indication of the start time of suspension of contention-based channel access by the STA is provided in a Per AID TID Info field of the BlockAck Information field of the multi-STA BlockAck frame.
Clause 187. The method of any of clauses 154-186, wherein the non-trigger-based frame is a frame that is sent using contention-based channel access.
Clause 188. The method of any of clauses 154-187, wherein the contention-based channel access is based on a distributed coordination function (DCF) scheme, an enhanced distributed channel access (EDCA) scheme, or a listen before talk (LBT) scheme.
Clause 189. The method of any of clauses 154-188, wherein the non-trigger-based frame comprises a data frame, a control frame, a management frame, an action frame, or a QoS null frame.
Clause 190. A computing device comprising one or more processors; and memory storing instructions that, when executed by the one or more processors, cause the computing device to perform the method of any one of clauses 154-189.
Clause 191. A system comprising an AP configured to perform the method of any one of clauses 154-189; and a STA configured to receive the second frame of from the AP.
Clause 192. A computer-readable medium storing instructions that, when executed, cause performance of the method of any one of clauses 154-189.

An access point (AP) may perform a method comprising multiple operations. The AP may send, to a station (STA), a first frame indicating a trigger-enabled (TE) restricted target wake time (r-TWT) service period (SP) for (e.g., of a TE r-TWT setup between) the AP and the STA. The AP may receive, from the STA, a non-trigger-based frame dur the TE r-TWT SP. The AP may send, to the STA, a second frame for suspending or maintaining contention-based channel access by the STA dur the TE r-TWT SP. The second frame may be configured to cause suspension of contention-based channel access by the STA dur the TE r-TWT SP. The AP may determine, based on the receiving the non-trigger-based frame, that contention-based channel access is enabled for the STA. The second frame may comprise at least one of: a data frame, a control frame, a management frame, an action frame, or a trigger frame. The second frame may be a trigger frame and comprise a buffer status report pull (BSRP) frame. The second frame may be configured to cause the STA to send traffic associated with the TE r-TWT dur the TE r-TWT SP. The second frame may be any frame in accordance with the IEEE 802.11 standard (e.g., the STA may be configured to suspend contention-based channel access based on receipt, from the AP, of any frame in accordance with the IEEE 802.11 standard). The second frame may be other than an immediate response frame (e.g., the STA may be configured to suspend contention-based channel access based on receipt, from the AP, of any frame other than an immediate response frame). The second frame may indicate an extension of the TE r-TWT SP. The second frame may comprise an indication to suspend and/or maintain (e.g., for different portions of the TE r-TWT SP) contention-based channel access by the STA dur the TE r-TWT SP. The second frame may comprise an indication to suspend contention-based channel access by the STA dur the TE r-TWT SP. The second frame may comprise an indication of (e.g., indicate) one or more of maintenance of contention-based channel access by the STA during the TE r-TWT SP; immediate suspension of contention-based channel access by the STA during the TE r-TWT SP; or delayed suspension of contention-based channel access by the STA during the TE r-TWT SP. The second frame may comprise an indication of a start time for suspend contention-based channel access by the STA. The second frame may be an immediate response frame. The second frame may be a BlockAck frame. The BlockAck frame may be a compressed BlockAck frame. The indication to suspend or maintain contention-based channel access by the STA during the TE r-TWT SP may be provided in a BlockAck Control field of the BlockAck frame. The indication to suspend or maintain contention-based channel access by the STA during the TE r-TWT SP may be provided in a BlockAck Control field of the BlockAck frame. The indication of the start time of suspension of contention-based channel access by the STA may be provided in a BlockAck Bitmap subfield of the BlockAck Information field of the compressed BlockAck frame. The BlockAck frame may be a multi-STA BlockAck frame. The indication to suspend or maintain contention-based channel access by the STA during the TE r-TWT SP may be provided in a BlockAck Information field of the multi-STA BlockAck frame. The indication to suspend or maintain contention-based channel access by the STA during the TE r-TWT SP may be provided in a Per AID TID Info field of the BlockAck Information field of the multi-STA BlockAck frame. An AID11 subfield of the Per AID TID Info field may be set to a predefined value. The indication to suspend or maintain contention-based channel access by the STA during the TE r-TWT SP may be provided in a r-TWT EDCA TX Control subfield of the Per AID TID Info field. The indication to suspend or maintain contention-based channel access by the STA during the TE r-TWT SP may be provided in a BlockAck Control field of the multi-STA BlockAck frame. The indication to suspend or maintain contention-based channel access by the STA during the TE r-TWT SP may be provided in a r-TWT EDCA TX Control subfield of the BlockAck Control field of the multi-STA BlockAck frame. The second frame may indicate delayed suspension of contention-based channel access by the STA during the TE r-TWT SP, and the indication of the start time of suspension of contention-based channel access by the STA may be provided in a BlockAck Information field of the multi-STA BlockAck frame. The indication of the start time of suspension of contention-based channel access by the STA may be provided in a Per AID TID Info field of the BlockAck Information field of the multi-STA BlockAck frame. The contention-based channel access may be based on one or more of a distributed coordination function (DCF) scheme, an enhanced distributed channel access (EDCA) scheme, or a listen before talk (LBT) scheme. The non-trigger-based frame may comprise one or more of a data frame, a control frame, a management frame, an action frame, or a QoS null frame. The AP may receive the non-trigger-based frame via contention-based channel access. The AP may further receive, from the STA, a data frame comprising a traffic identifier (TID) associated with the second frame. The second frame may comprise information, based on a network allocation vector (NAV) value of the AP, for suspending contention-based channel access by the STA. The AP may comprise one or more processors; and memory storing instructions that, when executed by the one or more processors, cause the AP to perform the described method, additional operations and/or include the additional elements. A system may comprise a AP configured to perform the described method, additional operations and/or include the additional elements; and an STA configured to receive the second frame. A computer-readable medium may store instructions that, when executed, cause performance of the described method, additional operations and/or include the additional elements.

An access point (AP) may perform a method comprising multiple operations. The AP may send, to a non-AP station (STA), a first frame indicating a trigger-enabled (TE) restricted target wake time (r-TWT) service period (SP) for the AP and the STA. The AP may receive, from the STA, a non-trigger-based frame during the TE r-TWT SP. The AP may send, to the STA, a second frame for suspending or maintaining contention-based channel access by the STA during the TE r-TWT SP. The AP may receive, from the STA, a setup request frame for the TE r-TWT. The AP may send, based on receiving the setup request frame for the TE r-TWT, a setup response frame accepting the TE r-TWT. The second frame may cause and/or be configured to cause suspension of contention-based channel access by the STA during the TE r-TWT SP. The second frame may be one or more of a data frame, a control frame, a management frame, or an action frame. The second frame may be a trigger frame. The trigger frame may comprise a buffer status report pull (BSRP) frame. The trigger frame may be configured to trigger the STA to send traffic associated with the TE r-TWT during the TE r-TWT SP. The AP may further receive, from the STA, a data frame comprising a traffic identifier (TID) associated with the TE r-TWT, for example, in response to the trigger frame. The trigger frame may indicate an extension of the TE r-TWT SP (e.g., an extension of a duration of the TE r-TWT SP. The second frame may be any frame in accordance with the IEEE 802. 11 standard (e.g., the STA may be configured to suspend and/or maintain contention-based channel access in response to receipt of any frame, from the AP, in accordance with the IEEE 802.11 standard). The second frame may be other than an immediate response frame (e.g., the STA may be configured to suspend and/or maintain contention-based channel access in response to receipt of any frame, from the AP, other than an immediate response frame). The second frame may comprise an indication to suspend or maintain contention-based channel access by the STA during the TE r-TWT SP. The indication in the second frame may indicates maintenance of contention-based channel access by the STA during the TE r-TWT SP, immediate suspension of contention-based channel access by the STA during the TE r-TWT SP, or delayed suspension of contention-based channel access by the STA during the TE r-TWT SP. The indication in the second frame may indicate delayed suspension of contention-based channel access by the STA during the TE r-TWT SP and the second frame may further comprise an indication of a start time of suspension of contention-based channel access by the STA. The second frame comprising the indication may be an immediate response frame. The second frame may be a BlockAck frame. The BlockAck frame may be a compressed BlockAck frame. The indication to suspend or maintain contention-based channel access by the STA during the TE r-TWT SP may be provided in a BlockAck Control field of the compressed BlockAck frame. The indication to suspend or maintain contention-based channel access by the STA during the TE r-TWT SP may be provided in a r-TWT EDCA TX Control subfield of the BlockAck Control field of the compressed BlockAck frame. The indication in the second frame may indicates delayed suspension of contention-based channel access by the STA during the TE r-TWT SP, and wherein the indication of the start time of suspension of contention-based channel access by the STA may be provided in a BlockAck Information field of the compressed BlockAck frame. The indication of the start time of suspension of contention-based channel access by the STA may be provided in a BlockAck Bitmap subfield of the BlockAck Information field of the compressed BlockAck frame. The BlockAck frame may be a multi-STA BlockAck frame. The indication to suspend or maintain contention-based channel access by the STA during the TE r-TWT SP may be provided in a BlockAck Information field of the multi-STA BlockAck frame. The indication to suspend or maintain contention-based channel access by the STA during the TE r-TWT SP may be provided in a Per AID TID Info field of the BlockAck Information field of the multi-STA BlockAck frame. An AID 11 subfield of the Per AID TID Info field may be set to a predefined value. The indication to suspend or maintain contention-based channel access by the STA during the TE r-TWT SP may be provided in a r-TWT EDCA TX Control subfield of the Per AID TID Info field. The indication to suspend or maintain contention-based channel access by the STA during the TE r-TWT SP may be provided in a BlockAck Control field of the multi-STA BlockAck frame. The indication to suspend or maintain contention-based channel access by the STA during the TE r-TWT SP may be provided in a r-TWT EDCA TX Control subfield of the BlockAck Control field of the multi-STA BlockAck frame. The indication in the second frame may indicate delayed suspension of contention-based channel access by the STA during the TE r-TWT SP, and the indication of the start time of suspension of contention-based channel access by the STA may be provided in a BlockAck Information field of the multi-STA BlockAck frame. The indication of the start time of suspension of contention-based channel access by the STA may be provided in a Per AID TID Info field of the BlockAck Information field of the multi-STA BlockAck frame. The non-trigger-based frame may be sent, by the STA, and/or received, via the AP, using contention-based channel access. The contention-based channel access may be based on a distributed coordination function (DCF) scheme, an enhanced distributed channel access (EDCA) scheme, or a listen before talk (LBT) scheme. The non-trigger-based frame may comprise a data frame, a control frame, a management frame, an action frame, or a QoS null frame. The AP may comprise one or more processors; and memory storing instructions that, when executed by the one or more processors, cause the AP to perform the described method, additional operations and/or include the additional elements. A system may comprise a AP configured to perform the described method, additional operations and/or include the additional elements; and an STA configured to receive the second frame. A computer-readable medium may store instructions that, when executed, cause performance of the described method, additional operations and/or include the additional elements.

A non-access point station (STA) may perform a method comprising multiple operations. The STA may receive, from an access point (AP), a first frame indicating a TE r-TWT SP for the AP and the STA. The STA may send, to the AP, a non-trigger-based frame during the TE r-TWT SP. The STA may receive, from the AP, a second frame during the TE r-TWT SP. The STA may suspend, based on the receiving the second frame, contention-based channel access by the STA during the TE r-TWT SP. The STA may enable, based on a trigger-frame not being received during a first time period of the TE r-TWT SP, contention-based channel access during the TE r-TWT SP. The STA may send the non-trigger-based frame via contention-based channel access. The second frame may comprise one or more of a data frame, a control frame, a management frame or an action frame. The second frame may be a trigger frame. The trigger frame may comprise a buffer status report pull (BSRP) frame. The trigger frame may be configured to trigger the STA to send traffic associated with the TE r-TWT during the TE r-TWT SP. The STA may send, via contention-free channel access based on the receiving the second frame, a data frame comprising a traffic identifier (TID) associated with the TE r-TWT. The data frame comprising the TID may be sent in response to the trigger frame. The STA may extend, based on the second frame, a time duration of the TE r-TWT SP. The STA may suspend the contention-based channel access based on receiving, from the AP, any frame in accordance with the IEEE 802.11 standard. The STA may suspend the contention-based channel access based on receiving, from the AP, any frame other than an immediate response frame. The STA may suspend contention-based channel access by the STA during the TE r-TWT SP based on timing information in the second frame. The second frame may comprise an indication to suspend and/or maintain (e.g., for different portions of the TE r-TWT SP) contention-based channel access by the STA during the TE r-TWT SP. The second frame may comprise an indication to suspend contention-based channel access by the STA dur the TE r-TWT SP. The indication in the second frame may indicate (e.g., the second frame may indicate) one or more of immediate suspension of contention-based channel access by the STA during the TE r-TWT SP; or delayed suspension of contention-based channel access by the STA during the TE r-TWT SP. The indication in the second frame may indicate delayed suspension of contention-based channel access by the STA during the TE r-TWT SP, and the second frame may further comprise an indication of a start time of suspension of contention-based channel access by the STA. The second frame may be an immediate response frame. The immediate frame may be a BlockAck frame. The BlockAck frame may be a compressed BlockAck frame. The indication to suspend contention-based channel access by the STA during the TE r-TWT SP may be provided in a BlockAck Control field of the compressed BlockAck frame. The indication to suspend contention-based channel access by the STA during the TE r-TWT SP may be provided in a r-TWT EDCA TX Control subfield of the BlockAck Control field of the compressed BlockAck frame. The indication in the second frame may indicate delayed suspension of contention-based channel access by the STA during the TE r-TWT SP, and the indication of the start time of suspension of contention-based channel access by the STA may be provided in a BlockAck Information field of the BlockAck frame. The indication of the start time of suspension of contention-based channel access by the STA may be provided in a BlockAck Bitmap subfield of the BlockAck Information field of the BlockAck frame. The BlockAck frame may be a multi-STA BlockAck frame. The indication to suspend contention-based channel access by the STA during the TE r-TWT SP may be provided in a BlockAck Information field of the multi-STA BlockAck frame. The indication to suspend contention-based channel access by the STA during the TE r-TWT SP may be provided in a Per AID TID Info field of the BlockAck Information field of the multi-STA BlockAck frame. An AID 11 subfield of the Per AID TID Info field may be set to a predefined value. The indication to suspend contention-based channel access by the STA during the TE r-TWT SP may be provided in a r-TWT EDCA TX Control subfield of the Per AID TID Info field. The indication to suspend contention-based channel access by the STA during the TE r-TWT SP may be provided in a BlockAck Control field of the multi-STA BlockAck frame. The indication to suspend contention-based channel access by the STA during the TE r-TWT SP may be provided in a r-TWT EDCA TX Control subfield of the BlockAck Control field of the multi-STA BlockAck frame. The indication in the second frame may indicate delayed suspension of contention-based channel access by the STA during the TE r-TWT SP, and the indication of the start time of suspension of contention-based channel access by the STA may be provided in a BlockAck Information field of the BlockAck frame. The indication of the start time of suspension of contention-based channel access by the STA may be provided in a Per AID TID Info field of the BlockAck Information field of the BlockAck frame. The contention-based channel access may be based on one or more of a distributed coordination function (DCF) scheme, an enhanced distributed channel access (EDCA) scheme, or a listen before talk (LBT) scheme. The STA may send, to the AP, of the non-trigger-based frame during the TE r-TWT SP based on not receiving, by the STA from the AP, a third frame during a first time period of the TE r-TWT SP. The STA may send, to the AP, the non-trigger-based frame following the first time period. The non-trigger-based frame comprises one or more of a data frame, a control frame, a management frame, an action frame, or a QoS null frame. The STA may further enable, based on not receiving a fourth frame from the AP during a second time period, the suspended contention-based channel access. The STA may send, to the AP, a setup request frame for the TE r-TWT, and receive, from the AP, a setup response frame accepting the TE r-TW. The STA may comprise one or more processors; and memory storing instructions that, when executed by the one or more processors, cause the STA to perform the described method, additional operations and/or include the additional elements. A system may comprise a STA configured to perform the described method, additional operations and/or include the additional elements; and an AP configured to send the second frame. A computer-readable medium may store instructions that, when executed, cause performance of the described method, additional operations and/or include the additional elements.

A non-access point station (STA) may perform a method comprising multiple operations. The STA may receive, from an access point (AP), a first frame indicating TE r-TWT SP for the AP and the STA. The STA may enable, based on a trigger-frame not being received from the AP during a first time period, contention-based channel access for the STA during the TE r-TWT SP. The STA may receive, after the first time period from the AP, a second frame. The STA may disable, based on the receiving the second frame, the contention-based channel access for the STA during the TE r-TWT SP. The STA may send, to the AP via contention-based channel access, a non-trigger-based frame. The STA may disable the contention-based channel access based on an indication, in the second frame, that contention-based channel access should be suspended. The second frame may comprise an indication of a start time for suspending contention-based channel access for the STA. The STA may send, to the AP, a setup request frame for the TE r-TWT; and receive, by the STA from the AP, a setup response frame accepting the TE r-TW. The STA may comprise one or more processors; and memory storing instructions that, when executed by the one or more processors, cause the STA to perform the described method, additional operations and/or include the additional elements. A system may comprise a STA configured to perform the described method, additional operations and/or include the additional elements; and an AP configured to send the second frame. A computer-readable medium may store instructions that, when executed, cause performance of the described method, additional operations and/or include the additional elements.

A non-access point station (STA) may perform a method comprising multiple operations. The STA may receive, from an access point (AP), a first frame indicating a trigger-enabled (TE) restricted target wake time (r-TWT) service period (SP) for the AP and the STA. The STA may send, to the AP, a non-trigger-based frame during the TE r-TWT SP. The STA may receive, from the AP, a second frame during the TE r-TWT SP. The STA may suspend or maintain contention-based channel access by the STA during the TE r-TWT SP based on the second frame. The second frame may be one or more of a data frame, a control frame, a management frame, or an action frame. The second frame may be a trigger frame. The trigger frame may comprise a buffer status report pull (BSRP) frame. The trigger frame may be configured to trigger the STA to send traffic associated with the TE r-TWT during the TE r-TWT SP. The STA may send, to the AP in response to (e.g., based on) the trigger frame, a data frame comprising a traffic identifier (TID) associated with the TE r-TWT. The trigger frame may indicate an extension of the TE r-TWT SP. The second frame may be any frame in accordance with the IEEE 802.11 standard (e.g., the STA may be configured to suspend contention-based channel access based on receipt, from the AP, of any frame in accordance with the IEEE 802.11 standard). The second frame may be other than an immediate response frame (e.g., the STA may be configured to suspend contention-based channel access based on receipt, from the AP, of any frame other than an immediate response frame). The STA may suspend contention-based channel access by the STA during the TE r-TWT SP based on receiving the second frame from the AP. The second frame may comprise an indication to suspend or maintain contention-based channel access by the STA during the TE r-TWT SP. The indication in the second frame may indicate one or more of maintenance of contention-based channel access by the STA during the TE r-TWT SP, immediate suspension of contention-based channel access by the STA during the TE r-TWT SP; or delayed suspension of contention-based channel access by the STA during the TE r-TWT SP. The indication in the second frame may indicate delayed suspension of contention-based channel access by the STA during the TE r-TWT SP, and the second frame may further comprise an indication of a start time of suspension of contention-based channel access by the STA. The second frame may be an immediate response frame. The immediate frame may be a BlockAck frame. The BlockAck frame may be a compressed BlockAck frame. The indication to suspend or maintain contention-based channel access by the STA during the TE r-TWT SP may be provided in a BlockAck Control field of the compressed BlockAck frame. The indication to suspend or maintain contention-based channel access by the STA during the TE r-TWT SP may be provided in a r-TWT EDCA TX Control subfield of the BlockAck Control field of the compressed BlockAck frame. The indication in the second frame may indicate delayed suspension of contention-based channel access by the STA during the TE r-TWT SP, and the indication of the start time of suspension of contention-based channel access by the STA may be provided in a BlockAck Information field of the compressed BlockAck frame. The indication of the start time of suspension of contention-based channel access by the STA may be provided in a BlockAck Bitmap subfield of the BlockAck Information field of the compressed BlockAck frame. The BlockAck frame may be a multi-STA BlockAck frame. The indication to suspend or maintain contention-based channel access by the STA during the TE r-TWT SP may be provided in a BlockAck Information field of the multi-STA BlockAck frame. The indication to suspend or maintain contention-based channel access by the STA during the TE r-TWT SP may be provided in a Per AID TID Info field of the BlockAck Information field of the multi-STA BlockAck frame. An AID11 subfield of the Per AID TID Info field may be set to a predefined value. The indication to suspend or maintain contention-based channel access by the STA during the TE r-TWT SP may be provided in a r-TWT EDCA TX Control subfield of the Per AID TID Info field. The indication to suspend or maintain contention-based channel access by the STA during the TE r-TWT SP may be provided in a BlockAck Control field of the multi-STA BlockAck frame. The indication to suspend or maintain contention-based channel access by the STA during the TE r-TWT SP may be provided in a r-TWT EDCA TX Control subfield of the BlockAck Control field of the multi-STA BlockAck frame. The indication to suspend or maintain contention-based channel access by the STA during the TE r-TWT SP in the second frame may indicate delayed suspension of contention-based channel access by the STA during the TE r-TWT SP, and the indication of the start time of suspension of contention-based channel access by the STA may be provided in a BlockAck Information field of the BlockAck frame. The indication of the start time of suspension of contention-based channel access by the STA may be provided in a Per AID TID Info field of the BlockAck Information field of the BlockAck frame. The non-trigger-based data frame may be sent using contention-based channel access. The contention-based channel access may be based on one or more of a distributed coordination function (DCF) scheme, an enhanced distributed channel access (EDCA) scheme, or a listen before talk (LBT) scheme. The STA may send, to the AP, the non-trigger-based frame during the TE r-TWT SP based on not receiving, by the STA from the AP, a third frame during a first time period of the TE r-TWT SP. The STA may send, to the AP, the non-trigger-based frame following the first time period. The non-trigger-based frame may comprise one or more of a data frame, a control frame, a management frame, an action frame, or a QoS null frame. The STA may send, to the AP, a setup request frame for the TE r-TWT. The STA may receive, from the AP, a setup response frame accepting the TE r-TW. The STA may enable, based on not receiving, from the AP, a fourth frame during a second time period of the TE r-TWT SP, the suspended contention-based channel access by the STA. The second time period may be subsequent to the first time period. The STA may comprise one or more processors; and memory storing instructions that, when executed by the one or more processors, cause the STA to perform the described method, additional operations and/or include the additional elements. A system may comprise a STA configured to perform the described method, additional operations and/or include the additional elements; and an AP configured to send the second frame. A computer-readable medium may store instructions that, when executed, cause performance of the described method, additional operations and/or include the additional elements.

A non-access point station (STA) may perform a method comprising multiple operations. The STA may receive, from an access point (AP), a first frame indicating a trigger-enabled (TE) restricted target wake time (r-TWT) service period (SP) for the AP and the STA. The STA may send, to the AP, a first non-trigger-based frame during the TE r-TWT SP. Based on not receiving a second frame from the AP, the STA may send, to the AP, a second non-trigger-based frame during the TE r-TWT SP. Based on not receiving a second frame from the AP and/or based on receiving a frame, from the AP, indicating that the STA should maintain channel-based access by the STA during at least a portion of the remainder of the TE r-TWT SP, the STA may send, to the AP, the second and/or a third non-trigger-based frame during the TE r-TWT SP (e.g., during the at least the portion of the remainder of the TE r-TWT SP. The second frame may be one or more of a data frame, a control frame, a management frame, or an action frame. The second frame may be any frame in accordance with the IEEE 802.11 standard (e.g., the STA may be configured to suspend contention-based channel access based on receipt, from the AP, of any frame in accordance with the IEEE 802.11 standard). The second frame may be any frame other than an immediate response frame. The STA may be configured to send, to the AP, the first non-trigger-based data frame based on not receiving, by the STA from the AP, a third frame during a first time period of the TE r-TWT SP. The third frame may be one or more of a data frame, a control frame, a management frame, or an action frame. The third frame may be a trigger frame. The third frame may be any frame in accordance with the IEEE 802. 11 standard. The third frame may be any frame in accordance with the IEEE 802. 11 standard other than an immediate response frame. The STA may send, to the AP, a setup request frame for the TE r-TWT. The STA may receive, from the AP, a setup response frame accepting the TE r-TW. The STA may comprise one or more processors; and memory storing instructions that, when executed by the one or more processors, cause the STA to perform the described method, additional operations and/or include the additional elements. A system may comprise a STA configured to perform the described method, additional operations and/or include the additional elements; and an AP configured to receive the first and second non-trigger based frames. A computer-readable medium may store instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
sending, by an access point (AP) to a station (STA), a first frame indicating a trigger-enabled (TE) restricted target wake time (r-TWT) service period (SP) for the AP and the STA;
receiving, by the AP from the STA, a non-trigger-based frame during the TE r-TWT SP; and
sending, by the AP to the STA, a second frame for suspending contention-based channel access by the STA during the TE r-TWT SP.

2. The method of claim 1, wherein the non-trigger-based frame comprises at least one of latency-sensitive data or high priority data.

3. The method of any of one of claims 1-2, further comprising determining, based on the receiving the non-trigger-based frame, that contention-based channel access is enabled for the STA.

4. The method of any one of claims 1-3, wherein the second frame comprises at least one of:
a data frame,
a control frame,
a management frame,
an action frame, or
a trigger frame.

5. The method of any one of claims 1-4, wherein the second frame is configured to cause the STA to send traffic associated with the TE r-TWT during the TE r-TWT SP.

6. The method of any one of claims 1-5, wherein the second frame indicates an extension of the TE r-TWT SP.

7. The method of any one of claims 1-6, wherein the second frame comprises an indication to suspend contention-based channel access by the STA during the TE r-TWT SP.

8. The method of any one of claims 1-7, wherein the second frame comprises an indication of a start time for suspending contention-based channel access by the STA.

9. The method of any one of claims 1-3 and 5-8, wherein the second frame is an immediate response frame.

10. The method of any one of claims 1-9, wherein the receiving the non-trigger-based frame comprises receiving the non-trigger-based frame via contention-based channel access.

11. The method of any one of claims 1-10, further comprising:
receiving, by the AP from the STA, a data frame comprising a traffic identifier (TID) associated with the second frame.

12. The method of any one of claims 1-11, wherein the second frame comprises information, based on a network allocation vector (NAV) value of the AP, for suspending contention-based channel access by the STA.

13. A computing device comprising:
one or more processors; and
memory storing instructions that, when executed by the one or more processors, cause the computing device to perform the method of any one of claims 1-12.

14. A system comprising:
an access point (AP) configured to perform the method of any one of claims 1-12; and
a non-AP station (STA) configured to receive the second frame of from the AP.

15. A computer-readable medium storing instructions that, when executed, cause performance of the method of any one of claims 1-12.
